# EUROPEAN PATENT APPLICATION

(11) **EP 4 106 430 A1**
(43) Date of publication of application: **21.12.2022**
(21) Application number: 21753501.2
(22) Date of filing: 08.02.2021
(51) Int. Cl.: H04W 72/02, H04W 92/18, H04W 76/14, H04W 76/30

(54) **COMMUNICATION SYSTEM AND COMMUNICATION TERMINAL**

(30) Priority: 12.02.2020 JP 2020021872
(71) Applicant: MITSUBISHI ELECTRIC CORPORATION, Chiyoda-ku Tokyo 100-8310 (JP)
(72) Inventor: MOCHIZUKI, Mitsuru, Tokyo 100-8310 (JP); SHIMODA, Tadahiro, Tokyo 100-8310 (JP); HASEGAWA, Fumihiro, Tokyo 100-8310 (JP)
(74) Representative: Sajda, Wolf E.
(86) International application number: PCT/JP2021/004567
(87) International publication number: WO 2021/161951

(57) **Abstract**

Satisfactory SL communication is provided. A communication system includes: a first communication terminal; a second communication terminal configured to perform inter-terminal communication with the first communication terminal; and a third communication terminal configured to perform inter-terminal communication with the first communication terminal. The third communication terminal reports resource information for the inter-terminal communication between the first communication terminal and the second communication terminal to the first communication terminal via an interface for the inter-terminal communication between the first communication terminal and the third communication terminal.

## Description

### Technical Field

The present invention relates to a radio communication technology.

### Background Art

The 3rd generation partnership project (3GPP), the standard organization regarding the mobile communication system, is studying communication systems referred to as long term evolution (LTE) regarding radio sections and system architecture evolution (SAE) regarding the overall system configuration including a core network and a radio access network which is hereinafter collectively referred to as a network as well (for example, see Non-Patent Documents 1 to 5). This communication system is also referred to as 3.9 generation (3.9 G) system.

As the access scheme of the LTE, orthogonal frequency division multiplexing (OFDM) is used in a downlink direction and single carrier frequency division multiple access (SC-FDMA) is used in an uplink direction. Further, differently from the wideband code division multiple access (W-CDMA), circuit switching is not provided but a packet communication system is only provided in the LTE.

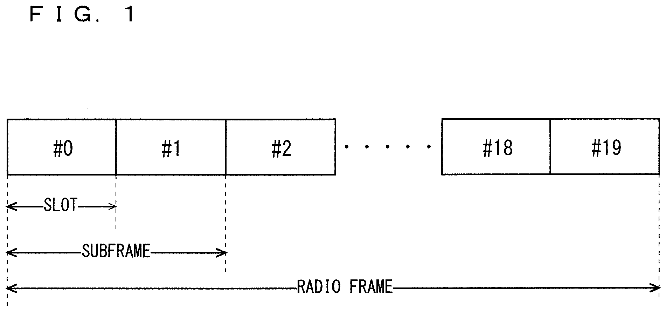

The decisions taken in 3GPP regarding the frame configuration in the LTE system described in Non-Patent Document 1 (Chapter 5) are described with reference to FIG. 1. FIG. 1 is a diagram illustrating the configuration of a radio frame used in the LTE communication system. With reference to FIG. 1, one radio frame is 10 ms. The radio frame is divided into ten equally sized subframes. The subframe is divided into two equally sized slots. The first and sixth subframes contain a downlink synchronization signal per radio frame. The synchronization signals are classified into a primary synchronization signal (P-SS) and a secondary synchronization signal (S-SS).

Non-Patent Document 1 (Chapter 5) describes the decisions by 3GPP regarding the channel configuration in the LTE system. It is assumed that the same channel configuration is used in a closed subscriber group (CSG) cell as that of a non-CSG cell.

A physical broadcast channel (PBCH) is a channel for downlink transmission from a base station device (hereinafter may be simply referred to as a "base station") to a communication terminal device (hereinafter may be simply referred to as a "communication terminal") such as a user equipment device (hereinafter may be simply referred to as a "user equipment"). A BCH transport block is mapped to four subframes within a 40 ms interval. There is no explicit signaling indicating 40 ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted per subframe.

A physical downlink control channel (PDCCH) is a channel for downlink transmission from a base station to a communication terminal. The PDCCH notifies of the resource allocation information for downlink shared channel (DL-SCH) being one of the transport channels described below, resource allocation information for a paging channel (PCH) being one of the transport channels described below, and hybrid automatic repeat request (HARQ) information related to DL-SCH. The PDCCH carries an uplink scheduling grant. The PDCCH carries acknowledgement (Ack) / negative acknowledgement (Nack) that is a response signal to uplink transmission. The PDCCH is referred to as an L1/L2 control signal as well.

A physical downlink shared channel (PDSCH) is a channel for downlink transmission from a base station to a communication terminal. A downlink shared channel (DL-SCH) that is a transport channel and a PCH that is a transport channel are mapped to the PDSCH.

A physical multicast channel (PMCH) is a channel for downlink transmission from a base station to a communication terminal. A multicast channel (MCH) that is a transport channel is mapped to the PMCH.

A physical uplink control channel (PUCCH) is a channel for uplink transmission from a communication terminal to a base station. The PUCCH carries Ack/Nack that is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in the MIMO. The PMI is information of a precoding weight matrix to be used in the MIMO. The CQI is quality information indicating the quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) that is one of the transport channels is mapped to the PUSCH.

A physical hybrid ARQ indicator channel (PHICH) is a channel for downlink transmission from a base station to a communication terminal. The PHICH carries Ack/Nack that is a response signal to uplink transmission. A physical random access channel (PRACH) is a channel for uplink transmission from the communication terminal to the base station. The PRACH carries a random access preamble.

A downlink reference signal (RS) is a known symbol in the LTE communication system. The following five types of downlink reference signals are defined as: a cell-specific reference signal (CRS), an MBSFN reference signal, a data demodulation reference signal (DM-RS) being a UE-specific reference signal, a positioning reference signal (PRS), and a channel state information reference signal (CSI-RS). The physical layer measurement objects of a communication terminal include reference signal received powers (RSRPs).

An uplink reference signal is also a known symbol in the LTE communication system. The following two types of uplink reference signals are defined, that is, a data demodulation reference signal (DM-RS) and a sounding reference signal (SRS).

The transport channels described in Non-Patent Document 1 (Chapter 5) are described. A broadcast channel (BCH) among the downlink transport channels is broadcast to the entire coverage of a base station (cell). The BCH is mapped to the physical broadcast channel (PBCH).

Retransmission control according to a hybrid ARQ (HARQ) is applied to a downlink shared channel (DL-SCH). The DL-SCH can be broadcast to the entire coverage of the base station (cell). The DL-SCH supports dynamic or semi-static resource allocation. The semi-static resource allocation is also referred to as persistent scheduling. The DL-SCH supports discontinuous reception (DRX) of a communication terminal for enabling the communication terminal to save power. The DL-SCH is mapped to the physical downlink shared channel (PDSCH).

The paging channel (PCH) supports DRX of the communication terminal for enabling the communication terminal to save power. The PCH is required to be broadcast to the entire coverage of the base station (cell). The PCH is mapped to physical resources such as the physical downlink shared channel (PDSCH) that can be used dynamically for traffic.

The multicast channel (MCH) is used for broadcasting the entire coverage of the base station (cell). The MCH supports SFN combining of multimedia broadcast multicast service (MBMS) services (MTCH and MCCH) in multi-cell transmission. The MCH supports semi-static resource allocation. The MCH is mapped to the PMCH.

Retransmission control according to a hybrid ARQ (HARQ) is applied to an uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH involves a collision risk. The RACH is mapped to the physical random access channel (PRACH).

The HARQ is described. The HARQ is the technique for improving the communication quality of a channel by combination of automatic repeat request (ARQ) and error correction (forward error correction). The HARQ is advantageous in that error correction functions effectively by retransmission even for a channel whose communication quality changes. In particular, it is also possible to achieve further quality improvement in retransmission through combination of the reception results of the first transmission and the reception results of the retransmission.

An example of the retransmission method is described. If the receiver fails to successfully decode the received data, in other words, if a cyclic redundancy check (CRC) error occurs (CRC = NG), the receiver transmits "Nack" to the transmitter. The transmitter that has received "Nack" retransmits the data. If the receiver successfully decodes the received data, in other words, if a CRC error does not occur (CRC = OK), the receiver transmits "Ack" to the transmitter. The transmitter that has received "Ack" transmits the next data.

The logical channels described in Non-Patent Document 1 (Chapter 6) are described. A broadcast control channel (BCCH) is a downlink channel for broadcast system control information. The BCCH that is a logical channel is mapped to the broadcast channel (BCH) or downlink shared channel (DL-SCH) that is a transport channel.

A paging control channel (PCCH) is a downlink channel for transmitting paging information and system information change notifications. The PCCH is used when the network does not know the cell location of a communication terminal. The PCCH that is a logical channel is mapped to the paging channel (PCH) that is a transport channel.

A common control channel (CCCH) is a channel for transmission control information between communication terminals and a base station. The CCCH is used in a case where the communication terminals have no RRC connection with the network. In the downlink direction, the CCCH is mapped to the downlink shared channel (DL-SCH) that is a transport channel. In the uplink direction, the CCCH is mapped to the uplink shared channel (UL-SCH) that is a transport channel.

A multicast control channel (MCCH) is a downlink channel for point-to-multipoint transmission. The MCCH is used for transmission of MBMS control information for one or several MTCHs from a network to a communication terminal. The MCCH is used only by a communication terminal during reception of the MBMS. The MCCH is mapped to the multicast channel (MCH) that is a transport channel.

A dedicated control channel (DCCH) is a channel that transmits dedicated control information between a communication terminal and a network on a point-to-point basis. The DCCH is used when the communication terminal has an RRC connection. The DCCH is mapped to the uplink shared channel (UL-SCH) in uplink and mapped to the downlink shared channel (DL-SCH) in downlink.

A dedicated traffic channel (DTCH) is a point-to-point communication channel for transmission of user information to a dedicated communication terminal. The DTCH exists in uplink as well as downlink. The DTCH is mapped to the uplink shared channel (UL-SCH) in uplink and mapped to the downlink shared channel (DL-SCH) in downlink.

A multicast traffic channel (MTCH) is a downlink channel for traffic data transmission from a network to a communication terminal. The MTCH is a channel used only by a communication terminal during reception of the MBMS. The MTCH is mapped to the multicast channel (MCH).

CGI represents a cell global identifier. ECGI represents an E-UTRAN cell global identifier. A closed subscriber group (CSG) cell is introduced into the LTE, and the long term evolution advanced (LTE-A) and universal mobile telecommunication system (UMTS) described below.

The locations of communication terminals are tracked based on an area composed of one or more cells. The locations are tracked for enabling tracking the locations of communication terminals and calling communication terminals, in other words, incoming calling to communication terminals even in an idle state. An area for tracking locations of communication terminals is referred to as a tracking area.

Further, specifications of long term evolution advanced (LTE-A) are pursued as Release 10 in 3GPP (see Non-Patent Documents 3 and 4). The LTE-A is based on the LTE radio communication system and is configured by adding several new techniques to the system.

Carrier aggregation (CA) is studied for the LTE-A system in which two or more component carriers (CCs) are aggregated to support wider transmission bandwidths up to 100 MHz. Non-Patent Document 1 describes the CA.

In a case where CA is configured, a UE has a single RRC connection with a network (NW). In RRC connection, one serving cell provides NAS mobility information and security input. This cell is referred to as a primary cell (PCell). In downlink, a carrier corresponding to PCell is a downlink primary component carrier (DL PCC). In uplink, a carrier corresponding to PCell is an uplink primary component carrier (UL PCC).

A secondary cell (SCell) is configured to form a serving cell group with a PCell, in accordance with the UE capability. In downlink, a carrier corresponding to SCell is a downlink secondary component carrier (DL SCC). In uplink, a carrier corresponding to SCell is an uplink secondary component carrier (UL SCC).

A serving cell group of one PCell and one or more SCells is configured for one UE.

The new techniques in the LTE-A include the technique of supporting wider bands (wider bandwidth extension) and the coordinated multiple point transmission and reception (CoMP) technique. The CoMP studied for LTE-A in 3GPP is described in Non-Patent Document 1.

Furthermore, the use of small eNBs (hereinafter also referred to as "small-scale base station devices") configuring small cells is studied in 3GPP to satisfy tremendous traffic in the future. In an example technique under study, a large number of small eNBs is installed to configure a large number of small cells, which increases spectral efficiency and communication capacity. The specific techniques include dual connectivity (abbreviated as DC) with which a UE communicates with two eNBs through connection thereto. Non-Patent Document 1 describes the DC.

For eNBs that perform dual connectivity (DC), one may be referred to as a master eNB (abbreviated as MeNB), and the other may be referred to as a secondary eNB (abbreviated as SeNB).

The traffic flow of a mobile network is on the rise, and the communication rate is also increasing. It is expected that the communication rate is further increased when the operations of the LTE and the LTE-A are fully initiated.

For increasingly enhanced mobile communications, the fifth generation (hereinafter also referred to as "5G") radio access system is studied whose service is aimed to be launched in 2020 and afterward. For example, in the Europe, an organization named METIS summarizes the requirements for 5G (see Non-Patent Document 5).

The requirements in the 5G radio access system show that a system capacity shall be 1000 times as high as, a data transmission rate shall be 100 times as high as, a data latency shall be one tenth (1/10) as low as, and simultaneously connected communication terminals 100 times as many as those of the LTE system, to further reduce the power consumption and device cost.

To satisfy such requirements, the study of 5G standards is pursued as Release 15 in 3GPP (see Non-Patent Documents 6 to 18). The techniques on 5G radio sections are referred to as "New Radio Access Technology" ("New Radio" is abbreviated as NR).

The NR system has been studied based on the LTE system and the LTE-A system. The NR system includes additions and changes from the LTE system and the LTE-A system in the following points.

As the access schemes of the NR, the orthogonal frequency division multiplexing (OFDM) is used in the downlink direction, and the OFDM and the DFT-spread-OFDM (DFT-s-OFDM) are used in the uplink direction.

In NR, frequencies higher than those in the LTE are available for increasing the transmission rate and reducing the latency.

In NR, a cell coverage is maintained by forming a transmission/reception range shaped like a narrow beam (beamforming) and also changing the orientation of the beam (beam sweeping).

In NR, various subcarrier spacings, that is, various numerologies are supported. Regardless of the numerologies, 1 subframe is 1 millisecond long, and 1 slot consists of 14 symbols in NR. Furthermore, the number of slots in 1 subframe is one in a numerology at a subcarrier spacing of 15 kHz. The number of slots increases in proportion to the subcarrier spacing in the other numerologies (see Non-Patent Document 13 (TS 38.211 V16.0.0)).

The base station transmits a downlink synchronization signal in NR as synchronization signal burst (may be hereinafter referred to as SS burst) with a predetermined period for a predetermined duration. The SS burst includes synchronization signal blocks (may be hereinafter referred to as SS blocks) for each beam of the base station. The base station transmits the SS blocks for each beam during the duration of the SS burst with the beam changed. The SS blocks include the P-SS, the S-SS, and the PBCH.

In NR, addition of a phase tracking reference signal (PTRS) as a downlink reference signal has reduced the influence of phase noise. The PTRS has also been added as an uplink reference signal similarly to the downlink.

In NR, a slot format indication (SFI) has been added to information included in the PDCCH for flexibly switching between the DL and the UL in a slot.

Also in NR, the base station preconfigures, for the UE, a part of a carrier frequency band (may be hereinafter referred to as a Bandwidth Part (BWP)). Then, the UE performs transmission and reception with the base station in the BWP. Consequently, the power consumption in the UE is reduced.

The DC patterns studied in 3GPP include the DC to be performed between an LTE base station and an NR base station that are connected to the EPC, the DC to be performed by the NR base stations that are connected to the 5G core system, and the DC to be performed between the LTE base station and the NR base station that are connected to the 5G core system (see Non-Patent Documents 12, 16, and 19).

Further, in 3GPP, some new technologies are studied. For example, support of services using sidelink (side link (SL)) communication also in EPS and a 5G core system is studied (Non-Patent Documents 1, 20, 21, and 22). Examples of the services using SL communication include a V2X service, a proximity service, and the like.

### Prior Art Documents

### Non-Patent Documents

Non-Patent Document 1: 3GPP TS 36.300 V16.0.0
Non-Patent Document 2: 3GPP S1-083461
Non-Patent Document 3: 3GPP TR 36.814 V9.2.0
Non-Patent Document 4: 3GPP TR 36.912 V15.0.0
Non-Patent Document 5: "Scenarios, requirements and KPIs for 5G mobile and wireless system", ICT-317669-METIS/D1.1
Non-Patent Document 6: 3GPP TR 23.799 V14.0.0
Non-Patent Document 7: 3GPP TR 38.801 V14.0.0
Non-Patent Document 8: 3GPP TR 38.802 V14.2.0
Non-Patent Document 9: 3GPP TR 38.804 V14.0.0
Non-Patent Document 10: 3GPP TR 38.912 V15.0.0
Non-Patent Document 11: 3GPP RP-172115
Non-Patent Document 12: 3GPP TS 37.340 V16.0.0
Non-Patent Document 13: 3GPP TS 38.211 V16.0.0
Non-Patent Document 14: 3GPP TS 38.213 V16.0.0
Non-Patent Document 15: 3GPP TS 38.214 V16.0.0
Non-Patent Document 16: 3GPP TS 38.300 V16.0.0
Non-Patent Document 17: 3GPP TS 38.321 V15.8.0
Non-Patent Document 18: 3GPP TS 38.212 V16.0.0
Non-Patent Document 19: 3GPP RP-161266
Non-Patent Document 20: 3GPP TS 23.285 V16.2.0
Non-Patent Document 21: 3GPP TS 23.287 V16.1.0
Non-Patent Document 22: 3GPP TS 23.501 V16.3.0
Non-Patent Document 23: 3GPP TR 38.885 V16.0.0
Non-Patent Document 24: 3GPP TR 23.703 V12.0.0
Non-Patent Document 25: 3GPP R2-1910199
Non-Patent Document 26: 3GPP R2-167764

### Summary

### Problem to be Solved by the Invention

Support of various services using the SL communication (also referred to as PC5 communication) also in EPS and the 5G core system is studied (Non-Patent Documents 1, 20, 21, and 22). In the SL communication, communication is performed between terminals. In the SL communication, a scheme in which a terminal different from a terminal that performs inter-terminal communication performs scheduling for the SL communication is proposed (Non-Patent Document 23). Further, in the SL communication, not only direct communication between terminals but also indirect communication via a relay is proposed (Non-Patent Document 24). In such SL communication using not only a terminal that performs the SL communication but also another terminal, how to enhance use efficiency of resources used for the SL communication, how to reduce power consumption of a terminal, how to satisfy QoS required for a service, and how to enhance reliability of a service pose problems.

In view of the problems described above, the present invention has an object to provide satisfactory SL communication by implementing at least one of enhancement of resource use efficiency, reduction of power consumption of a terminal, securing of QoS required for a service, and enhancement of reliability of a service in SL communication, for example.

### Means to Solve the Problem

A communication system according to the present invention includes: a first communication terminal; a second communication terminal configured to perform inter-terminal communication with the first communication terminal; and a third communication terminal configured to perform inter-terminal communication with the first communication terminal. The third communication terminal reports resource information for the inter-terminal communication between the first communication terminal and the second communication terminal to the first communication terminal via an interface for the inter-terminal communication between the first communication terminal and the third communication terminal.

A communication terminal according to the present invention is a communication terminal configured to perform inter-terminal communication. The communication terminal reports resource information for inter-terminal communication by another communication terminal to the another communication terminal via an interface for the inter-terminal communication between the communication terminal and the another communication terminal.

A communication terminal according to the present invention is a communication terminal configured to perform inter-terminal communication. The communication terminal receives resource information for inter-terminal communication by the communication terminal from the another communication terminal via an interface for the inter-terminal communication between the communication terminal and the another communication terminal.

### Effects of the Invention

According to the present invention, satisfactory SL communication can be provided.

These and other objects, features, aspects and advantages of the present invention will become more apparent from the following detailed description when taken in conjunction with the accompanying drawings.

### Brief Description of Drawings

FIG. 1 is a diagram illustrating the configuration of a radio frame for use in an LTE communication system.
FIG. 2 is a block diagram showing the overall configuration of an LTE communication system 200 under discussion of 3GPP.
FIG. 3 is a block diagram illustrating an overall configuration of a NR communication system 210 that has been discussed in 3GPP.
FIG. 4 illustrates a structure of the DC to be performed by an eNB and a gNB that are connected to the EPC.
FIG. 5 illustrates a structure of the DC to be performed by gNBs that are connected to the NG core.
FIG. 6 illustrates a structure of the DC to be performed by the eNB and the gNB that are connected to the NG core.
FIG. 7 illustrates a structure of the DC to be performed by the eNB and the gNB that are connected to the NG core.
FIG. 8 is a block diagram showing the configuration of a user equipment 202 shown in FIG. 2.
FIG. 9 is a block diagram showing the configuration of a base station 203 shown in FIG. 2.
FIG. 10 is a block diagram showing the configuration of an MME.
FIG. 11 is a block diagram illustrating a configuration of the 5GC.
FIG. 12 is a flowchart illustrating an outline from cell search to idle state operation performed by a communication terminal (UE) in an LTE communication system.
FIG. 13 illustrates an example structure of a cell in an NR system.
FIG. 14 is a sequence diagram illustrating an example of a method of maintaining connection between an S-UE and a UE-TX even after the S-UE reports resource information for SL communication to the UE-TX according to the first embodiment.
FIG. 15 is a sequence diagram illustrating the example of the method of maintaining the connection between the S-UE and the UE-TX even after the S-UE reports the resource information for the SL communication to the UE-TX according to the first embodiment.
FIG. 16 is a sequence diagram illustrating an example of a method of releasing the connection between the S-UE and the UE-TX after the S-UE reports the resource information for the SL communication to the UE-TX according to the first embodiment.
FIG. 17 is a sequence diagram illustrating the example of the method of releasing the connection between the S-UE and the UE-TX after the S-UE reports the resource information for the SL communication to the UE-TX according to the first embodiment.
FIG. 18 is a sequence diagram illustrating an example of a method of releasing PC5 connection between the UE-TX and a UE-RX when PC5 connection between the S-UE and the UE-TX is released according to the first modification of the first embodiment.
FIG. 19 is a sequence diagram illustrating an example of a method of releasing the PC5 connection between the UE-TX and the UE-RX when an RLF is detected in the PC5 connection between the S-UE and the UE-TX according to the first modification of the first embodiment.
FIG. 20 is a sequence diagram illustrating an example of a method of releasing the PC5 connection between the S-UE and the UE-TX when the PC5 connection between the UE-TX and the UE-RX is released according to the first modification of the first embodiment.
FIG. 21 is a sequence diagram illustrating an example of a method of releasing the PC5 connection between the S-UE and the UE-TX when an RLF is detected in the PC5 connection between the UE-TX and the UE-RX according to the first modification of the first embodiment.
FIG. 22 is a sequence diagram illustrating an example of a method of performing DRX configuration between the UE-TX and the UE-RX according to the second embodiment.
FIG. 23 is a conceptual diagram of a first example of aligning DRX timings in each direction in the SL communication in bidirectional according to the second embodiment.
FIG. 24 is a sequence diagram illustrating an example of a method of aligning the DRX timings in each direction when transmission-side UEs in the SL communication in each direction configure DRX according to the second embodiment.
FIG. 25 is a conceptual diagram of a second example of aligning the DRX timings in each direction in the SL communication in bidirectional according to the second embodiment.
FIG. 26 is a sequence diagram illustrating an example of a method of aligning the DRX timings in each direction when one transmission UE configures DRX according to the second embodiment.
FIG. 27 is a sequence diagram illustrating an example of a method of performing DTX configuration so that the UE that performs the SL communication with a plurality of UEs aligns the DRX timings according to the second embodiment.
FIG. 28 is a sequence diagram illustrating the example of the method of performing the DTX configuration so that the UE that performs the SL communication with the plurality of UEs aligns the DRX timings according to the second embodiment.
FIG. 29 is a sequence diagram illustrating the example of the method of performing the DTX configuration so that the UE that performs the SL communication with the plurality of UEs aligns the DRX timings according to the second embodiment.
FIG. 30 is a sequence diagram illustrating an example of a method of releasing PC5 connection between a relay UE and the UE-RX when PC5 connection between the UE-TX and the relay UE is released according to the fourth embodiment.
FIG. 31 is a sequence diagram illustrating an example of a method of releasing the PC5 connection between the relay UE and the UE-RX when an RLF is detected in the PC5 connection between the UE-TX and the relay UE according to the fourth embodiment.
FIG. 32 is a sequence diagram illustrating an example of a method of releasing the PC5 connection between the UE-TX and the relay UE when the PC5 connection between the relay UE and the UE-RX is released according to the fourth embodiment.
FIG. 33 is a sequence diagram illustrating an example of a method of releasing the PC5 connection between the UE-TX and the relay UE when an RLF is detected in the PC5 connection between the relay UE and the UE-RX according to the fourth embodiment.
FIG. 34 is a sequence diagram illustrating an example of a method of releasing the PC5 connection between the UE-TX and the relay UE when an RLF is detected in the PC5 connection between the relay UE and the UE-RX according to the fourth embodiment.
FIG. 35 is a sequence diagram illustrating an example of a method of establishing the PC5 connection between the UE-TX and the UE-RX after the PC5 connection between the UE-TX and the relay UE and the PC5 connection between the relay UE and the UE-RX are established according to the first modification of the fourth embodiment.
FIG. 36 is a sequence diagram illustrating the example of the method of establishing the PC5 connection between the UE-TX and the UE-RX after the PC5 connection between the UE-TX and the relay UE and the PC5 connection between the relay UE and the UE-RX are established according to the first modification of the fourth embodiment.
FIG. 37 is a sequence diagram illustrating an example of a method of releasing the PC5 connection between the relay UE and the UE-RX while maintaining the PC5 connection between the UE-TX and the UE-RX when an RLF is detected in the PC5 connection between the UE-TX and the relay UE according to the first modification of the fourth embodiment.
FIG. 38 is a sequence diagram illustrating an example of a method of releasing the PC5 connection between the UE-TX and the relay UE while maintaining the PC5 connection between the UE-TX and the UE-RX when an RLF is detected in the PC5 connection between the relay UE and the UE-RX according to the first modification of the fourth embodiment.
FIG. 39 is a sequence diagram illustrating an example of a method of releasing the PC5 connection between the UE-TX and the UE-RX when the PC5 connection between the relay UE and the UE-RX is released according to the first modification of the fourth embodiment.
FIG. 40 is a sequence diagram illustrating an example of a method of releasing the PC5 connection between the UE-TX and the UE-RX when an RLF is detected in the PC5 connection between the relay UE and the UE-RX according to the first modification of the fourth embodiment.

### Description of Embodiments

### The First Embodiment

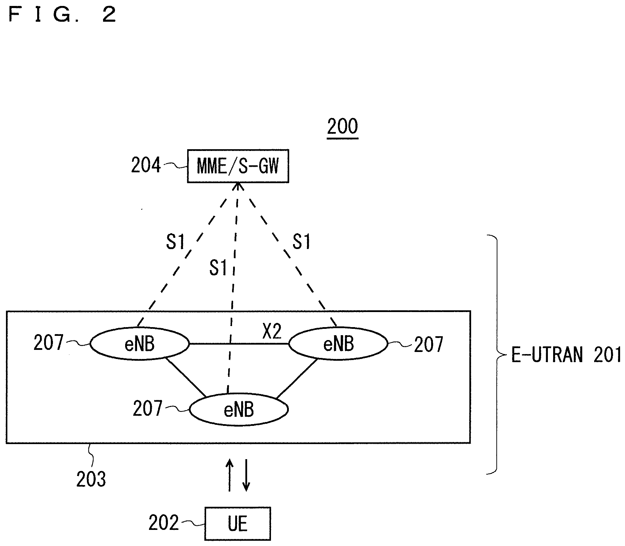

FIG. 2 is a block diagram showing an overall configuration of an LTE communication system 200 which is under discussion of 3GPP. FIG. 2 is described here. A radio access network is referred to as an evolved universal terrestrial radio access network (E-UTRAN) 201. A user equipment device (hereinafter, referred to as a "user equipment (UE)") 202 that is a communication terminal device is capable of radio communication with a base station device (hereinafter, referred to as a "base station (E-UTRAN Node B: eNB)") 203 and transmits and receives signals through radio communication.

Here, the "communication terminal device" covers not only a user equipment device such as a mobile phone terminal device, but also an unmovable device such as a sensor. In the following description, the "communication terminal device" may be simply referred to as a "communication terminal".

The E-UTRAN is composed of one or a plurality of base stations 203, provided that a control protocol for the user equipment 202 such as a radio resource control (RRC), and user planes (hereinafter also referred to as "U-planes") such as a packet data convergence protocol (PDCP), radio link control (RLC), medium access control (MAC), or physical layer (PHY) are terminated in the base station 203.

The control protocol radio resource control (RRC) between the user equipment 202 and the base station 203 performs, for example, broadcast, paging, and RRC connection management. The states of the base station 203 and the user equipment 202 in RRC are classified into RRC_IDLE and RRC_CONNECTED.

In RRC_IDLE, public land mobile network (PLMN) selection, system information (SI) broadcast, paging, cell reselection, mobility, and the like are performed. In RRC_CONNECTED, the user equipment has RRC connection and is capable of transmitting and receiving data to and from a network. In RRC _CONNECTED, for example, handover (HO) and measurement of a neighbor cell are performed.

The base stations 203 includes one or more eNBs 207. A system, composed of an evolved packet core (EPC) being a core network and an E-UTRAN 201 being a radio access network, is referred to as an evolved packet system (EPS). The EPC being a core network and the E-UTRAN 201 being a radio access network may be collectively referred to as a "network".

The eNB 207 is connected to an MME/S-GW unit (hereinafter, also referred to as an "MME unit") 204 including a mobility management entity (MME), a serving gateway (S-GW) or an MME and an S-GW by means of an S1 interface, and control information is communicated between the eNB 207 and the MME unit 204. A plurality of MME units 204 may be connected to one eNB 207. The eNBs 207 are connected to each other by means of an X2 interface, and control information is communicated between the eNBs 207.

The MME unit 204 is a high-level device, specifically, a high-level node, and controls connection between the user equipment (UE) 202 and the eNBs 207 comprising a base station. The MME unit 204 configures the EPC that is a core network. The base station 203 configures the E-UTRAN 201.

The base station 203 may configure one or more cells. Each of the cells has a predefined range as a coverage that is a range in which communication with the user equipment 202 is possible, and performs radio communication with the user equipment 202 within the coverage. When the one base station 203 configures a plurality of cells, each of the cells is configured to communicate with the user equipment 202.

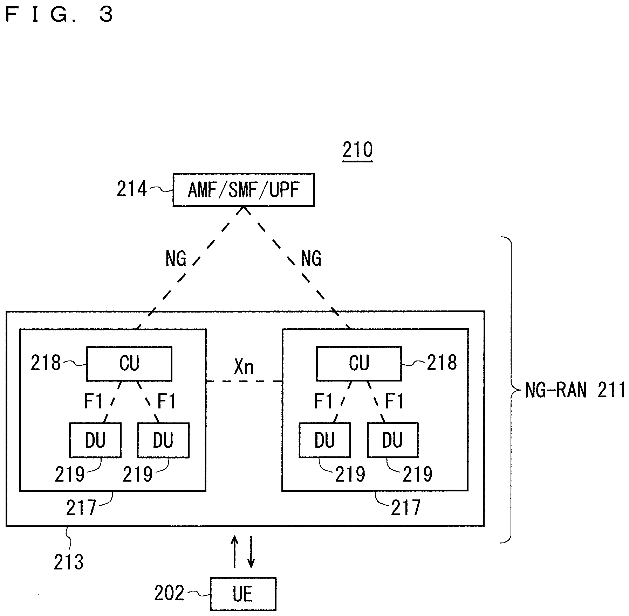

FIG. 3 is a block diagram illustrating an overall configuration of a 5G communication system 210 that has been discussed in 3GPP. FIG. 3 is described. A radio access network is referred to as a next generation radio access network (NG-RAN) 211. The UE 202 can perform radio communication with an NR base station device (hereinafter referred to as a "NG-RAN NodeB (gNB)") 213, and transmits and receives signals to and from the NR base station device 213 via radio communication. Furthermore, the core network is referred to as a 5G Core (5GC).

When control protocols for the UE 212, for example, Radio Resource Control (RRC) and user planes (may be hereinafter referred to as U-Planes), e.g., Service Data Adaptation Protocol (SDAP), Packet Data Convergence Protocol (PDCP), Radio Link Control (RLC), Medium Access Control (MAC), and Physical Layer (PHY) are terminated in the NR base station 213, one or more NR base stations 213 configure the NG-RAN.

The functions of the control protocol of the Radio Resource Control (RRC) between the UE 202 and the NR base station 213 are identical to those in LTE. The states of the NR base station 213 and the UE 202 in RRC include RRC_IDLE, RRC _CONNECTED, and RRC_INACTIVE.

RRC_IDLE and RRC_CONNECTED are identical to those in LTE. In RRC_INACTIVE, for example, broadcast of system information (SI), paging, cell reselection, and mobility are performed while the connection between the 5G Core and the NR base station 213 is maintained.

Through an NG interface, gNBs 217 are connected to the Access and Mobility Management Function (AMF), the Session Management Function (SMF), the User Plane Function (UPF), or an AMF/SMF/UPF unit (may be hereinafter referred to as a 5GC unit) 214 including the AMF, the SMF, and the UPF. The control information and/or user data are communicated between each of the gNBs 217 and the 5GC unit 214. The NG interface is a generic name for an N2 interface between the gNBs 217 and the AMF, an N3 interface between the gNBs 217 and the UPF, an N11 interface between the AMF and the SMF, and an N4 interface between the UPF and the SMF. A plurality of the 5GC units 214 may be connected to one of the gNBs 217. The gNBs 217 are connected through an Xn interface, and the control information and/or user data are communicated between the gNBs 217.

The NR base station 213 may configure one or more cells in the same manner as the base station 203. When the one NR base station 213 configures a plurality of cells, each of the cells is configured to communicate with the UE 202.

Each of the gNBs 217 may be divided into a Central Unit (may be hereinafter referred to as a CU) 218 and Distributed Units (may be hereinafter referred to as DUs) 219. The one CU 218 is configured in the gNB 217. The number of the DUs 219 configured in the gNB 217 is one or more. The CU 218 is connected to the DUs 219 via an F1 interface, and the control information and/or user data are communicated between the CU 218 and each of the DUs 219.

In the 5G communication system, a unified data management (UDM) function and a policy control function (PCF) described in Non-Patent Document 22 (3GPP TS 23.501 V16.3.0) may be included. The UDM and/or the PCF may be included in the 5GC unit of FIG. 3.

In the 5G communication system, a non-3GPP interworking function (N3IWF) described in Non-Patent Document 22 (3GPP TS 23.501 V16.3.0) may be included. The N3IWF may terminate an access network (AN) between the N3IWF and the UE in non-3GPP access between the N3IWF and the UE.

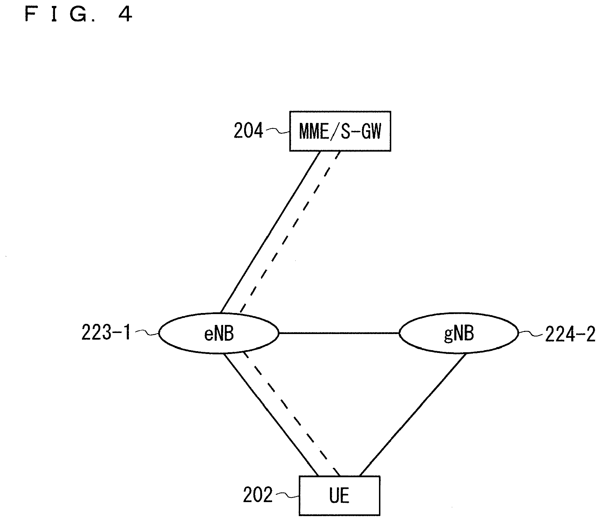

FIG. 4 illustrates a structure of the DC to be performed by an eNB and a gNB that are connected to the EPC. In FIG. 4, solid lines represent connection to the U-planes, and dashed lines represent connection to the C-planes. In FIG. 4, an eNB 223-1 becomes a master base station, and a gNB 224-2 becomes a secondary base station (this DC structure may be referred to as EN-DC). Although FIG. 4 illustrates an example U-Plane connection between the MME unit 204 and the gNB 224-2 through the eNB 223-1, the U-Plane connection may be established directly between the MME unit 204 and the gNB 224-2.

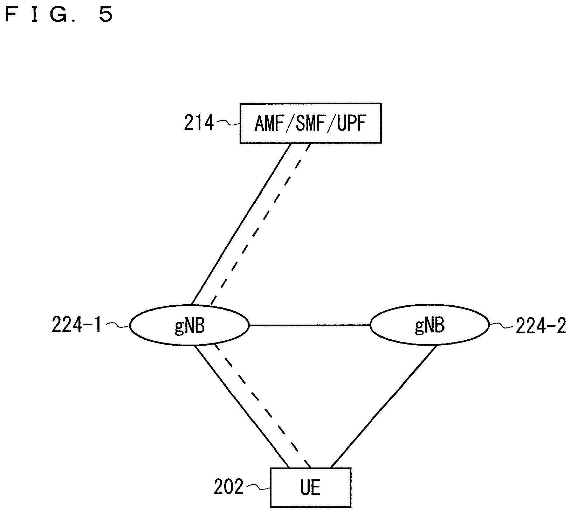

FIG. 5 illustrates a structure of the DC to be performed by gNBs that are connected to the NG core. In FIG. 5, solid lines represent connection to the U-planes, and dashed lines represent connection to the C-planes. In FIG. 5, a gNB 224-1 becomes a master base station, and the gNB 224-2 becomes a secondary base station (this DC structure may be referred to as NR-DC). Although FIG. 5 illustrates an example U-Plane connection between the 5GC unit 214 and the gNB 224-2 through the gNB 224-1, the U-Plane connection may be established directly between the 5GC unit 214 and the gNB 224-2.

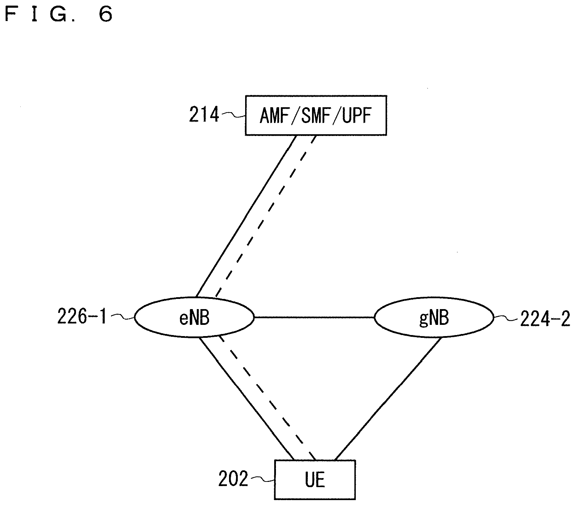

FIG. 6 illustrates a structure of the DC to be performed by an eNB and a gNB that are connected to the NG core. In FIG. 6, solid lines represent connection to the U-planes, and dashed lines represent connection to the C-planes. In FIG. 6, an eNB 226-1 becomes a master base station, and the gNB 224-2 becomes a secondary base station (this DC structure may be referred to as NG-EN-DC). Although FIG. 6 illustrates an example U-Plane connection between the 5GC unit 214 and the gNB 224-2 through the eNB 226-1, the U-Plane connection may be established directly between the 5GC unit 214 and the gNB 224-2.

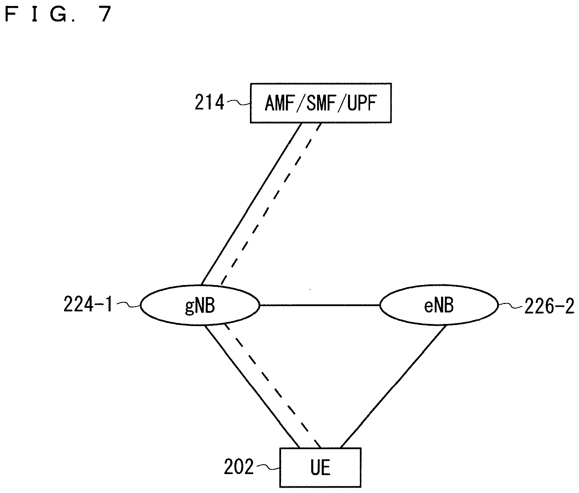

FIG. 7 illustrates another structure of the DC to be performed by an eNB and a gNB that are connected to the NG core. In FIG. 7, solid lines represent connection to the U-planes, and dashed lines represent connection to the C-planes. In FIG. 7, the gNB 224-1 becomes a master base station, and an eNB 226-2 becomes a secondary base station (this DC structure may be referred to as NE-DC). Although FIG. 7 illustrates an example U-Plane connection between the 5GC unit 214 and the eNB 226-2 through the gNB 224-1, the U-Plane connection may be established directly between the 5GC unit 214 and the eNB 226-2.

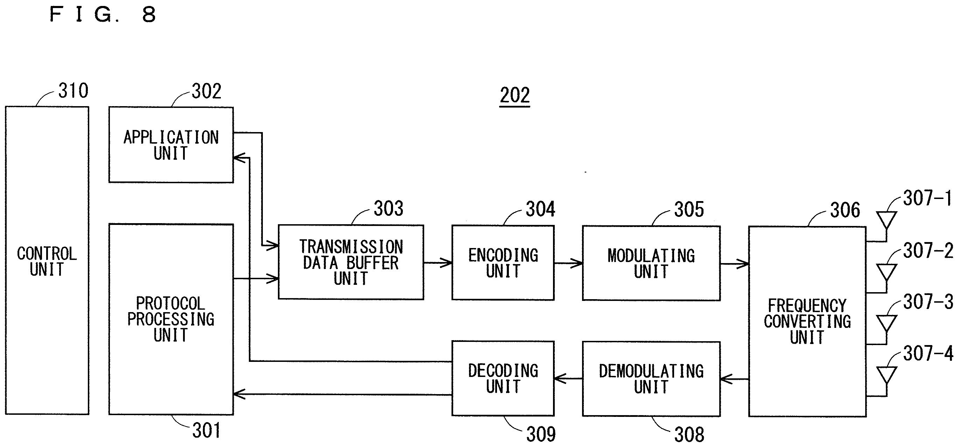

FIG. 8 is a block diagram showing the configuration of the user equipment 202 of FIG. 2. The transmission process of the user equipment 202 shown in FIG. 8 is described. First, a transmission data buffer unit 303 stores the control data from a protocol processing unit 301 and the user data from an application unit 302. The data stored in the transmission data buffer unit 303 is passed to an encoding unit 304, and is subjected to an encoding process such as error correction. There may exist the data output from the transmission data buffer unit 303 directly to a modulating unit 305 without the encoding process. The data encoded by the encoding unit 304 is modulated by the modulating unit 305. The modulating unit 305 may perform precoding in the MIMO. The modulated data is converted into a baseband signal, and the baseband signal is output to a frequency converting unit 306 and is then converted into a radio transmission frequency. After that, transmission signals are transmitted from antennas 307-1 to 307-4 to the base station 203. Although FIG. 8 exemplifies a case where the number of antennas is four, the number of antennas is not limited to four.

The user equipment 202 executes the reception process as follows. The radio signal from the base station 203 is received through each of the antennas 307-1 to 307-4. The received signal is converted from a radio reception frequency into a baseband signal by the frequency converting unit 306 and is then demodulated by a demodulating unit 308. The demodulating unit 308 may calculate a weight and perform a multiplication operation. The demodulated data is passed to a decoding unit 309, and is subjected to a decoding process such as error correction. Among the pieces of decoded data, the control data is passed to the protocol processing unit 301, and the user data is passed to the application unit 302. A series of processes by the user equipment 202 is controlled by a control unit 310. This means that, though not shown in FIG. 8, the control unit 310 is connected to the individual units 301 to 309. In FIG. 8, the number of antennas for transmission of the user equipment 202 may be identical to or different from that for its reception.

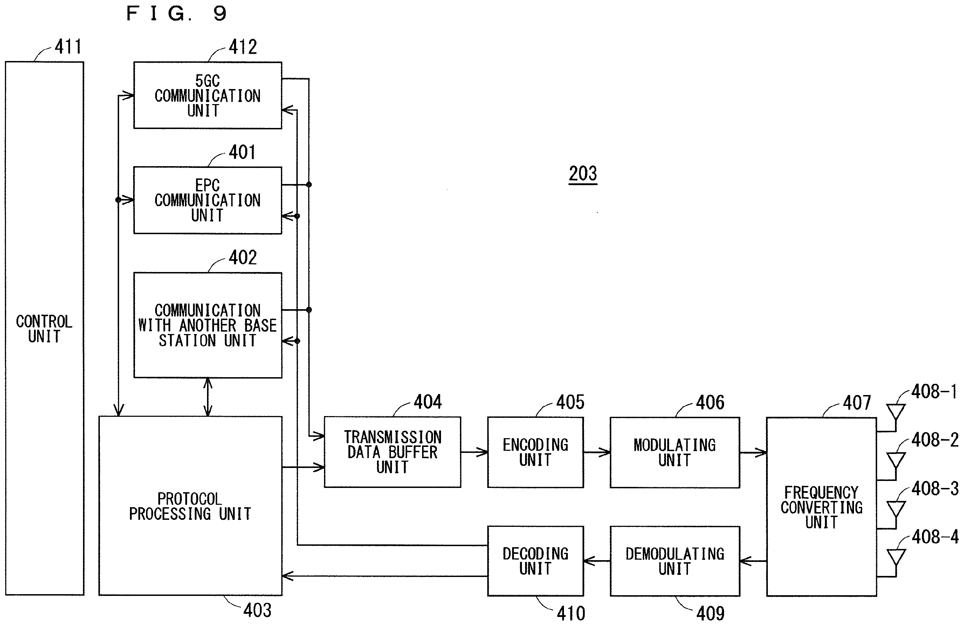

FIG. 9 is a block diagram showing the configuration of the base station 203 of FIG. 2. The transmission process of the base station 203 shown in FIG. 9 is described. An EPC communication unit 401 performs data transmission and reception between the base station 203 and the EPC (such as the MME unit 204). A 5GC communication unit 412 transmits and receives data between the base station 203 and the 5GC (e.g., the 5GC unit 214). A communication with another base station unit 402 performs data transmission and reception to and from another base station.

The EPC communication unit 401, the 5GC communication unit 412, and the communication with another base station unit 402 each transmit and receive information to and from a protocol processing unit 403. The control data from the protocol processing unit 403, and the user data and the control data from the EPC communication unit 401, the 5GC communication unit 412, and the communication with another base station unit 402 are stored in a transmission data buffer unit 404.

The data stored in the transmission data buffer unit 404 is passed to an encoding unit 405, and then an encoding process such as error correction is performed for the data. There may exist the data output from the transmission data buffer unit 404 directly to a modulating unit 406 without the encoding process. The encoded data is modulated by the modulating unit 406.

The modulating unit 406 may perform precoding in the MIMO. The modulated data is converted into a baseband signal, and the baseband signal is output to a frequency converting unit 407 and is then converted into a radio transmission frequency. After that, transmission signals are transmitted from antennas 408-1 to 408-4 to one or a plurality of user equipments 202. Although FIG. 9 exemplifies a case where the number of antennas is four, the number of antennas is not limited to four.

The reception process of the base station 203 is executed as follows. A radio signal from one or a plurality of user equipments 202 is received through the antenna 408. The received signal is converted from a radio reception frequency into a baseband signal by the frequency converting unit 407, and is then demodulated by a demodulating unit 409. The demodulated data is passed to a decoding unit 410 and then subject to a decoding process such as error correction. Among the pieces of decoded data, the control data is passed to the protocol processing unit 403, the 5GC communication unit 412, the EPC communication unit 401, or the communication with another base station unit 402, and the user data is passed to the 5GC communication unit 412, the EPC communication unit 401 and the communication with another base station unit 402. A series of processes by the base station 203 is controlled by a control unit 411. This means that, though not shown in FIG. 9, the control unit 411 is connected to the individual units 401 to 410. In FIG. 9, the number of antennas for transmission of the base station 203 may be identical to or different from that for its reception.

Although FIG. 9 is the block diagram illustrating the configuration of the base station 203, the base station 213 may have the same configuration. Furthermore, in FIGS. 8 and 9, the number of antennas of the user equipment 202 may be identical to or different from that of the base station 203.

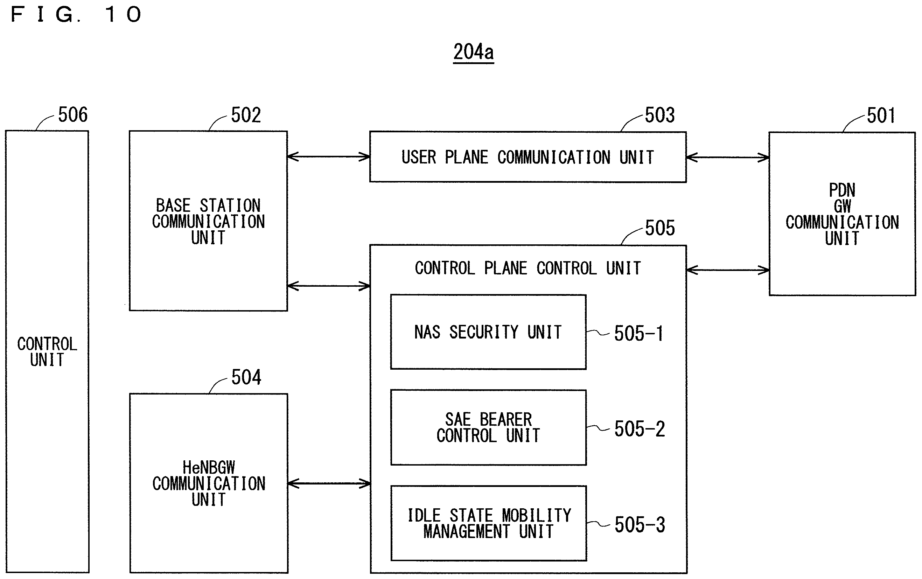

FIG. 10 is a block diagram showing the configuration of the MME. FIG. 10 shows the configuration of an MME 204a included in the MME unit 204 shown in FIG. 2 described above. A PDN GW communication unit 501 performs data transmission and reception between the MME 204a and the PDN GW. A base station communication unit 502 performs data transmission and reception between the MME 204a and the base station 203 by means of the S1 interface.

In a case where the data received from the PDN GW is user data, the user data is passed from the PDN GW communication unit 501 to the base station communication unit 502 via a user plane communication unit 503 and is then transmitted to one or a plurality of base stations 203. In a case where the data received from the base station 203 is user data, the user data is passed from the base station communication unit 502 to the PDN GW communication unit 501 via the user plane communication unit 503 and is then transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

The control plane control unit 505 includes a NAS security unit 505-1, an SAE bearer control unit 505-2, and an idle state mobility management unit 505-3, and performs an overall process for the control plane (hereinafter also referred to as a "C-plane"). The NAS security unit 505-1 provides, for example, security of a non-access stratum (NAS) message. The SAE bearer control unit 505-2 manages, for example, a system architecture evolution (SAE) bearer. The idle state mobility management unit 505-3 performs, for example, mobility management of an idle state (LTE-IDLE state which is merely referred to as idle as well), generation and control of a paging signal in the idle state, addition, deletion, update, and search of a tracking area of one or a plurality of user equipments 202 being served thereby, and tracking area list management.

The MME 204a distributes a paging signal to one or a plurality of base stations 203. In addition, the MME 204a performs mobility control of an idle state. When the user equipment is in the idle state and an active state, the MME 204a manages a list of tracking areas. The MME 204a begins a paging protocol by transmitting a paging message to the cell belonging to a tracking area in which the UE is registered. The idle state mobility management unit 505-3 may manage the CSG of the eNBs 207 to be connected to the MME 204a, CSG IDs, and a whitelist.

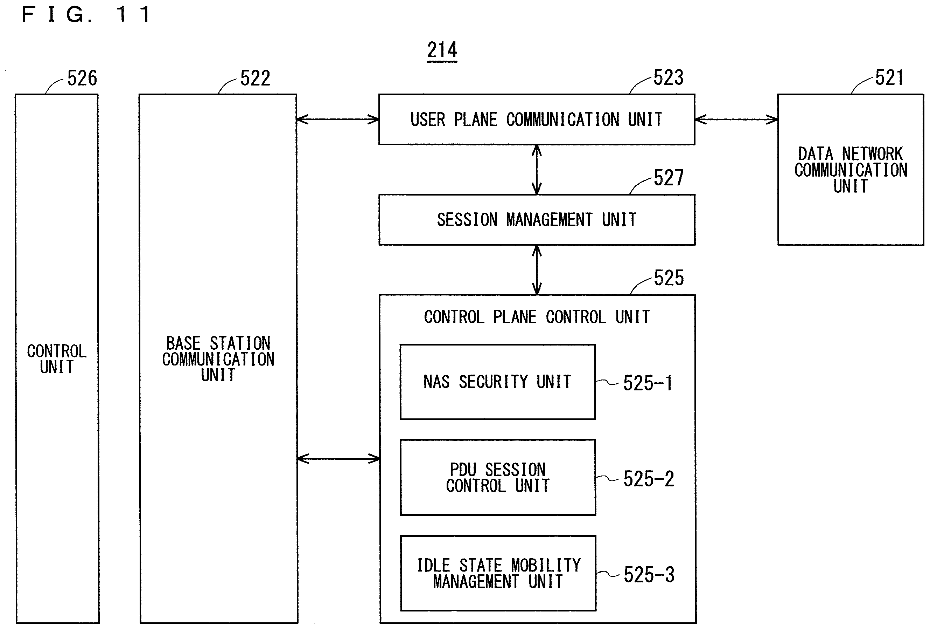

FIG. 11 is a block diagram illustrating a configuration of the 5GC. FIG. 11 illustrates a configuration of the 5GC unit 214 in FIG. 3. FIG. 11 illustrates a case where the 5GC unit 214 in FIG. 5 includes configurations of the AMF, the SMF, and the UPF. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213.

When the data received through the data network is user data, the data network communication unit 521 passes the user data to the base station communication unit 522 through a user plane communication unit 523 to transmit the user data to one or more base stations, specifically, the base station 203 and/or the base station 213. When the data received from the base station 203 and/or the base station 213 is user data, the base station communication unit 522 passes the user data to the data network communication unit 521 through the user plane communication unit 523 to transmit the user data to the data network.

When the data received from the data network is control data, the data network communication unit 521 passes the control data through the user plane communication unit 523 to a session management unit 527. The session management unit 527 passes the control data to a control plane control unit 525. When the data received from the base station 203 and/or the base station 213 is control data, the base station communication unit 522 passes the control data to the control plane control unit 525. The control plane control unit 525 passes the control data to the session management unit 527.

The control plane control unit 525 includes, for example, a NAS security unit 525-1, a PDU session control unit 525-2, and an idle state mobility management unit 525-3, and performs overall processes on the control planes (may be hereinafter referred to as C-Planes). The NAS security unit 525-1, for example, provides security for a Non-Access Stratum (NAS) message. The PDU session control unit 525-2, for example, manages a PDU session between the user equipment 202 and the 5GC unit 214. The idle state mobility management unit 525-3, for example, manages mobility of an idle state (an RRC_IDLE state or simply referred to as idle), generates and controls paging signals in the idle state, and adds, deletes, updates, and searches for tracking areas of one or more user equipments 202 being served thereby, and manages a tracking area list.

The 5GC unit 214 distributes the paging signals to one or more base stations, specifically, the base station 203 and/or the base station 213. Furthermore, the 5GC unit 214 controls mobility of the idle state. The 5GC unit 214 manages the tracking area list when a user equipment is in an idle state, an inactive state, and an active state. The 5GC unit 214 starts a paging protocol by transmitting a paging message to a cell belonging to a tracking area in which the UE is registered.

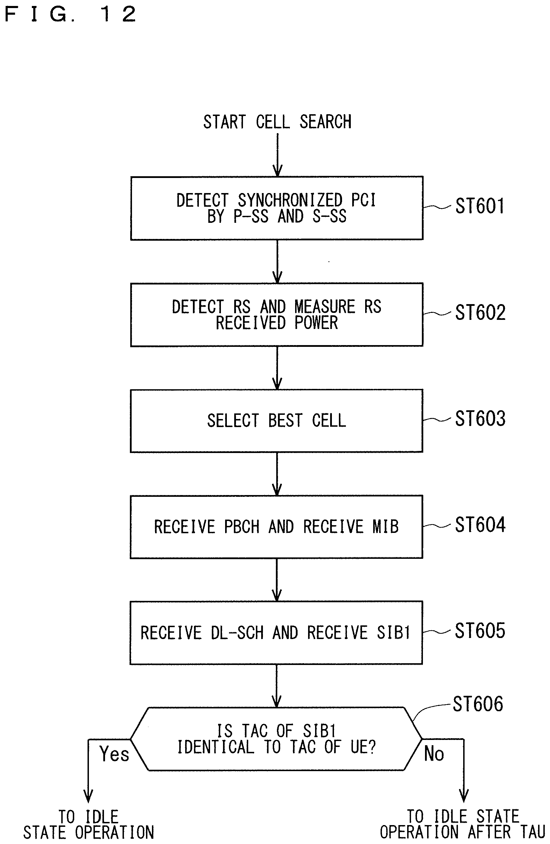

An example of a cell search method in a mobile communication system is described next. FIG. 12 is a flowchart showing an outline from a cell search to an idle state operation performed by a communication terminal (UE) in the LTE communication system. When starting a cell search, in Step ST601, the communication terminal synchronizes slot timing and frame timing by a primary synchronization signal (P-SS) and a secondary synchronization signal (S-SS) transmitted from a neighbor base station.

The P-SS and S-SS are collectively referred to as a synchronization signal (SS). Synchronization codes, which correspond one-to-one to PCIs assigned per cell, are assigned to the synchronization signals (SSs). The number of PCIs is currently studied in 504 ways. The 504 ways of PCIs are used for synchronization, and the PCIs of the synchronized cells are detected (specified).

In Step ST602, next, the user equipment detects a cell-specific reference signal (CRS) being a reference signal (RS) transmitted from the base station per cell and measures the reference signal received power (RSRP) for the synchronized cells. The codes corresponding one-to-one to the PCIs are used for the reference signal RS. Separation from another cell is enabled by correlation using the code. The code for RS of the cell is calculated from the PCI specified in Step ST601, so that the RS can be detected and the RS received power can be measured.

In Step ST603, next, the user equipment selects the cell having the best RS received quality, for example, the cell having the highest RS received power, that is, the best cell, from one or more cells that have been detected up to Step ST602.

In Step ST604, next, the user equipment receives the PBCH of the best cell and obtains the BCCH that is the broadcast information. A master information block (MIB) containing the cell configuration information is mapped to the BCCH over the PBCH. Accordingly, the MIB is obtained by obtaining the BCCH through reception of the PBCH. Examples of the MIB information include the downlink (DL) system bandwidth (also referred to as a transmission bandwidth configuration (dl-bandwidth)), the number of transmission antennas, and a system frame number (SFN).

In Step ST605, next, the user equipment receives the DL-SCH of the cell based on the cell configuration information of the MIB, to thereby obtain a system information block (SIB) 1 of the broadcast information BCCH. The SIB1 contains the information about the access to the cell, information about cell selection, and scheduling information on another SIB (SIBk; k is an integer equal to or greater than two). In addition, the SIB 1 contains a tracking area code (TAC).

In Step ST606, next, the communication terminal compares the TAC of the SIB1 received in Step ST605 with the TAC portion of a tracking area identity (TAI) in the tracking area list that has already been possessed by the communication terminal. The tracking area list is also referred to as a TAI list. TAI is the identification information for identifying tracking areas and is composed of a mobile country code (MCC), a mobile network code (MNC), and a tracking area code (TAC). MCC is a country code. MNC is a network code. TAC is the code number of a tracking area.

If the result of the comparison of Step ST606 shows that the TAC received in Step ST605 is identical to the TAC included in the tracking area list, the user equipment enters an idle state operation in the cell. If the comparison shows that the TAC received in Step ST605 is not included in the tracking area list, the communication terminal requires a core network (EPC) including MME to change a tracking area through the cell for performing tracking area update (TAU).

Although FIG. 12 exemplifies the operations from the cell search to the idle state in LTE, the best beam may be selected in NR in addition to the best cell in Step ST603. In NR, information on a beam, for example, an identifier of the beam may be obtained in Step ST604. Furthermore, scheduling information on the Remaining Minimum SI (RMSI) in NR may be obtained in Step ST604. The RMSI in NR may be obtained in Step ST605.

The device configuring a core network (hereinafter, also referred to as a "core-network-side device") updates the tracking area list based on an identification number (such as UE-ID) of a communication terminal transmitted from the communication terminal together with a TAU request signal. The core-network-side device transmits the updated tracking area list to the communication terminal. The communication terminal rewrites (updates) the TAC list of the communication terminal based on the received tracking area list. After that, the communication terminal enters the idle state operation in the cell.

Widespread use of smartphones and tablet terminal devices explosively increases traffic in cellular radio communications, causing a fear of insufficient radio resources all over the world. To increase spectral efficiency, thus, it is studied to downsize cells for further spatial separation.

In the conventional configuration of cells, the cell configured by an eNB has a relatively-wide-range coverage. Conventionally, cells are configured such that relatively-wide-range coverages of a plurality of cells configured by a plurality of macro eNBs cover a certain area.

When cells are downsized, the cell configured by an eNB has a narrow-range coverage compared with the coverage of a cell configured by a conventional eNB. Thus, in order to cover a certain area as in the conventional case, a larger number of downsized eNBs than the conventional eNBs are required.

In the description below, a "macro cell" refers to a cell having a relatively wide coverage, such as a cell configured by a conventional eNB, and a "macro eNB" refers to an eNB configuring a macro cell. A "small cell" refers to a cell having a relatively narrow coverage, such as a downsized cell, and a "small eNB" refers to an eNB configuring a small cell.

The macro eNB may be, for example, a "wide area base station" described in Non-Patent Document 7.

The small eNB may be, for example, a low power node, local area node, or hotspot. Alternatively, the small eNB may be a pico eNB configuring a pico cell, a femto eNB configuring a femto cell, HeNB, remote radio head (RRH), remote radio unit (RRU), remote radio equipment (RRE), or relay node (RN). Still alternatively, the small eNB may be a "local area base station" or "home base station" described in Non-Patent Document 7.

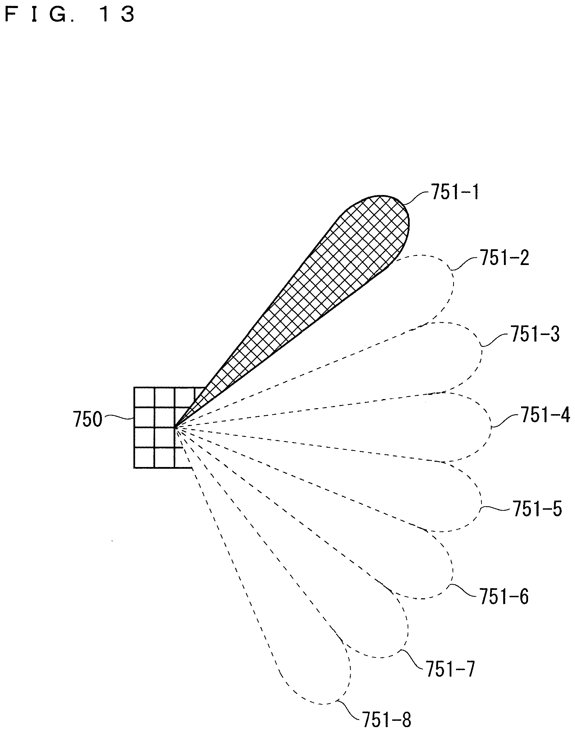

FIG. 13 illustrates an example structure of a cell in NR. In the cell in NR, a narrow beam is formed and transmitted in a changed direction. In the example of FIG. 13, a base station 750 performs transmission and reception with a user equipment via a beam 751-1 at a certain time. The base station 750 performs transmission and reception with the user equipment via a beam 751-2 at another time. Similarly, the base station 750 performs transmission and reception with the user equipment via one or more of beams 751-3 to 751-8. As such, the base station 750 configures a cell with a wide range.

Although FIG. 13 exemplifies that the number of beams to be used by the base station 750 is eight, the number of beams may be different from eight. Although FIG. 13 also exemplifies that the number of beams to be simultaneously used by the base station 750 is one, the number of such beams may be two or more.

In 3GPP, for device to device (D2D) communication and vehicle to vehicle (V2V) communication, a sidelink (side link (SL)) is supported (see Non-Patent Document 1). The SL is defined by a PC5 interface.

Physical channels (see Non-Patent Document 1) used for the SL will be described. A physical sidelink broadcast channel (PSBCH) carries information related to a system and synchronization, and is transmitted from the UE.

A physical sidelink discovery channel (PSDCH) carries a sidelink discovery message from the UE.

A physical sidelink control channel (PSCCH) carries control information from the UE for sidelink communication and V2X sidelink communication.

A physical sidelink shared channel (PSSCH) carries data from the UE for sidelink communication and V2X sidelink communication.

Transport channels (see Non-Patent Document 1) used for the SL will be described. A sidelink broadcast channel (SL-BCH) has a predetermined transport format, and is mapped to the PSBCH being a physical channel.

A sidelink discovery channel (SL-DCH) has cyclic broadcast transmission of a predetermined format having a fixed size. Further, the SL-DCH supports both of UE autonomous resource selection and resource allocation that is scheduled by the eNB. In UE autonomous resource selection, there is a collision risk, and when the UE is allocated individual resources by the eNB, there is no collision. Further, the SL-DCH supports HARQ combining, but does not support HARQ feedback. The SL-DCH is mapped to the PSDCH being a physical channel.

A sidelink shared channel (SL-SCH) supports broadcast transmission. The SL-SCH supports both of UE autonomous resource selection and resource allocation that is scheduled by the eNB. In UE autonomous resource selection, there is a collision risk, and when the UE is allocated individual resources by the eNB, there is no collision. Further, the SL-SCH supports HARQ combining, but does not support HARQ feedback. Further, the SL-SCH supports dynamic link adaptation by changing transmission power, modulation, and coding. The SL-SCH is mapped to the PSSCH being a physical channel.

Logical channels (see Non-Patent Document 1) used for the SL will be described. A sidelink broadcast control channel (SBCCH) is a sidelink channel for broadcasting sidelink system information from one UE to another UE. The SBCCH is mapped to the SL-BCH being a transport channel.

A sidelink traffic channel (STCH) is a one-to-many sidelink traffic channel for transmitting user information from one UE to another UE. The STCH is used only by a UE having sidelink communication capability and a UE having V2X sidelink communication capability. One-to-one communication between UEs having two sidelink communication capabilities is also implemented on the STCH. The STCH is mapped to the SL-SCH being a transport channel.

In 3GPP, supporting the V2X communication is studied in NR as well. The study of the V2X communication in NR is carried out on the basis of the LTE system and the LTE-A system. Changes and additions are made from the LTE system and the LTE-A system in the following aspects.

In LTE, only broadcast is supported in the SL communication. In NR, as the SL communication, support of unicast and groupcast in addition to broadcast is studied (see Non-Patent Document 21 (TS 23.287)).

In the unicast communication and the groupcast communication, support of feedback of the HARQ (Ack/Nack), a CSI report, and the like is studied.

In order to support unicast and groupcast in addition to broadcast in the SL communication, support of PC5-S signaling is studied (see Non-Patent Document 21 (TS 23.287)). For example, in order to establish the SL, in other words, a link for performing PC5 communication, the PC5-S signaling is performed. The link is performed in a V2X layer, and is also referred to as a layer 2 link.

Further, in the SL communication, support of RRC signaling is studied (see Non-Patent Document 21 (TS 23.287)). The RRC signaling in the SL communication is also referred to as PC5 RRC signaling. For example, reporting capability of the UE and reporting a configuration of an AS layer for performing the V2X communication by using the PC5 communication or the like between the UEs performing the PC5 communication are proposed.

Conventionally, in the sidelink communication (SL communication), scheduling for SL communication between a transmission UE (referred to as a UE-TX) and a reception UE (referred to as a UE-RX) is performed by the gNB that serves the UE-TX or by the UE-TX itself. A mode in which the gNB that serves the UE-TX performs scheduling is referred to as mode-1, whereas a mode in which the UE-TX itself performs scheduling is referred to as mode-2 (see Non-Patent Document 23).

In 3GPP, subdivision of mode-2 being a method in which the UE-TX itself performs scheduling is proposed. As such subdivided methods, a method in which one UE performs resource selection for SL communication of another UE (mode-2 (b)) and a method in which one UE performs scheduling for SL communication of another UE (mode-2 (d)) are proposed (see Non-Patent Document 23).

In a case of such methods as mode-2 (b) and mode-2 (d), entities that actually perform data communication of a V2X service is the UE-TX and the UE-RX, and the UE (which may be hereinafter referred to as a scheduling UE (S-UE)) that performs resource selection and scheduling does not perform the data communication.

Thus, resource information is reported from the S-UE to the UE-TX for the SL communication for the V2X service. In a case of mode-2 (b), examples of the resource information include a resource pool (RP), whereas in a case of mode-2 (d), the examples include resource information used for the SL communication between the UE-TX and the UE-RX such as scheduling information. After the S-UE reports the resource information to the UE-TX, the SL communication for the V2X service is performed between the UE-TX and the UE-RX.

There is no invention made regarding a connection state between the S-UE and the UE-TX in such a case.

Further, in some cases, the gNB may report the resource information to the UE-TX in conventional mode-1 and mode-2. In such a case, between the gNB and the UE-TX, a Uu interface is used, which is an interface between the gNB and a regular UE. In contrast, between the S-UE and the UE-TX, a PC5 interface is used, which is an interface for the SL communication. Thus, conventional methods in the Uu interface cannot be applied to the PC5 interface.

When the connection state between the S-UE and the UE-TX using the PC5 interface is unclear in a configuration using the S-UE, inconsistency may occur between processing between the S-UE and the UE-TX and processing between the UE-TX and the UE-RX, which may cause malfunction.

In the first embodiment, a method for solving such a problem will be disclosed.

A method in which the resource information is reported from the S-UE to the UE-TX is disclosed. The S-UE reports the resource information to the UE-TX by using the PC5-S signaling. The S-UE may include the resource information in a PC5-S message to report the resource information by using the PC5-S signaling. The S-UE and the UE-TX may establish a PC5 unicast link. The S-UE may report the resource information by using the PC5-S signaling used at the time of establishing PC5-S connection. Alternatively, the S-UE may report the resource information by using the PC5-S signaling after establishing the PC5-S connection.

For the report of the PC5-S signaling, a default radio bearer (RB) may be used. For the report of the resource information, a default radio bearer (RB) may be used. The RB may be an SRB, or may be a DRB.

With this configuration, the resource information can be reported from the S-UE to the UE-TX at an early stage. The SL communication between the UE-TX and the UE-RX can be performed at an early stage.

Another method will be disclosed. The S-UE may report the resource information to the UE-TX by using the PC5-RRC signaling. The S-UE may include the resource information in a PC5-RRC message to report the resource information by using the PC5-RRC signaling. The S-UE and the UE-TX may establish PC5-RRC connection. The S-UE may report the resource information by using the PC5-RRC signaling used at the time of establishing the PC5-RRC connection. Alternatively, the S-UE may report the resource information by using the PC5-RRC signaling after establishing the PC5-RRC connection.

For the report of the PC5-RRC signaling, a default radio bearer (RB) may be used. For the report of the resource information, a default radio bearer (RB) may be used. The RB may be an SRB, or may be a DRB. The RB in the SL may be referred to as an SL RB.

As the PC5-RRC message, an AS configuration message may be used. The AS configuration between the S-UE and the UE-TX and the AS configuration between the UE-TX and the UE-RX may be separately provided. The resource information for the SL communication between the UE-TX and the UE-RX may be included in the AS configuration between the UE-TX and the UE-RX. The AS configuration between the S-UE and the UE-TX and the AS configuration between the UE-TX and the UE-RX may be reported from the S-UE to the UE-TX in individual messages, respectively.

The AS configuration between the S-UE and the UE-TX and the AS configuration between the UE-TX and the UE-RX may be included in one message to be reported from the S-UE to the UE-TX. Information indicating that it is for the purpose of the SL communication between the UE-TX and the UE-RX may be provided, and the information may be reported in association with the AS configuration between the UE-TX and the UE-RX.

With this configuration, the resource information can be reported in the RRC layer from the S-UE to the UE-TX. The resource information can be easily handled in the AS layer of the S-UE and the UE-TX. For example, in the S-UE and the UE-TX, the report of the resource information between the layers may be unnecessary.

The S-UE may report the resource information to the UE-TX by using the RB configured for the communication between the S-UE and the UE-TX. The RB may be an SRB. By employing the RB for signaling, for example, a configuration of the DRB can be unnecessary. The RB may be a DRB. By employing the RB for data, for example, desired QoS can be configured. With this configuration, flexible report depending on communication quality can be performed from the S-UE to the UE-TX.

A new message may be provided for the report of the resource information. By distinguishing from other messages, malfunction between the S-UE and the UE-TX can be reduced.

When the SL communication between the UE-TX and the UE-RX is communication in bidirectional, data of the V2X service is communicated from the UE-RX to the UE-TX. In this manner, the methods of the present invention may also be applied to the communication from the UE-RX to the UE-TX as appropriate. The UE-RX and the UE-TX in the communication from the UE-RX to the UE-TX may be applied as the UE-TX and the UE-RX in the communication from the UE-TX to the UE-RX of the present invention as appropriate. For example, as the report method of the resource information for the communication from the UE-RX to the UE-TX, the methods described above may be applied as appropriate. Application is possible with the UE-RX being substituted for the UE-TX.

The S-UE connected by the UE-TX and the S-UE connected by the UE-RX may be different. In such a case, it is unclear which S-UE is used in the SL communication between the UE-TX and the UE-RX.

A method for solving such a problem will be disclosed.

The S-UE connected to the UE that starts PC5 connection after first occurrence of data of the V2X service is used. For example, when data of the V2X service first occurs in the UE-TX, the UE-TX starts PC5 connection processing with the UE-RX. The UE-TX may report resource information acquired from the S-UE to the UE-RX. The UE-RX uses the resource information reported from the UE-TX for the SL communication from the UE-RX to the UE-TX. In this case, the resource information reported from the S-UE connected by the UE-RX is not used for the communication to the UE-TX.

With this configuration, the UE-RX can determine resources to be used for the SL communication to the UE-TX.

The S-UE may separately provide the AS configuration from the UE-TX to the UE-RX and the AS configuration from the UE-RX to the UE-TX. The AS configurations may be respectively included in individual messages to be reported. Alternatively, the AS configurations may be included in one message to be reported. Effects similar to those described above can be achieved. The AS configuration from the UE-TX to the UE-RX and the AS configuration from the UE-RX to the UE-TX may be associated. Examples of the AS configuration include a configuration of an SLRB, a configuration of an RLC bearer, a logical channel ID (LCID), and the like.

With this configuration, the UE-TX can recognize the SL communication from the UE-RX to the UE-TX corresponding to the SL communication from the UE-TX to the UE-RX. Thus, the V2X service using the SL communication in bidirectional between the UE-TX and the UE-RX is enabled.

Another method will be disclosed. The UE-RX performs the SL communication from the UE-RX to the UE-TX by using the resource information reported from the S-UE connected by the UE-RX.

With this configuration, the UE-RX can determine resources to be used for the SL communication to the UE-TX.

Also when the resource information configured by the S-UE connected by each UE is used, the AS configuration from the UE-TX to the UE-RX and the AS configuration from the UE-RX to the UE-TX may be associated. Examples of the AS configuration include a configuration of an SLRB, a configuration of an RLC bearer, a logical channel ID (LCID), and the like. The UE-TX reports the AS configuration from the UE-TX to the UE-RX to the UE-RX. A part or all of information in the AS configuration may be provided with an identifier. The UE-RX assigns an identifier reported from the UE-TX to the similar information in the AS configuration from the UE-RX to the UE-TX.

With this configuration, the UE-TX can recognize the SL communication from the UE-RX to the UE-TX corresponding to the SL communication from the UE-TX to the UE-RX. Thus, the V2X service using the SL communication in bidirectional between the UE-TX and the UE-RX is enabled.

The UE-RX may assign an identifier different from the identifier reported from the UE-TX to the similar information in the AS configuration from the UE-RX to the UE-TX. The UE-RX associates the identifier assigned to the information in the AS configuration from the UE-TX to the UE-RX and the identifier assigned to the information in the AS configuration from the UE-RX to the UE-TX, and reports the identifiers to the UE-TX.

With this configuration, the UE-TX can recognize the SL communication from the UE-RX to the UE-TX corresponding to the SL communication from the UE-TX to the UE-RX. Thus, the V2X service using the SL communication in bidirectional between the UE-TX and the UE-RX is enabled.

The connection state between the S-UE and the UE-TX after the report of the resource information from the S-UE to the UE-TX will be disclosed. The connection between the S-UE and the UE-TX is maintained even after the report of the resource information from the S-UE to the UE-TX. Connection between the UEs in PC5 may be referred to as PC5 connection. The PC5-S connection is maintained as a connection level. The PC5-RRC connection may also be maintained. It may be arranged that the AS configuration is not released between the S-UE and the UE-TX when the PC5-RRC connection is maintained.

The AS configuration that is not released when the PC5-RRC connection is maintained may be, for example, an AS configuration used by the S-UE for the SL communication between the UE-TX and the UE-RX. When only the report of the resource information is performed between the S-UE and the UE-TX, the AS configuration is the AS configuration used for the report of the resource information. When not only the report of the resource information but also other SL communication is performed between the S-UE and the UE-TX, an AS configuration used for such other SL communication may not be included as the AS configuration.

The AS configuration may be an RB configuration. Examples of the RB configuration include an SRB configuration, a DRB configuration, and the like. The configuration of the RB may be, for example, a configuration of each protocol stack. The protocol stack may be, for example, SDAP, PDCP, RLC, MAC, PHY, and the like.

With this configuration, even after the report of the resource information from the S-UE to the UE-TX, the connection between the S-UE and the UE-TX can be maintained. For example, when the S-UE changes resources for the UE-TX and reports the resource information after the change, the connection processing is unnecessary, which thus enables early report. Resources of the SL communication between the UE-TX and the UE-RX can be changed with a low delay.

PC5 connection state information indicating the connection state between the UEs may be provided. The UE-TX may report the connection state between the UE-TX and the UE-RX to the S-UE by using the PC5 connection state information. The PC5 connection state information may be, for example, information indicating whether or not the PC5 unicast link is established. The PC5 connection state information may be information indicating whether or not the layer 2 link is established. The PC5 connection state information may be information indicating whether or not the PC5-S connection is established.

Further, the PC5 connection state information may be information indicating whether or not the PC5-RRC connection is established. The PC5 connection state information may be information indicating whether or not the AS configuration is maintained. Further, the PC5 connection state information may be information indicating an RLF. Further, the PC5 connection state information may be information indicating whether or not a synchronization signal and/or a channel for synchronization in the SL from an opposite UE is received. The PC5 connection state information may be information indicating whether or not synchronization is established owing to reception of a synchronization signal and/or a channel for synchronization in the SL from an opposite UE. A synchronization signal (SS) of the SL may be used as the signal for synchronization. The SBCCH may be used as the channel for synchronization.

The PC5 connection state information may be information obtained by combining the pieces of information described above. For example, the PC5 connection state information may include the information indicating whether or not the PC5-S connection is established and the information indicating whether or not the PC5-RRC connection is established.

In this manner, by providing information indicating the connection state between the UEs, the connection state between the UEs that perform the SL communication can be reported to another UE. By using the PC5 connection state information, the UE-TX performing the SL communication with the UE-RX can report the connection state between the UE-TX and the UE-RX to the S-UE.

Information indicating certain PC5 connection may be included in the PC5 connection state information. This enables identification of information indicating a state of certain PC5 connection when a plurality of PC5 connections are performed.

The PC5 connection state information may be reported to a gNB or a CN node. For example, the S-UE may report the PC5 connection state between the S-UE and the UE-TX to the gNB. For example, the UE-TX may report the PC5 connection state information between the UE-TX and the UE-RX to the gNB via the S-UE. The gNB or the CN node can recognize the PC5 connection state between the UEs that perform the SL communication.

When the connection between the S-UE and the UE-TX is maintained even after the S-UE reports the resource information for the SL communication between the UE-TX and the UE-RX to the UE-TX, at which time the connection is released poses a problem. A condition for releasing the connection will be disclosed.

When the V2X service between the UE-TX and the UE-RX ends, the connection between the S-UE and the UE-TX is released. When all of the V2X services performed by the UE-TX end, the connection between the S-UE and the UE-TX may be released. With this configuration, the connection between the S-UE and the UE-TX is maintained unless the V2X service ends, which thus enables the SL communication between the S-UE and the UE-TX as necessary.

When the PC5 connection of the SL communication between the UE-TX and the UE-RX is released, the connection between the S-UE and the UE-TX may be released. Examples of the PC5 connection include PC5-RRC connection and/or PC5-S connection. For example, when the PC5-RRC connection and the PC5-S connection of the SL communication between the UE-TX and the UE-RX are released, the connection between the S-UE and the UE-TX is released. When all of the PC5 connections performed by the UE-TX are released, the connection between the S-UE and the UE-TX may be released. When the PC5 connection between the UE-TX and the UE-RX is released, the SL communication between the UE-TX and the UE-RX is impracticable in actuality. By releasing the connection between the S-UE and the UE-TX when the SL communication is unnecessary, power consumption of the S-UE and the UE-TX can be reduced. Further, resources used for connection can be released, and resource use efficiency can thus be enhanced.

When a radio link failure (RLF) occurs in the SL communication between the UE-TX and the UE-RX, the connection between the S-UE and the UE-TX may be released. When all of the SL communications performed by the UE-TX have an RLF and reconnection is not performed, the connection between the S-UE and the UE-TX may be released.

When reconnection is not performed for predetermined time after an RLF occurs in the SL communication between the UE-TX and the UE-RX, the connection between the S-UE and the UE-TX may be released. When all of the SL communications performed by the UE-TX have an RLF and reconnection is not performed for predetermined time, the connection between the S-UE and the UE-TX may be released. The predetermined time may be statically determined in advance in a standard or the like. Alternatively, one of the CN-side node, the gNB, the S-UE, the UE-TX, and the UE-RX may configure the predetermined time, and report the predetermined time to a part or all of other nodes described above. Other nodes can recognize the predetermined time.

As detection methods of an RLF of the SL, the following three methods are proposed (see Non-Patent Document 25).
(1) When the number of times of retransmission in RLC of the SL reaches a predetermined maximum number of times, it is determined as an RLF.
(2) When there are successive Nacks of the HARQ of the SL and the number thereof reaches a predetermined number of times, it is determined as an RLF.
(3) When decoding of the PSCCH of the SL fails a predetermined number of times or for a predetermined time period, it is determined as an RLF.

As the detection methods of an RLF, the above-described methods may be applied. The UE-TX may perform detection of an RLF. When an RLF occurs between the UE-TX and the UE-RX, similarly to the above-described methods, the SL communication between the UE-TX and the UE-RX is impracticable. By releasing the connection between the S-UE and the UE-TX when the SL communication is unnecessary, power consumption of the S-UE and the UE-TX can be reduced, and in addition, resources used for connection can be released, and resource use efficiency can thus be enhanced.

Which method of the detection methods of an RLF is to be performed may be statically determined in advance in a standard or the like. Alternatively, an RLF detection method can be configured. A node that determines the RLF detection method may be one of the CN-side node, the gNB, the S-UE, the UE-TX, and the UE-RX. The node that determines the RLF detection method may report the determined RLF detection method to a part or all of other nodes described above. With this configuration, for example, the RLF detection method can be configured depending on a communication quality state of the SL between the UE-TX and the UE-RX in each direction.

Information of the RLF detection method supported by the UE may be provided. The information may be included in UE capability. The UE may report information of the supported RLF detection method to the node that determines the RLF detection method. With this configuration, the node that determines the RLF detection method can recognize the RLF detection method supported by the UE, and can determine the RLF detection method by taking the information into consideration.

In the SL communication, beams may be used. In order to support beams in the SL communication, a synchronization signal block (SSB) for each beam may be configured in resources for SL communication. The UE-TX transmits the SS in the SSBs of beams performing the SL communication. The UE-TX may also transmit the PSBCH at the same time. The UE-RX performs reception operation for predetermined time during which the SSBs are transmitted, and receives the SSBs transmitted from the UE-TX. With this configuration, the beams transmitted by the UE-TX can be identified.

The UE-RX may receive an SL reference signal (RS) transmitted from the UE-TX for each beam, and measure received quality of each beam. Further, a CSI-RS corresponding to the beam may be provided, and the CSI-RS may be transmitted from the UE-TX. The UE-RX may receive the CSI-RS transmitted from the UE-TX for each beam, and measure received quality of each beam.

As a detection method of a beam failure in the SL communication, reception results of the SL RS and/or the CSI-RS of each SSB and/or beam may be used. For example, when reception of the SSB fails a predetermined number of times or for a predetermined time period, it is determined as an RLF. With this configuration, when the SSB, the SL RS, and the CSI-RS are configured for each beam, an RLF can be detected by receiving its signal.

In order that the UE-TX detects a beam failure, the SSB, the SL RS, and the CSI-RS in beams transmitted from the UE-RX to the UE-TX may be used. With this configuration, the UE-TX can detect a beam failure of the SL communication between the UE-TX and the UE-RX. The connection between the S-UE and the UE-TX can be released.

Another method for the UE-TX to detect a beam failure will be disclosed. When the UE-RX detects a beam failure with a beam transmitted from the UE-RX to the UE-TX, the UE-RX may report, using the beam transmitted from the UE-RX to the UE-TX, that the UE-RX has detected the beam failure. For example, this is effective when communication states are different between a beam transmitted from the UE-TX to the UE-RX and a beam transmitted from the UE-RX to the UE-TX.

When a beam failure occurs in the SL communication between the UE-TX and the UE-RX, the connection between the S-UE and the UE-TX may be released. When all of the SL communications performed by the UE-TX have a beam failure, the connection between the S-UE and the UE-TX may be released.

When beam recovery is not performed for predetermined time after a beam failure occurs in the SL communication between the UE-TX and the UE-RX, the connection between the S-UE and the UE-TX may be released. When all of the SL communications performed by the UE-TX have a beam failure and beam recovery is not performed for predetermined time, the connection between the S-UE and the UE-TX may be released. The predetermined time may be statically determined in advance in a standard or the like. Alternatively, one of the CN-side node, the gNB, the S-UE, the UE-TX, and the UE-RX may configure the predetermined time, and report the predetermined time to a part or all of other nodes described above. Other nodes can recognize the predetermined time.

The UE-TX may configure the SSB, the SL RS, and the CSI-RS of a plurality of beams for the UE-RX. When a beam failure occurs in one beam performing the SL communication, the UE-RX may select a beam for recovery out of the plurality of configured beams. For example, the UE-RX receives a part or all of the signals of the plurality of configured beams, and derives received quality of each beam. The UE-RX selects a beam having the highest received quality.

The UE-RX reports the selected beam to the UE-TX. The UE-RX may report information for requesting the SL communication in the selected beam to the UE-TX. As the information, information for identifying the beam, for example, a beam identifier, may be included. With this configuration, the UE-TX can recognize the beam that can be received by the UE-RX. The UE-TX can use the beam that can be received by the UE-RX for the SL communication to the UE-RX. The UE-RX is enabled to perform the SL communication with the UE-TX by using the beam. Beam recovery for the SL communication can be performed between the UE-TX and the UE-RX.

For the report of the selected beam from the UE-RX to the UE-TX, PC5-RRC signaling or MAC signaling may be used. In these signaling, retransmission of the HARQ is used, and thus a high reception probability can be obtained. As another method, information of the selected beam may be included in the SCI to be reported. This allows report using the PSCCH, and enables early report. This enables early beam recovery.

For the report of the selected beam from the UE-RX to the UE-TX, a specific signal may be provided. A specific signal corresponding to each beam may be provided. Alternatively, a parameter configuring a specific signal may be associated with each beam. Examples of the parameter configuring a specific signal include a frequency resource, a time resource, a sequence, and a combination of these. These correspondences may be statically determined in advance in a standard or the like. Alternatively, these correspondences may be reported from the UE-TX to the UE-RX in advance. The correspondences may be associated with configurations of a plurality of beams to be reported. Both of the UE-TX and the UE-RX can recognize the correspondences.

For example, when timings of transmitting each beam and the specific signal are associated, the UE-RX may map the specific signal to the time resources corresponding to the beam selected for recovery, and reports to the UE-TX. The UE-TX can recognize the beam selected by the UE-RX for recovery from the time resources in which the specific signal is received. The SL communication using the beam can be performed between the UE-TX and the UE-RX.

As a detection method of an RLF in the SL communication, when a beam failure is detected, it may be determined that an RLF is detected. As a detection method of an RLF in the SL communication, when beam recovery is not performed after a beam failure occurs in the SL communication, it may be determined that an RLF is detected. When the beam recovery is not performed for predetermined time, it may be determined that an RLF is detected. When an RLF occurs in the SL communication between the UE-TX and the UE-RX, the connection between the S-UE and the UE-TX may be released. In this manner, by using the beam failure as one of the detection methods of an RLF, processing can be facilitated.

Another method of releasing the connection between the S-UE and the UE-TX will be disclosed.

When an RLF occurs in the SL communication between the S-UE and the UE-TX, the connection between the S-UE and the UE-TX may be released. When all of the SL communications performed by the S-UE and the UE-TX have an RLF and reconnection is not performed, the connection between the S-UE and the UE-TX may be released. When an RLF occurs in the SL communication between the S-UE and the UE-TX, the SL communication between the S-UE and the UE-TX is impracticable. By releasing the connection between the S-UE and the UE-TX when the SL communication is unnecessary, power consumption of the S-UE and the UE-TX can be reduced. Further, resources used for connection can be released, and resource use efficiency can thus be enhanced.

When a beam failure occurs in the SL communication between the S-UE and the UE-TX, the connection between the S-UE and the UE-TX may be released. When the SL communication performed by the S-UE and the UE-TX has a beam failure and beam recovery is not performed, the connection between the S-UE and the UE-TX may be released. When a beam failure occurs in the SL communication between the S-UE and the UE-TX, the SL communication between the S-UE and the UE-TX is impracticable. By releasing the connection between the S-UE and the UE-TX when the SL communication is unnecessary, power consumption of the S-UE and the UE-TX can be reduced. Further, resources used for connection can be released, and resource use efficiency can thus be enhanced.

As the detection method of an RLF in the SL communication described above, a method in which it is determined that an RLF is detected when a beam failure is detected may be used. When an RLF occurs in the SL communication between the S-UE and the UE-TX, the connection between the S-UE and the UE-TX may be released. In this manner, by using the beam failure as one of the detection methods of an RLF, processing can be facilitated.

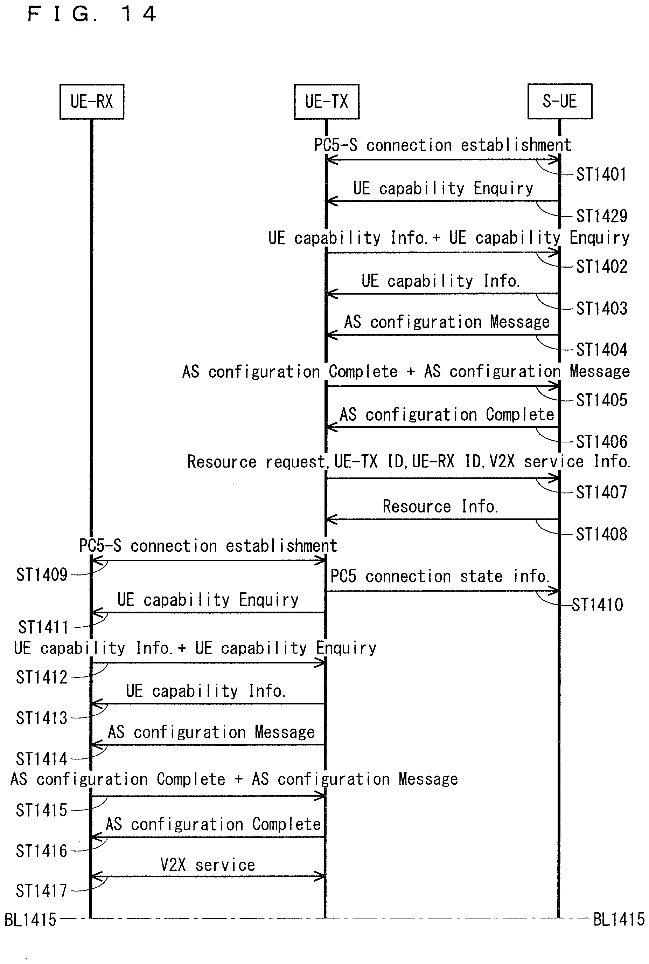

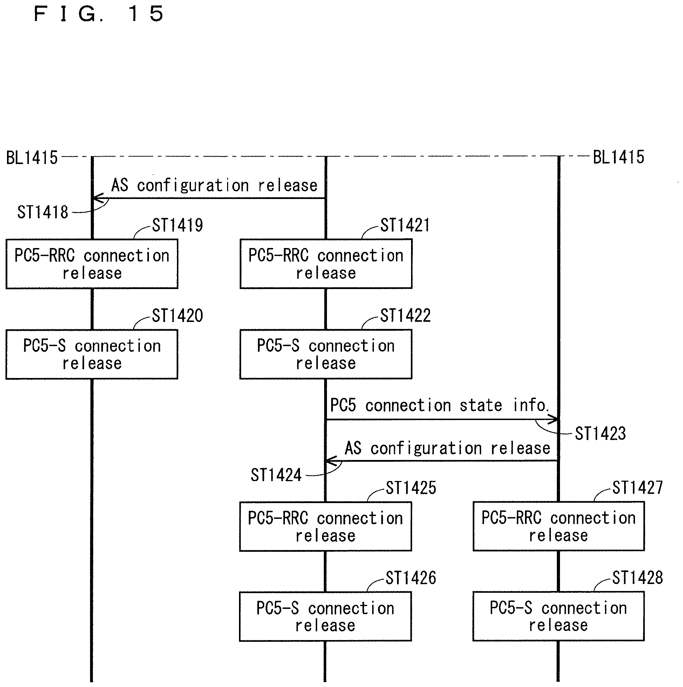

FIG. 14 and FIG. 15 are sequence diagrams illustrating an example of a method of maintaining the connection between the S-UE and the UE-TX even after the S-UE reports the resource information for the SL communication to the UE-TX according to the first embodiment. FIG. 14 and FIG. 15 are connected at the position of a boundary BL1415. The S-UE reports the resource information for the SL communication between the UE-TX and the UE-RX to the UE-TX. The UE-TX performs the SL communication by using the resource information with the UE-RX.

As an example, the following illustrates a case in which a V2X service performed by the UE-TX by using unicast communication of the SL with the UE-RX occurs. In Step ST1401, the UE-TX establishes the PC5-S connection with the S-UE. In order to establish the PC5-S connection between the UE-TX and the S-UE, discovery processing may be performed between the S-UE and the UE-TX. For example, the S-UE may report a discovery announcement message for performing announcement. The S-UE may include information indicating possession of an S-UE function in the announcement message. The UE-TX can detect the S-UE by receiving the announcement message.

Alternatively, the UE-TX may report a discovery solicitation message for performing solicitation to the S-UE. The UE-TX may include information indicating solicitation of the UE having the S-UE function in the solicitation message. When the S-UE having the S-UE function receives the solicitation message, the S-UE reports a response message to the UE-TX. The S-UE may include information indicating possession of the S-UE function in the response message. With this configuration, the UE-TX can detect the S-UE.

In Steps ST1429, ST1402, and ST1403, the S-UE and the UE-TX report the UE capability of each other. In Step ST1402, the UE-TX may include report of the UE-capability of the UE-TX and a UE capability request to the S-UE in the same message, and transmit the message to the S-UE. This can reduce signaling. These reports are reported using the PC5-RRC signaling. Through these processings, the S-UE and the UE-TX can recognize the UE capability of each other.

In Steps ST1404, ST1405, and ST1406, the S-UE and the UE-TX report the AS configuration to each other. In Step ST1402, the UE-TX may include an AS configuration complete report and the AS configuration for the S-UE in the same message, and transmit the message to the S-UE. This can reduce signaling. These reports are reported using the PC5-RRC signaling. Through these processings, the S-UE and the UE-TX can perform the AS configuration for each other.

In Step ST1407, the UE-TX reports a resource request for the SL communication performed with the UE-RX to the S-UE. The UE-TX may report its own UE-TX identifier, a UE-RX identifier for performing the SL communication, and V2X service information for performing the SL communication together with the resource request or in the resource request. The V2X service information may be, for example, an identifier for identifying the service, and QoS required for the V2X service. The S-UE that has received the resource request for the SL communication from the UE-TX configures resources to be used for the SL communication between the UE-TX and the UE-RX. For example, the S-UE may select a resource pool, or may configure scheduling information such as resource allocation.

In Step ST1408, the S-UE reports the resource information to the UE-TX. The S-UE maintains the PC5 connection with the UE-TX even after the report of the resource information.

The UE-TX that has received the resource information establishes the PC5-S connection with the UE-RX by using the resource information in Step ST1409. Similarly to the above description, the discovery processing may be performed.

The UE-TX that has established the PC5-S connection with the UE-RX may report the PC5 connection state information to the S-UE in Step ST1410. Here, information indicating that the PC5-S connection has been established between the UE-TX and the UE-RX may be included in the PC5 connection state information. The S-UE that has received the PC5 connection state information maintains the PC5 connection between the S-UE and the UE-TX.

In Step ST1411 to Step ST1413, the UE-TX and the UE-RX report the UE capability of each other. In Step ST1414 to Step ST1416, the UE-TX and the UE-RX report the AS configuration to each other, and each UE performs the AS configuration. With this configuration, the V2X service using the SL communication can be performed between the UE-TX and the UE-RX. In Step ST1417, data communication of the V2X service is performed between the UE-TX and the UE-RX.

When the V2X service between the UE-TX and the UE-RX ends, in Step ST1418, the UE-TX reports an AS configuration release request for the V2X service to the UE-RX. The UE-RX that has received the AS configuration release request may release the PC5-RRC connection in Step ST1419. The UE-RX releases a configuration necessary for the PC5-RRC connection. The UE-RX that has released the PC5-RRC connection may release the PC5-S connection in Step ST1420. The UE-RX releases a configuration necessary for the PC5-S connection.

The UE-TX that has reported the AS configuration release request to the UE-RX may release the PC5-RRC connection in Step ST1421. The UE-TX releases a configuration necessary for the PC5-RRC connection. The UE-TX that has released the PC5-RRC connection may release the PC5-S connection in Step ST1422. The UE-TX releases a configuration necessary for the PC5-S connection.

The UE-TX that has released the PC5-S connection with the UE-RX reports the PC5 connection state information to the S-UE in Step ST1423. Here, information indicating that the PC5-S connection has been released between the UE-TX and the UE-RX may be included in the PC5 connection state information. The S-UE that has received the PC5 connection state information can recognize whether or not the PC5-S connection between the UE-TX and the UE-RX has been released. The S-UE that recognizes that the PC5-S connection between the UE-TX and the UE-RX has been released determines to release the PC5 connection between the S-UE and the UE-TX.

In Step ST1424, the S-UE reports an AS configuration release request to the UE-TX. The UE-TX that has received the AS configuration release request may release the PC5-RRC connection with the S-UE in Step ST1425. The UE-TX releases a configuration necessary for the PC5-RRC connection with the S-UE. The UE-TX that has released the PC5-RRC connection with the S-UE may release the PC5-S connection with the S-UE in Step ST1426. The UE-TX releases a configuration necessary for the PC5-S connection with the S-UE.

The S-UE that has reported the AS configuration release request to the UE-TX may release the PC5-RRC connection in Step ST1427. The S-UE releases a configuration necessary for the PC5-RRC connection. The S-UE that has released the PC5-RRC connection may release the PC5-S connection in Step ST1428. The S-UE releases a configuration necessary for the PC5-S connection.

With this configuration, even after the S-UE reports the resource information for the SL communication between the UE-TX and the UE-RX to the UE-TX, the connection between the S-UE and the UE-TX can be maintained. When the S-UE reports the resource information to the UE-TX next time, the connection processing between the S-UE and the UE-TX is unnecessary, which thus enables early report. Further, when the SL communication between the UE-TX and the UE-RX is no longer needed, the connection between the S-UE and the UE-TX can be released. Power consumption of the S-UE and the UE-TX can be reduced. Further, resources used for connection can be released, and resource use efficiency can thus be enhanced.

When resources for the SL communication between the UE-TX and the UE-RX are congested, a delay is caused in the SL communication. By employing the method as described above, the connection between the S-UE and the UE-TX can be maintained even after the report of the resource information from the S-UE to the UE-TX. Thus, the S-UE can report change of the resources for the SL communication between the UE-TX and the UE-RX to the UE-TX at an early stage. Therefore, the resources for the SL communication between the UE-TX and the UE-RX can be changed at an early stage, and occurrence of a delay in the SL communication can be reduced.

The UE-TX may report a resource configuration request or a resource change request for the SL communication between the UE-TX and the UE-RX to the S-UE. The UE-TX may report a scheduling request for the SL communication between the UE-TX and the UE-RX to the S-UE.

The UE-TX may report a resource configuration request or a resource change request for the SL communication between the UE-TX and the UE-RX to the gNB via the S-UE. The UE-TX may report a scheduling request for the SL communication between the UE-TX and the UE-RX to the gNB via the S-UE. These reports may be, for example, used when the node that performs the configuration of the resources is the gNB.

The UE-TX may report a resource configuration request or a resource change request for the SL communication between the UE-TX and the UE-RX to the CN node via the S-UE and the gNB. The UE-TX may report a scheduling request for the SL communication between the UE-TX and the UE-RX to the CN node via the S-UE and the gNB. These reports may be, for example, used when the node that performs the configuration of the resources is the CN node.

For example, when the UE-TX performs scheduling for the SL communication with the UE-RX by using the resource information, and when the UE-TX becomes unable to select resources for the scheduling due to congestion with the UE performing other SL communication, the UE-TX reports a change request. Such a resource congestion state maybe reported together with the resource change request or in the request. This can reduce a situation in which the SL communication becomes impracticable or is delayed due to congestion.

For example, the resource change request may be reported depending on the location of the UE-TX or the area in which the UE-TX is located. Location information or area information may be reported together with the resource change request or in the request. This is effective when resources to be used for each area are determined.

As described above, by maintaining the connection between the S-UE and the UE-TX even after the report of the resource information from the S-UE to the UE-TX, the resource configuration/change request and the scheduling request can be reported at an early stage. Therefore, the resources and scheduling for the SL communication between the UE-TX and the UE-RX can be configured or changed at an early stage, and occurrence of a delay in the SL communication can be reduced.

Further, by configuring a condition for releasing the connection between the S-UE and the UE-TX, unnecessary continuation of the connection between the S-UE and the UE-TX can be forestalled. Consequently, power consumption of the S-UE and the UE-TX can be reduced and resource use efficiency can be enhanced.

The above describes the method of maintaining the connection between the S-UE and the UE-TX even after the report of the resource information from the S-UE to the UE-TX. Here, another method will be disclosed. After the report of the resource information from the S-UE to the UE-TX, the connection between the S-UE and the UE-TX is released. A level of releasing the connection may be a level of releasing the PC5-S connection. In addition, the PC5-RRC connection may also be released. Due to the release of the PC5-RRC connection, the AS configuration between the S-UE and the UE-TX may be released. When the SL communication is needed between the S-UE and the UE-TX, the PC5-S connection and the PC5-RRC connection are performed again.

A level of releasing the connection may be a level of releasing the PC5-RRC connection with the PC5-S connection being maintained. Due to the release of the PC5-RRC connection, the AS configuration between the S-UE and the UE-TX may be released. When the SL communication is needed between the S-UE and the UE-TX, the PC5-RRC connection may be performed again. The SL communication can be performed between the S-UE and the UE-TX at an earlier stage.

The UE-TX may request reconnection when the SL communication is needed between the S-UE and the UE-TX. The UE-TX may start the reconnection between the S-UE and the UE-TX. For example, the UE-TX may start discovery processing for performing PC5 unicast communication with the S-UE. For example, in order to start the discovery processing, the UE-TX may transmit a solicitation message for soliciting the S-UE. At the time of the reconnection with the S-UE or after the reconnection, the UE-TX may report a resource configuration/modification request and a scheduling request for the SL communication between the UE-TX and the UE-RX to the S-UE.

The release of the connection between the S-UE and the UE-TX may be started by the UE-TX. For example, when the UE-TX receives the resource information for the SL communication with the UE-RX from the S-UE, the UE-TX may start the release of the connection between the S-UE and the UE-TX. As another method, for example, when the UE-TX establishes the PC5 connection with the UE-RX, the UE-TX may start the release of the connection between the S-UE and the UE-TX. With this configuration, the UE-TX can release the connection with the S-UE after becoming able to execute the SL communication with the UE-RX.

The release of the connection between the S-UE and the UE-TX may be started by the S-UE. The UE-TX may report the PC5 connection state information between the UE-TX and the UE-RX to the S-UE. The S-UE may determine the release of the connection between the S-UE and the UE-TX by using the PC5 connection state information between the UE-TX and the UE-RX reported from the UE-TX. For example, when the UE-TX transmits the PC5 connection state information (connection establishment) between the UE-TX and the UE-RX to the S-UE and the S-UE receives the information, the S-UE releases the connection with the UE-TX. With this configuration, the S-UE can recognize the state of the PC5 connection between the UE-TX and the UE-RX, and the S-UE can start the release of the connection between the S-UE and the UE-TX.

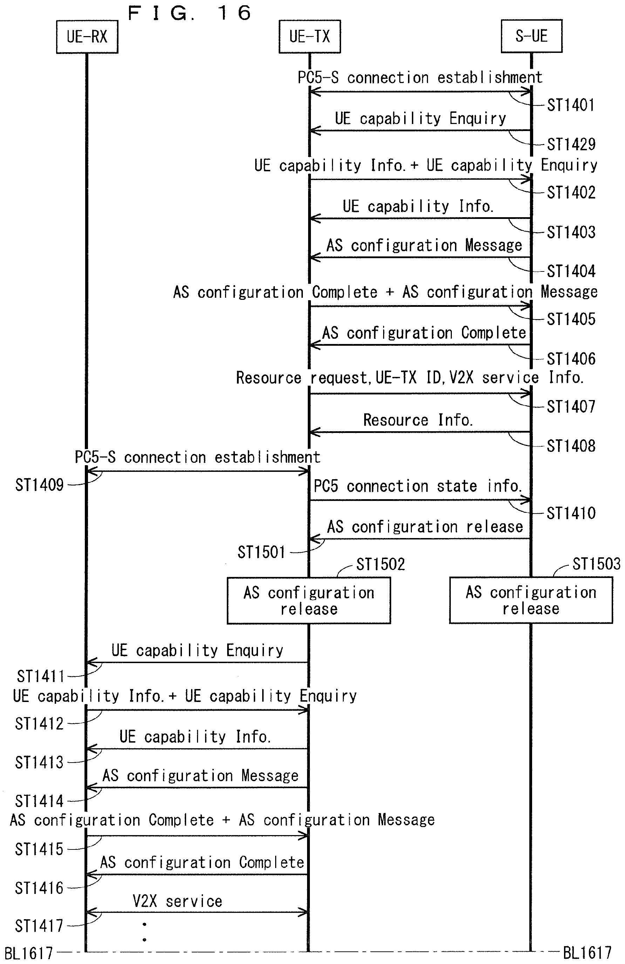

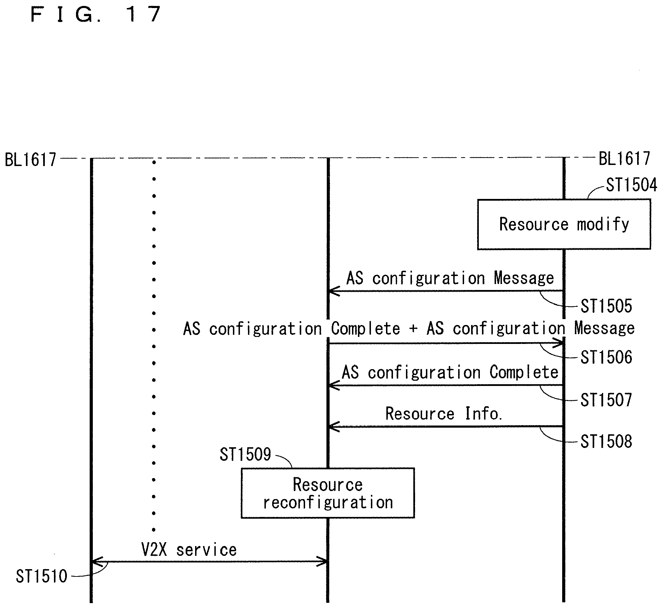

FIG. 16 and FIG. 17 are sequence diagrams illustrating an example of a method of releasing the connection between the S-UE and the UE-TX after the S-UE reports the resource information for the SL communication to the UE-TX according to the first embodiment. FIG. 16 and FIG. 17 are connected at the position of a boundary BL1617. In FIG. 16 and FIG. 17, steps common to those of FIG. 14 and FIG. 15 are denoted by the same step numbers, and common description will be omitted.

In Step ST1407, the UE-TX reports a resource request for the SL communication between the UE-TX and the UE-RX to the S-UE. In Step ST1408, the S-UE reports the resource information to the UE-TX. Although the S-UE may release the PC5 connection with the UE-TX immediately after the report of the resource information, an example of another method is herein illustrated.

The UE-TX that has received the resource information establishes the PC5-S connection with the UE-RX by using the resource information in Step ST1409.

The UE-TX that has established the PC5-S connection with the UE-RX reports the PC5 connection state information to the S-UE in Step ST1410. Here, information indicating that the PC5-S connection has been established between the UE-TX and the UE-RX may be included in the PC5 connection state information. The S-UE that has received the PC5 connection state information determines to release the PC5 connection between the S-UE and the UE-TX. Here, a release (connection) level of the PC5 connection is a level of releasing the AS configuration. It may be arranged that the PC5-S connection is not released.

In Step ST1501, the S-UE reports an AS configuration release request to the UE-TX. The S-UE may include information indicating the release (connection) level in the request to report the information. Here, the S-UE include information for requesting only the release of the AS configuration in the request to report the information. In Step ST1502, the UE-TX releases the AS configuration for the SL communication with the S-UE. Further, in Step ST1503, the S-UE releases the AS configuration for the SL communication with the UE-TX. With this configuration, when communication of V2X service data using the SL communication is performed between the UE-TX and the UE-RX in Step ST1417, the AS configuration between the S-UE and the UE-TX can be in a released state.

In Step ST1504, the S-UE determines change of the resource information for the SL communication between the UE-TX and the UE-RX. For example, the S-UE makes an adjustment so that resources used for the SL communication with another UE and resources for the SL communication between the UE-TX and the UE-RX do not collide with each other, and determines the change of the resources. For example, the change of the resources may be reported from the gNB to the S-UE. The S-UE may determine the change of the resources by using the change of the resource information received from the gNB. In Step ST1505 to Step ST1507, the S-UE and the UE-TX report the AS configuration to each other, and perform the AS configuration. In Step ST1508, the S-UE reports the changed resource information to the UE-TX.

When the UE-TX changes the AS configuration, the UE-TX may report the changed AS configuration to the UE-RX. The report may be applied when, for example, the UE-TX changes the AS configuration by using the changed resource information.

The UE-TX may report the changed resource information to the UE-RX. When the UE-RX changes the AS configuration, the UE-RX may report the changed AS configuration to the UE-TX. For example, when the UE-RX performs reception by using the changed resource information, the UE-RX may report the change of the AS configuration to the UE-TX.

In Step ST1509, the UE-TX reconfigures the resources for the SL communication with the UE-RX by using the resource information received from the S-UE. In Step ST1510, the UE-TX performs communication of V2X service data using the SL communication with the UE-RX by using the reconfigured resources.

After reporting the resource information to the UE-TX, the S-UE determines to release the PC5 connection between the S-UE and the UE-TX. The processing of Step ST1501 to Step ST1503 may be performed.

When the UE-TX receives the changed resource information from the S-UE, the UE-TX may report the PC5 connection state information to the S-UE. Here, the PC5 connection is not released due to the resource change, and thus information indicating that the PC5-S connection is established between the UE-TX and the UE-RX may be included in the PC5 connection state information. When the S-UE receives the PC5 connection state information from the UE-TX and recognizes that the PC5-S connection is established between the UE-TX and the UE-RX, the S-UE determines to release the PC5 connection between the S-UE and the UE-TX. The processing of Step ST1501 to Step ST1503 may be performed.

In this manner, by employing the method of releasing the connection between the S-UE and the UE-TX after the report of the resource information from the S-UE to the UE-TX, the resources used for the SL communication between the S-UE and the UE-TX can be released. Thus, use efficiency of the resources can be further enhanced.

The above describes the method of releasing the connection between the S-UE and the UE-TX after the report of the resource information from the S-UE to the UE-TX. Here, another method will be disclosed. After the report of the resource information from the S-UE to the UE-TX, the connection state between the S-UE and the UE-TX and the connection state between the UE-TX and the UE-RX are made independent of each other. The two connection states may be arranged not to synchronize with each other. For a level of connection or a level of releasing connection, the above-described method may be applied as appropriate.

The UE-TX may report the PC5 connection state information between the UE-TX and the UE-RX to the S-UE. When the connection state between the UE-TX and the UE-RX is changed, the UE-TX may report the PC5 connection state information. The UE-TX may report the PC5 connection state information between the S-UE and the UE-TX to the UE-RX. When the connection state between the S-UE and the UE-TX is changed, the PC5 connection state information may be reported.

With this configuration, the S-UE can recognize the connection state between the UE-TX and the UE-RX. Alternatively, the UE-RX can recognize the connection state between the S-UE and the UE-TX. For example, when the S-UE starts connection establishment processing or release processing between the S-UE and the UE-TX, the S-UE can determine whether or not to start the connection establishment processing or the release processing between the S-UE and the UE-TX by using the PC5 connection state information between the UE-TX and the UE-RX reported from the UE-TX. With this configuration, occurrence of inconsistency between the connection state between the S-UE and the UE-TX and the connection state between the UE-TX and the UE-RX can be forestalled.

As disclosed in the first embodiment, by clarifying the connection state between the S-UE and the UE-TX using the PC5 interface after the report of the resource information from the S-UE to the UE-TX, malfunction in processing between the S-UE and the UE-TX and processing between the UE-TX and the UE-RX can be reduced. This enables execution of stable SL communication in the configuration using the S-UE.

### First Modification of First Embodiment

In the configuration using the S-UE, due to movement of each of the S-UE, the UE-TX, and the UE-RX and change of a radio wave propagation environment, an RLF may occur only in the connection between the S-UE and the UE-TX, or only the connection between the S-UE and the UE-TX may be released. Alternatively, an RLF may occur only in the connection between the UE-TX and the UE-RX, or only the connection between the UE-TX and the UE-RX may be released. In such situations, when a relationship between the connection state between the S-UE and the UE-TX and the connection state between the UE-TX and the UE-RX is unclear, inconsistency may occur between processing between the S-UE and the UE-TX and processing between the UE-TX and the UE-RX, which may cause malfunction.

In the first modification of the first embodiment, a method for solving such a problem will be disclosed.

The PC5 connection between the S-UE and the UE-TX and the PC5 connection between the UE-TX and the UE-RX are synchronized with each other. The PC5 connection state between the UE-TX and the UE-RX is determined depending on the PC5 connection state between the S-UE and the UE-TX. For example, when the PC5 connection between the S-UE and the UE-TX is released, the PC5 connection between the UE-TX and the UE-RX is released. When the PC5 connection between the S-UE and the UE-TX is released, all of the PC5 connections between the UE-TX and the UE-RX may be released.

In the PC5 connection, for a level of connection or a level of releasing connection, the method disclosed in the first embodiment may be applied as appropriate.

When the PC5 connection between the S-UE and the UE-TX is disconnected instead of the PC5 connection release between the S-UE and the UE-TX, the above-described method may be applied. When an RLF is detected in the PC5 connection between the S-UE and the UE-TX instead of the PC5 connection release between the S-UE and the UE-TX, the above-described method may be applied. A combination of these may be employed.

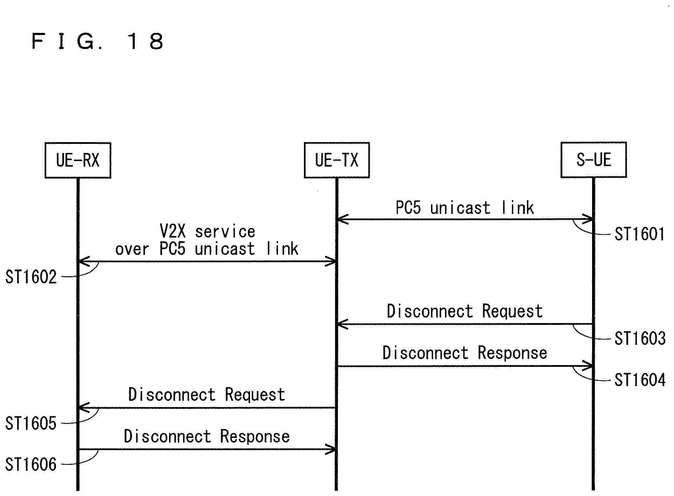

FIG. 18 is a sequence diagram illustrating an example of a method of releasing the PC5 connection between the UE-TX and the UE-RX when the PC5 connection between the S-UE and the UE-TX is released according to the first modification of the first embodiment. In Step ST1601, the PC5 connection is established between the S-UE and the UE-TX, and in Step ST1602, the PC5 connection is also established between the UE-TX and the UE-RX. In Step ST1601, the resource information for the SL communication between the UE-TX and the UE-RX is reported from the S-UE to the UE-TX. Further, in Step ST1602, V2X service data using the SL communication is communicated between the UE-TX and the UE-RX. In Step ST1601, even after the resource information is reported from the S-UE to the UE-TX, the connection is maintained between the S-UE and the UE-TX.

A case in which the S-UE releases the connection with the UE-TX will be disclosed. In Step ST1603, the S-UE requests the UE-TX to release the PC5 connection. A disconnect request message may be used. In Step ST1604, the UE-TX reports a response to the release request to the S-UE. A disconnect response message may be used. With this configuration, the PC5-S connection between the S-UE and the UE-TX is released. The PC5-S connection and the PC5-RRC connection between the S-UE and the UE-TX may be released. The AS configuration between the S-UE and the UE-TX may be released.

Information indicating certain PC5 connection may be included in a PC5 connection release request. This enables identification of the PC5 connection requesting the release when a plurality of PC5 connections are performed.

The UE-TX that has released the PC5 connection with the S-UE releases the PC5 connection with the UE-RX. In Step ST1605, the UE-TX requests the UE-RX to release the PC5 connection. In Step ST1606, the UE-RX reports a response to the release request to the UE-TX. With this configuration, the PC5-S connection between the UE-TX and the UE-RX is released. The PC5-S connection and the PC5-RRC connection between the UE-TX and the UE-RX may be released.

The response to the release request in Step ST1604 may be reported after the PC5 connection between the UE-TX and the UE-RX is released. After the UE-TX confirms that the PC5 connection with the UE-RX has been released in Step ST1606, the response to the release request may be reported to the S-UE. The S-UE can recognize that the release of the PC5 connection between the UE-TX and the UE-RX has been executed.

With this configuration, the PC5 connection state between the S-UE and the UE-TX and the PC5 connection state between the UE-TX and the UE-RX can synchronize with each other. When the PC5 connection between the S-UE and the UE-TX is released, the PC5 connection between the UE-TX and the UE-RX can be released.

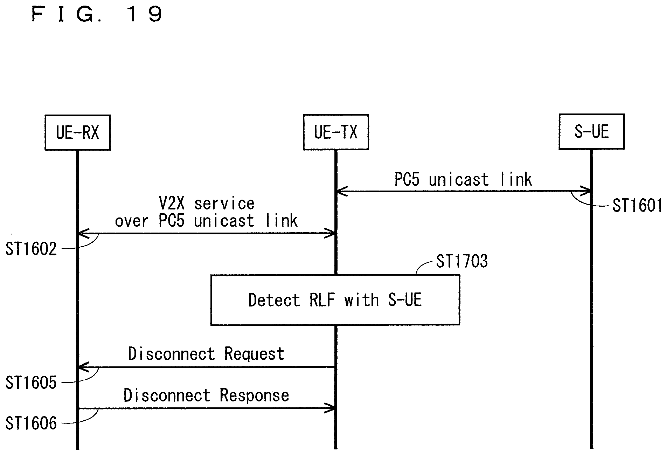

FIG. 19 is a sequence diagram illustrating an example of a method of releasing the PC5 connection between the UE-TX and the UE-RX when an RLF is detected in the PC5 connection between the S-UE and the UE-TX according to the first modification of the first embodiment. In FIG. 19, steps common to those of FIG. 18 are denoted by the same step numbers, and common description will be omitted. In Step ST1703, the UE-TX detects that an RLF has occurred in the PC5 connection between the S-UE and the UE-TX. The UE-TX that recognizes that the PC5 connection has become impracticable due to the detection of the RLF releases the PC5 connection with the UE-RX in Steps ST1605 and ST1606.

With this configuration, even when an RLF occurs in the PC5 connection between the S-UE and the UE-TX, the PC5 connection between the UE-TX and the UE-RX can be released.

Another method will be disclosed. The PC5 connection between the UE-TX and the UE-RX and the PC5 connection between the S-UE and the UE-TX are synchronized with each other. The PC5 connection state between the S-UE and the UE-TX is determined depending on the PC5 connection state between the UE-TX and the UE-RX. For example, when the PC5 connection between the UE-TX and the UE-RX is released, the PC5 connection between the S-UE and the UE-TX is released. When all of the PC5 connections between the UE-TX and the UE-RX are released, the PC5 connection between the S-UE and the UE-TX may be released.

In the PC5 connection, for a level of connection or a level of releasing connection, the method disclosed in the first embodiment may be applied as appropriate.

When the PC5 connection between the UE-TX and the UE-RX is disconnected instead of the PC5 connection release between the UE-TX and the UE-RX, the above-described method may be applied. When an RLF is detected in the PC5 connection between the UE-TX and the UE-RX instead of the PC5 connection release between the UE-TX and the UE-RX, the above-described method may be applied. A combination of these may be employed.

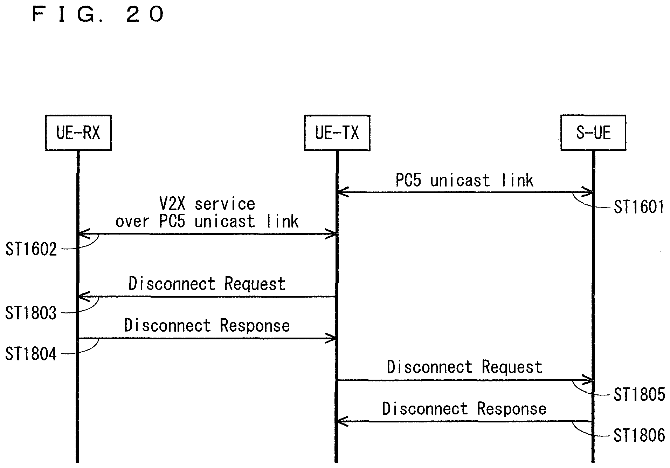

FIG. 20 is a sequence diagram illustrating an example of a method of releasing the PC5 connection between the S-UE and the UE-TX when the PC5 connection between the UE-TX and the UE-RX is released according to the first modification of the first embodiment. In FIG. 20, steps common to those of FIG. 18 are denoted by the same step numbers, and common description will be omitted.

The UE-TX determines to release the PC5 connection with the UE-RX. In Step ST1803 and Step ST1804, the UE-TX releases the PC5 connection with the UE-RX. The UE-TX that has released the PC5 connection with the UE-RX releases the PC5 connection with the S-UE. In Steps ST1805 and ST1806, the UE-TX releases the PC5 connection with the S-UE.

The UE-RX may determine to release the PC5 connection with the UE-TX. The UE-RX may request the UE-TX to release the PC5 connection. The UE-TX reports a response to the release request to the UE-RX. The UE-RX and the UE-TX release the PC5 connection between the UE-RX and the UE-TX. The UE-TX that has released the PC5 connection with the UE-RX releases the PC5 connection with the S-UE.

With this configuration, the PC5 connection state between the UE-TX and the UE-RX and the PC5 connection state between the S-UE and the UE-TX can synchronize with each other. When the PC5 connection between the UE-TX and the UE-RX is released, the PC5 connection between the S-UE and the UE-TX can be released.

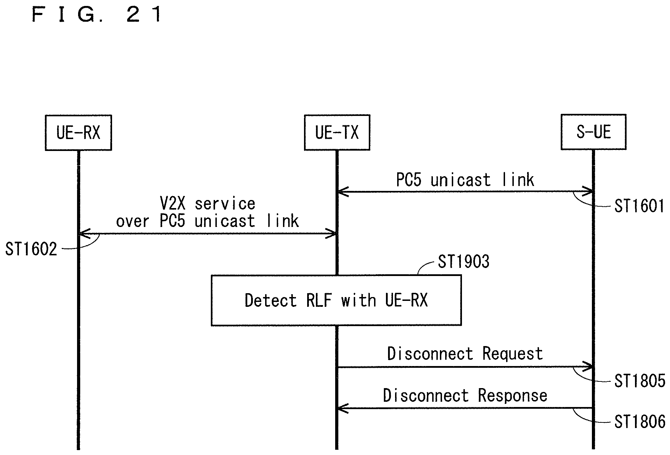

FIG. 21 is a sequence diagram illustrating an example of a method of releasing the PC5 connection between the S-UE and the UE-TX when an RLF is detected in the PC5 connection between the UE-TX and the UE-RX according to the first modification of the first embodiment. In FIG. 21, steps common to those of FIG. 20 are denoted by the same step numbers, and common description will be omitted. In Step ST1903, the UE-TX detects that an RLF has occurred in the PC5 connection between the UE-TX and the UE-RX. The UE-TX that recognizes that the PC5 connection has become impracticable due to the detection of the RLF releases the PC5 connection with the S-UE in Steps ST1805 and ST1806.

With this configuration, even when an RLF occurs in the PC5 connection between the UE-TX and the UE-RX, the PC5 connection between the S-UE and the UE-TX can be released.

The connection state between the S-UE and the UE-TX and the connection state between the UE-TX and the UE-RX may be made independent of each other. The two connection states may be arranged not to synchronize with each other. For a level of connection or a level of releasing connection, the method disclosed in the first embodiment may be applied as appropriate. By determining not to allow the synchronization in advance, each UE can recognize that connection or release processing between the S-UE and the UE-TX and connection or release processing between the UE-TX and the S-UE are performed independently of each other. Thus, occurrence of inconsistency can be reduced.

When the connection between the S-UE and the UE-TX is released and the connection between the UE-TX and the UE-RX is maintained, the resources for the SL communication are needed between the UE-TX and the UE-RX. As the resources for the SL communication, the method disclosed in the second modification of the first embodiment may be applied as appropriate.

Further, when the connection between the S-UE and the UE-TX is released, the UE-TX may perform reselection of the S-UE. The reselection may be performed independently of the connection between the UE-TX and the UE-RX. After establishing the PC5 connection with the reselected S-UE, the UE-TX may perform configuration or change of the resources between the UE-TX and the UE-RX by using the resource information reported from the S-UE. With this configuration, the connection between the UE-TX and the UE-RX is maintained, and data communication of the V2X service can be performed.

Further, when the connection between the S-UE and the UE-TX is released, the UE-TX may select the gNB. The selection may be performed independently of the connection between the UE-TX and the UE-RX. After establishing the connection with the selected gNB, the UE-TX may perform configuration or change of the resources between the UE-TX and the UE-RX by using the resource information reported from the gNB. With this configuration, the connection between the UE-TX and the UE-RX is maintained, and data communication of the V2X service can be performed.

Further, when the connection between the S-UE and the UE-TX is released and the UE-TX cannot connect with the S-UE and the gNB, the UE-TX may perform configuration or change the resources between the UE-TX and the UE-RX by using the resources configured in advance. With this configuration, the connection between the UE-TX and the UE-RX is maintained, and data communication of the V2X service can be performed.

In the method disclosed in the first modification of the first embodiment, the method disclosed in the first embodiment may be applied as appropriate. For example, the method in which the UE-TX reports the PC5 connection state information between the UE-TX and the UE-RX to the S-UE and the method in which the UE-TX reports the PC5 connection state information between the S-UE and the UE-TX to the UE-RX may be applied as appropriate. Effects similar to those of the first embodiment can be achieved.

For example, as the method of making the connection state between the S-UE and the UE-TX and the connection state between the UE-TX and the UE-RX independent of each other, the PC5 connection state information may be applied. The UE-TX reports the PC5 connection state information between the UE-TX and the UE-RX to the S-UE. With this configuration, even if the connection state between the UE-TX and the UE-RX is independent of the connection state between the S-UE and the UE-TX, the S-UE can recognize the connection state between the UE-TX and the UE-RX. For example, when the connection between the UE-TX and the UE-RX is released or disconnected, the S-UE can recognize this state, so as not to report the resource information between the UE-TX and the UE-RX to the UE-TX.

By employing the method disclosed in the first modification of the first embodiment, malfunction in processing between the S-UE and the UE-TX and processing between the UE-TX and the UE-RX can be reduced. This enables execution of stable SL communication in the configuration using the S-UE. Further, in the S-UE, the UE-TX, and the UE-RX, unnecessary connection need no longer be maintained. Thus, power consumption of each node can be reduced. In addition, use efficiency of the resources used for the SL communication between the S-UE and the UE-TX and the SL communication between the UE-TX and the S-UE can be enhanced.

### Second Modification of First Embodiment

The first embodiment describes that the S-UE may report a resource pool to the UE-TX as the resource information. When the UE-TX cannot connect with the S-UE, for example, the connection between the S-UE and the UE-TX as disclosed in the first modification of the first embodiment is released; however, when the connection between the UE-TX and the UE-RX is maintained, it is unclear which RP may be used by the UE-TX for the SL communication with the UE-RX. Thus, the UE-TX may become unable to select the resources for the SL communication and perform the SL communication.

In the second modification of the first embodiment, a method for solving such a problem will be disclosed.

When the connection between the S-UE and the UE-TX is no longer maintained although the connection between the UE-TX and the UE-RX is maintained, the RP used for the SL communication between the UE-TX and the UE-RX is configured in advance. The RP may be statically determined in a standard or the like. Alternatively, the node that configures the RP, such as the CN-side node, the gNB, and the S-UE, may report RP configuration to the UE-TX in advance. While the connection between the S-UE and the UE-TX is established, the S-UE may report the RP configuration to the UE-TX in advance. When the connection between the S-UE and the UE-TX is no longer maintained although the connection between the UE-TX and the UE-RX is maintained, the UE-TX uses the RP configuration for the SL communication between the UE-TX and the UE-RX. When connection between the CN-side node and the UE-TX and connection between the gNB and the UE-TX are no longer maintained although the connection between the UE-TX and the UE-RX is maintained, the UE-TX may use the RP configuration for the SL communication between the UE-TX and the UE-RX.

As another method, the RP configuration may be configured in the UE-TX in advance. The RP configuration may be configured in a (U) SIM of the UE-TX in advance. When the connection between the S-UE and the UE-TX is no longer maintained although the connection between the UE-TX and the UE-RX is maintained, the UE-TX uses the RP configuration for the SL communication between the UE-TX and the UE-RX. By configuring in the UE-TX in advance, signaling required for the RP configuration can be reduced.

As another method, an exceptional RP may be configured. The S-UE may configure the exceptional RP used for the SL communication between the UE-TX and the UE-RX, and report the exceptional RP to the UE-TX. Alternatively, the CN-side node or the gNB may configure the exceptional RP, and report the exceptional RP to the UE-TX. The exceptional RP may be configured separately from the RP used when the connection between the S-UE and the UE-TX is maintained. When the connection between the S-UE and the UE-TX is no longer maintained although the connection between the UE-TX and the UE-RX is maintained, the UE-TX uses the exceptional RP configuration for the SL communication between the UE-TX and the UE-RX.

When the connection between the S-UE and the UE-TX is no longer maintained, the above-described RP configuration may be used for the SL communication between the UE-TX and the UE-RX until the UE-TX connects to the next connection destination and the next connection destination configures a new RP.

As specific examples of situations in which the connection between the S-UE and the UE-TX is no longer maintained, the following (1) to (7) are disclosed.
(1) Release of PC5 connection between the S-UE and the UE-TX.
(2) RLF detection between the UE-TX and the S-UE.
(3) Start of change processing of the S-UE connected by the UE-TX.
(4) Start of change processing of the gNB connected by the S-UE.
(5) Case in which a distance between the S-UE and the UE-TX exceeds a predetermined value.
(6) Case in which an area (zone) in which the UE-TX is located changes.
(7) Combination of (1) to (6).

Regarding (1) above, as a connection level in the release of the PC5 connection, the level disclosed in the first embodiment may be applied as appropriate.

(2) above may be a case in which the UE-TX detects an RLF between the UE-TX and the S-UE.

(3) above may be a case in which the UE-TX starts the change processing of the S-UE connected. Alternatively, the change processing of the S-UE connected by the UE-TX may be started by another node different from the UE-TX. Instead of the change processing of the S-UE connected, reconnection processing of the S-UE including another S-UE may be performed.

(4) above may be a case in which the S-UE starts the change processing of the gNB connected. Alternatively, the change processing of the gNB connected by the S-UE may be started by another node different from the S-UE. Instead of the change processing of the gNB connected, reconnection processing of the gNB including another gNB may be performed. The change processing and/or the reconnection processing may be started when the S-UE exits coverage of the gNB. The change processing and/or the reconnection processing may be started when the S-UE fails in reconnection with the gNB and there is no gNB to be connected with.

The predetermined value of (5) above may be a distance required for the SL communication between the S-UE and the UE-TX. The distance of (5) above may be a range being one parameter of QoS. The predetermined value may be reported from the node that configures the RP to the UE-TX in advance. Alternatively, the predetermined value may be configured for the UE-TX in advance.

Regarding (6) above, the UE-TX may perform location measurement, and determine the area (zone) in which the UE-TX is located. A configuration of the area (zone) may be reported from the node that configures the RP to the UE-TX in advance. Alternatively, the configuration of the area (zone) may be configured for the UE-TX in advance.

By employing the method disclosed in the second modification of the first embodiment, even when the UE-TX becomes unable to connect to the S-UE, the UE-TX can select the resources for the SL communication between the UE-TX and the UE-RX, and can perform the SL communication between the UE-TX and the UE-RX. The PC5 connection between the UE-TX and the UE-RX can be maintained.

### Second Embodiment

For example, when a pedestrian and a vehicle perform the SL communication, reduction of power consumption of the UE for the pedestrian is required because battery capacity of the UE possessed by the pedestrian is limited. Further, for example, also when the SL communication is performed between wearable devices and between small-sized robots operating in a factory and a specific area, reduction of power consumption is required because battery capacity of the UE installed therein is limited. As described above, reduction of power consumption may be required for the UE that performs the SL communication.

As reduction of power consumption of the UE that performs the SL communication, DRX in the SL of LTE is proposed (see Non-Patent Document 26). However, in such a conventional method of DRX, no disclosure is made regarding a case in which a plurality of services and PC5 connections are performed between opposite UEs and a case in which the SL communication is performed between a plurality of opposite UEs. Further, no disclosure is made regarding a method of DRX in unicast communication in the SL, which is supported in NR. Thus, with the conventional method, DRX in the cases described above cannot be performed, and there is a problem that power consumption of the UE that performs the SL communication cannot be reduced.

In the second embodiment, a method for solving such a problem will be disclosed.

DRX is configured for each opposite UE that performs the SL communication. The UE-TX may perform a DRX configuration. The UE-TX may report the DRX configuration to the UE-RX. A node that configures DRX (which may be hereinafter referred to as a DRX configuration node) may be the UE-RX. The UE-RX may report the DRX configuration to the UE-TX. The DRX configuration node may be the gNB. Alternatively, in a case of the configuration using the S-UE, the DRX configuration node may be the S-UE. The gNB or the S-UE may report the DRX configuration to the UE-TX and the UE-RX.

When the UE-TX performs the DRX configuration, DRX configuration results, for example, DRX configuration information, may be reported to the gNB. When the UE-TX is connected to the S-UE, the DRX configuration results may be reported to the S-UE. When the S-UE performs the DRX configuration, the DRX configuration results may be reported to the gNB. The gNB and the S-UE can adjust resources allocated for another UE that performs the SL communication. This can reduce collision with the resources used for the SL communication of another UE.

When the UE-TX is not connected to the gNB and is in an RRC_Idle state, in an RRC_Inactive state, or out of coverage, the UE-TX may perform the DRX configuration, whereas when the UE-TX is connected to the gNB and is in an RRC_connected state, the gNB may perform the DRX configuration. When the UE-TX is not connected to the gNB and is in an RRC_Idle state, in an RRC_Inactive state, or out of coverage, and is connected to the S-UE, the S-UE may perform the DRX configuration. The DRX configuration can be performed regardless of the state of the UE-TX.

As the method of reporting the DRX configuration between the UE-TX and the UE-RX, the method of reporting the resource information between the S-UE and the UE-TX disclosed in the first embodiment may be applied as appropriate. "Between the S-UE and the UE-TX" may be replaced by "between the UE-TX and the UE-RX" or "between the UE-RX and the UE-TX".

An identifier for identifying the DRX configuration may be provided. The DRX configuration and a DRX configuration identifier may be associated. A node that configures DRX (which may be hereinafter referred to as a DRX configuration node) may associate the DRX configuration with the DRX configuration identifier, and report to a node configured with DRX (which may be hereinafter referred to as a DRX configured node). With this configuration, when a plurality of DRX configurations are performed for the UE that performs the SL communication as will be described later, for example, the UE that performs the SL communication can determine which DRX configuration is to be used.

With this configuration, DRX can be configured for each opposite UE that performs the SL communication. Even if a plurality of applications (which may be services) and PC5 connections are performed between opposite UEs, by configuring DRX for each opposite UE that performs the SL communication, time in which transmission and reception is turned active (on) can be integrated for each opposite UE. Thus, power consumption of the UE can be reduced.

One UE may perform the SL communication with a plurality of UEs. In such a case as well, DRX may be configured for each opposite UE. In such a case, the DRX configuration may be associated with a layer 2 ID (L2ID). A destination L2ID and the DRX configuration may be associated. A source L2ID and the DRX configuration may be associated. Alternatively, both of these L2IDs and the DRX configuration may be associated.

The DRX configuration is associated with the L2ID, and the DRX configuration is reported between the UE-TX and the UE-RX in each SL communication. With this configuration, the UE that performs the SL communication with a plurality of UEs can identify the DRX configuration in the SL communication with a certain UE. In DRX of a case in which one UE performs the SL communication with a plurality of UEs, occurrence of malfunction can be reduced.

Another DRX configuration method will be disclosed. DRX may be configured for each application in the SL communication. An identifier for identifying the application may be associated with the DRX configuration. The DRX configuration is associated with the application identifier, and the DRX configuration is reported between the UE-TX and the UE-RX. With this configuration, the UE that performs the SL communication can identify the DRX configuration for the application. For example, when a plurality of applications are executed in a pair of opposite UEs, the DRX configuration for each application can be performed. The DRX configuration appropriate for a communication pattern of each application can be performed.

DRX may be configured for each PC5 connection in the SL communication. For example, DRX is configured for each PC5-S connection. Alternatively, DRX may be configured for each L2 link. An identifier for identifying the PC5 connection may be associated with the DRX configuration. The DRX configuration is associated with the PC5 connection identifier, and the DRX configuration is reported between the UE-TX and the UE-RX. Alternatively, the DRX configuration is reported between the UE-TX and the UE-RX by using signaling at the time of PC5-S connection establishment. With this configuration, the UE that performs the SL communication can identify the DRX configuration for the PC5 connection. For example, when a plurality of PC5 connections are executed in a pair of opposite UEs, the DRX configuration for each PC5 connection can be performed. The DRX configuration appropriate for each PC5 connection can be performed.

DRX may be configured for each PC5-RRC connection in the SL communication. An identifier for identifying the PC5-RRC connection may be associated with the DRX configuration. The DRX configuration is associated with the PC5-RRC connection identifier, and the DRX configuration is reported between the UE-TX and the UE-RX. Alternatively, the DRX configuration is reported between the UE-TX and the UE-RX by using signaling at the time of PC5-RRC connection. With this configuration, the UE that performs the SL communication can identify the DRX configuration for the PC5-RRC connection. For example, when a plurality of PC5-RRC connections are executed in a pair of opposite UEs, the DRX configuration for each PC5-RRC connection can be performed. The DRX configuration appropriate for each PC5-RRC connection can be performed.

DRX may be configured for each AS configuration. An identifier for identifying the AS configuration may be associated with the DRX configuration. The DRX configuration is associated with the AS configuration identifier, and the DRX configuration is reported between the UE-TX and the UE-RX. Alternatively, the DRX configuration is reported between the UE-TX and the UE-RX by using the PC5-RRC signaling for the AS configuration. The DRX configuration may be included in the AS configuration to be reported. With this configuration, the UE that performs the SL communication can identify the DRX configuration for the AS configuration. For example, when a plurality of AS configurations are executed in a pair of opposite UEs, the DRX configuration for each AS configuration can be performed. The DRX configuration appropriate for each AS configuration can be performed.

DRX may be configured for each QoS flow of PC5. An identifier for identifying the QoS flow of PC5 may be associated with the DRX configuration. The DRX configuration may be associated with the QoS flow identifier of PC5, and the DRX configuration is reported between the UE-TX and the UE-RX. Alternatively, the DRX configuration is reported between the UE-TX and the UE-RX by using signaling for QoS flow configuration of PC5. With this configuration, the UE that performs the SL communication can identify the DRX configuration for the QoS flow of PC5. For example, when a plurality of QoS flows of PC5 are executed in a pair of opposite UEs, the DRX configuration for each QoS flow of PC5 can be performed. The DRX configuration appropriate for each QoS flow of PC5 can be performed.

DRX may be configured for each radio bearer of the SL. The radio bearer may be an SRB, may be a DRB, or may be a combination of an SRB and a DRB. An identifier for identifying the radio bearer may be associated with the DRX configuration. The DRX configuration is associated with the radio bearer identifier, and the DRX configuration is reported between the UE-TX and the UE-RX. Alternatively, the DRX configuration is reported between the UE-TX and the UE-RX by using the PC5-RRC signaling for radio bearer configuration. The radio bearer configuration and the DRX configuration may be included in the AS configuration to be reported. With this configuration, the UE that performs the SL communication can identify the DRX configuration for the radio bearer. For example, when a plurality of radio bearers are configured in a pair of opposite UEs, the DRX configuration for each radio bearer can be performed. The DRX configuration appropriate for each radio bearer can be performed.

DRX may be configured for each RLC bearer of the SL. An identifier for identifying the RLC bearer may be associated with the DRX configuration. The DRX configuration is associated with the RLC bearer identifier, and the DRX configuration is reported between the UE-TX and the UE-RX. Alternatively, the DRX configuration is reported between the UE-TX and the UE-RX by using the PC5-RRC signaling for RLC bearer configuration. The RLC bearer configuration and the DRX configuration may be included in the AS configuration to be reported. With this configuration, the UE that performs the SL communication can identify the DRX configuration for the RLC bearer. For example, when a plurality of RLC bearers are configured in a pair of opposite UEs, the DRX configuration for each RLC bearer can be performed. The DRX configuration appropriate for each RLC bearer can be performed.

For example, in a communication method in which a plurality of RLC bearers are configured between opposite UEs that perform the SL communication and duplicated packets are transmitted via the plurality of RLC bearers, by applying the DRX configuration for each RLC bearer, the DRX configuration depending on a communication state of each connection can be performed. Consequently, reliability of communication can be enhanced and a delay can be reduced.

The number of DRX configurations described above may not necessarily be limited to one and may be more than one. Various communication patterns and QoS required for a service can be supported.

A plurality of DRX configurations may be synchronized with each other. For example, two DRX configurations of DRX of a long cycle and DRX of a short cycle are synchronized with each other. For example, the cycle of long cycle DRX is set to n times (n is a positive integer) as large as that of DRX of a short cycle. Offsets of both the DRXs may be set to the same. As a synchronization method, for example, the UE monitors at long cycle DRX timing, and when there is reception data, the UE transitions to DRX of a short cycle. The UE monitors DRX timing of a short cycle, and when there is reception data, the UE receives the data. The UE monitors at DRX timing of a short cycle, and when there is no reception data a predetermined number of times consecutively, the UE transitions to long cycle DRX.

With this configuration, when transmission and reception of data is unnecessary, transition to long cycle DRX is caused, and thus power consumption of the reception UE can be further reduced. Further, resources necessary for DRX can be resources necessary for short cycle DRX, and thus increase of use resources due to a plurality of DRX configurations can be avoided.

The offset of long cycle DRX and the offset of short cycle DRX may be made different from each other. For example, the offset of the long cycle may be provided so as to be predetermined time before the offset of short cycle DRX. As a synchronization method, for example, the UE monitors at long cycle DRX timing, and when there is reception data, the UE transitions to short cycle DRX having an offset after predetermined time. The UE monitors at short cycle DRX timing, and when there is reception data, the UE receives the data. The UE monitors at DRX timing of the short cycle, and when there is no reception data a predetermined number of times consecutively, the UE transitions to long cycle DRX.

With this configuration, similarly to the above-described method, when transmission and reception of data is unnecessary, transition to long cycle DRX is caused, and thus power consumption of the reception UE can be further reduced.

Transmission and reception of data in long cycle DRX may be eliminated. Information indicating presence or absence of transmission and reception data may be transmitted and received in DRX of the long cycle. Instead of the information indicating presence or absence of transmission and reception data, information indicating transition to short cycle DRX may be used. Alternatively, information indicating monitoring at the short cycle DRX timing may be used.

A channel or a signal for transmission of the transmission and reception data presence or absence information may be provided. A configuration of the channel or the signal may be configured in advance. The channel or the signal may be, for example, configured using a frequency resource, a time resource, a sequence, or a combination of a part or all of the above. With this configuration, the channel or the signal can be identified. When the reception UE receives the channel or the signal of the configuration at the timing of long cycle DRX, the reception UE can determine that there is transmission and reception data. The reception UE can transition to short cycle DRX, and receive data.

With this configuration, similarly to the above description, when transmission and reception of data is unnecessary, transition to long cycle DRX is caused, and thus power consumption of the reception UE can be further reduced. Further, since data transmission and reception is not performed in long cycle DRX, resources used for long cycle DRX can be reduced.

Configuration information necessary for synchronization of a plurality of DRX configurations, such as the value of n, the predetermined number of times, an offset difference (predetermined time) of each DRX, and the configuration information of the channel or the signal for transmission of the transmission and reception data presence or absence information, may be configured in advance. The configuration information necessary for synchronization of a plurality of DRX configurations may be statically determined in advance in a standard or the like. Alternatively, the configuration information necessary for synchronization of a plurality of DRX configurations may be reported from the DRX configuration node to the DRX configured node. The configuration information necessary for synchronization of a plurality of DRX configurations may be included in the DRX configuration information.

In this manner, by synchronizing a plurality of DRX configurations, power consumption of the UE can be further reduced. Further, use efficiency of the resources used for the SL communication can be further enhanced.

In the unicast communication of the SL of NR, feedback transmission of the Ack/Nack of the HARQ is introduced. In a case of a HARQ Nack, retransmission is performed. In the SL communication, when DRX is configured between the UE-TX and the UE-RX, a retransmission method in a case of occurrence of a HARQ Nack poses a problem. Here, the retransmission method in a case of occurrence of a HARQ Nack will be disclosed.

DRX for the SL communication is applied to initial transmission and retransmission of data of the SL communication. The UE-TX performs transmission operation of initial transmission data and retransmission data of the SL communication at transmission timing of DRX configured for the SL communication. The UE-RX performs reception operation of initial transmission data and retransmission data of the SL communication at reception timing of DRX configured for the SL communication.

As the transmission and reception timing of DRX, on duration time, or on duration time and inactivity timer time may be used. Retransmission timer time in the DRX configuration information may not be provided. By performing retransmission at the transmission and reception timing of DRX, the retransmission can be performed without provision of the retransmission timer time.

When the UE-RX fails in reception of the initial transmission data transmitted at the transmission timing of DRX for the SL communication from the UE-TX, the UE-RX transmits a Nack of the SL communication to the UE-TX. When the UE-TX receives the Nack of the SL communication from the UE-RX, the UE-TX performs retransmission of the SL communication. The UE-TX performs the retransmission at the transmission timing of DRX for the SL communication. The UE-TX may transmit the retransmission data together with the next initial transmission data of the SL communication at the same transmission timing of DRX for the SL communication. As a method of multiplexing the retransmission data and the next initial transmission data in the SL communication, time multiplexing, frequency multiplexing, and code multiplexing can be used. The UE-RX performs reception operation for the retransmission of the SL communication from the UE-TX at the reception timing configured in DRX for the SL communication. With this configuration, the UE-RX can receive retransmission data of the SL communication from the UE-TX.

By transmitting retransmission data of the SL communication at the transmission timing of DRX for the SL communication, resources for other SL communication need no longer be used. For example, resources for the retransmission timer time configured for retransmission in Uu need no longer be retained. Thus, use efficiency of the resources for the SL communication can be enhanced. Further, the UE-TX need no longer select other resources used for retransmission data transmission of the SL communication. Thus, power consumption of the UE-TX can be reduced. Further, it is only necessary that the UE-RX perform reception operation at the reception timing of DRX for the SL communication, and need no longer perform reception operation for monitoring resources for other SL communication. Thus, power consumption of the UE-RX can be reduced.

When DRX for the SL communication is applied to initial transmission and retransmission of data of the SL communication, the retransmission is suspended until the next transmission timing. When the cycle of the transmission timing of DRX for the SL communication is long, retransmission of the SL communication takes time, which causes a delay. A method for solving such a problem will be disclosed.

Time before retransmission may be configured at intervals different from those of the configured DRX cycle. The UE-TX performs retransmission at the retransmission timing. The UE-RX performs reception at the retransmission timing. Such a different interval may be configured to n times (n is a natural number) as large as the configured DRX cycle. For example, n = 2 is configured. When the DRX cycle is 1 s, the interval before retransmission is 2 s. When the UE-RX fails in reception in initial transmission and transmits a Nack, the UE-RX starts reception of retransmission in DRX on duration time after the elapse of 2 s.

With this configuration, new resources for retransmission in the SL communication need no longer be selected or retained. Further, when the interval of the DRX cycle is short, it is highly likely that transmission and reception fails even if retransmission is performed in the next DRX cycle. By configuring the time for retransmission at intervals different from those of the configured DRX cycle, such failure of transmission and reception can be reduced.

The retransmission timing may be configured depending on the configured DRX cycle. For example, when the DRX cycle is 20 ms or less, the interval before retransmission is set to 1 s. When the DRX cycle is 20 ms or longer and 1 s or less, the interval before retransmission is set to 3 s. When the DRX cycle is longer than 1 s, the interval before retransmission is set to 15 s. This enables flexible configuration of the retransmission timing depending on the DRX cycle.

The retransmission timing may be configured depending on how many times of retransmission are performed. For example, when the DRX cycle is 10 ms, the interval before the first retransmission is set to 20 ms, and the interval before the second retransmission is se to 40 ms. For example, if the number of times of retransmission is represented by m, the interval before the next retransmission may be set to n × m times as large as the DRX cycle. With this configuration, the retransmission timing can be changed depending on the number of times of failure of transmission and reception, and failure of transmission and reception can be reduced.

A plurality of retransmissions may be performed in the on duration time or in the on duration time and the inactivity timer time. The number of times of retransmission may be determined in advance, or may be configured. For example, when the DRX cycle is 10 ms, and n = 1, the number of times of retransmission is 2. In this case, the interval before retransmission is 10 ms, and thus two times of retransmission are performed in the on duration time or in the on duration time and the inactivity timer time after the elapse of 10 ms from the initial transmission. The retransmission data may be the same. The Ack/Nack of the HARQ may be performed for all of the reception results of the plurality of retransmissions. With this configuration, in the UE-RX, success probability of reception of the retransmitted data can be enhanced.

The plurality of retransmissions may be performed in a plurality of DRX on duration times. The number of times of retransmission may be determined in advance, or may be configured. The retransmissions may be performed in a plurality of consecutive DRX on duration times. For example, when the DRX cycle is 10 ms, the interval before retransmission is set to 10 ms, and the number of times of consecutive retransmission is set to 3. In this case, retransmission data is consecutively transmitted in the on duration times after the elapse of 10 ms, 20 ms, and 30 ms from the initial transmission. The retransmission data may be the same. The Ack/Nack of the HARQ may be performed for all of the reception results of the plurality of retransmissions. With this configuration, in the UE-RX, success probability of reception of the retransmitted data can be enhanced.

In the method described above, although the on duration time is described as the timing of retransmission, a combination of the on duration time and the inactivity timer time may be used.

The initial transmission may be transmitted before the retransmission is transmitted. The initial transmission of different HARQ processes may be transmitted. With this configuration, resources retained in DRX other than the timing at which the retransmission is performed can be effectively used.

DRX for the SL communication is applied only to the initial transmission of data of the SL communication. The UE-TX performs the transmission operation of the initial transmission data of the SL communication at the transmission timing of DRX configured for the SL communication. The UE-RX performs the reception operation of initial transmission data of the SL communication at the reception timing of DRX configured for the SL communication.

DRX for the SL communication is not applied to the retransmission of data of the SL communication. The UE-TX does not perform retransmission in the resources for transmission of DRX configured for the SL communication. The UE-TX performs search and selection of resources for the SL communication for retransmission data transmission of the SL communication. The UE-TX performs retransmission of the SL communication by using the selected resources for the SL communication.

When the UE-RX fails in reception of the initial transmission data transmitted at the transmission timing of DRX for the SL communication from the UE-TX, the UE-RX transmits a Nack of the SL communication to the UE-TX. When the UE-TX receives the Nack of the SL communication from the UE-RX, the UE-TX performs retransmission of the SL communication. The UE-TX performs search and selection of resources for the SL communication, and performs retransmission of the SL communication by using the selected resources. When the UE-RX transmits a Nack of the SL communication to the UE-TX, the UE-RX monitors resources for the SL communication which are not the received resources of configured DRX, and detects and receives data transmitted to the UE-RX from the UE-TX.

The retransmission timer time in the DRX configuration information may be provided. Retransmission of data of the SL communication may be performed in the retransmission timer time. This allows retransmission even when DRX is configured without provision of the retransmission timer time. In this manner, by configuring specific time using a retransmission timer, the UE-RX performs reception only in the retransmission timer time regarding retransmission. After the retransmission timer expires, the UE-RX may sleep. The UE-RX may sleep until the start of the next DRX on duration time.

By transmitting and receiving retransmission of the SL communication as described above, retransmission data can be transmitted and received between the UE-TX and the UE-RX without the need of waiting until the next DRX transmission and reception timing. This can reduce occurrence of a delay in retransmission of the SL communication, and thus the SL communication can be performed with a low delay. Further, the initial transmission is transmitted and received using the DRX configuration, and thus power consumption of the UE-TX and the UE-RX can be reduced.

DRX for retransmission may be configured. Resources different from those of DRX for initial transmission may be configured. The retransmission is performed in the on duration time or in the on duration time and the inactivity timer time of DRX for retransmission. For example, the offsets are made to differ between DRX for initial transmission and DRX for retransmission, and other configurations of the DRX configuration information are made the same. The retransmission timing corresponding to each initial transmission timing may be configured. With this configuration, the timing of the initial transmission and the timing of the retransmission can be individually configured with the same DRX cycle, which eliminates the need of using the same DRX on duration time for the initial transmission and the retransmission. Further, overlap of the initial transmission and the retransmission in the same resources can be avoided. The initial transmission and the retransmission can be performed at an early stage, and thus delay time in the SL communication can be reduced.

The retransmission methods and the various configurations for retransmission described above may be determined in advance in a standard or the like. The amount of signaling necessary for retransmission can be reduced. The configuration may be performed by the gNB. The gNB reports the configuration to the UE-TX or the UE-RX. The configuration may be performed by the S-UE. This is effective when the S-UE is employed. The S-UE reports the configuration to the UE-TX or the UE-RX. The configuration may be performed by the UE-TX. The UE-TX reports the configuration to the UE-RX.

When the UE-TX is not connected to the gNB and is in an RRC_Idle state, in an RRC_Inactive state, or out of coverage, the UE-TX may perform retransmission configuration, whereas when the UE-TX is connected to the gNB and is in an RRC_connected state, the gNB may perform the retransmission configuration. When the UE-TX is not connected to the gNB and in an RRC_Idle state, in an RRC_Inactive state, or is out of coverage, the S-UE may perform the retransmission configuration. The retransmission configuration can be performed regardless of the state of the UE-TX.

As the signaling for the retransmission configuration from the UE-TX to the UE-RX, the PC5-RRC signaling may be used. The DRX configuration may be performed in the RRC layer of the UE, and the retransmission configuration may also be performed in the RRC layer. The DRX configuration and the retransmission configuration can be configured in the same layer, and thus occurrence of malfunction can be reduced. As the signaling for the retransmission configuration from the UE-TX to the UE-RX, the MAC signaling may be used. The retransmission configuration may be performed in the MAC layer of the UE. Retransmission can be configured depending on HARQ processing in the MAC layer. As the signaling for the retransmission configuration from the UE-TX to the UE-RX, the retransmission configuration may be included in the SCI to be reported on the PSCCH. The retransmission configuration may be included in the SCI of the initial transmission to be reported. The retransmission configuration can be dynamically changed, and thus optimal configuration can be performed depending on a communication state such as communication quality.

When the UE-TX performs the retransmission configuration, retransmission configuration results may be reported to the gNB. When the UE-TX is connected to the S-UE, the retransmission configuration results may be reported to the S-UE. When the S-UE performs the retransmission configuration, the retransmission configuration results may be reported to the gNB. The gNB and the S-UE can adjust resources allocated for another UE that performs the SL communication. This can reduce collision with the resources used for the SL communication of another UE.

A DRX configuration request may be provided. The DRX configuration request may be reported from the node configured with DRX (DRX configured node) to the node that configures DRX (DRX configuration node). For example, the DRX configured node may be the UE-RX, and the DRX configuration node may be the UE-TX. In this case, the UE-RX reports the DRX configuration request to the UE-TX. For example, the DRX configuration node may be the S-UE. In this case, the UE-RX reports the DRX configuration request to the S-UE. The UE-RX reports the DRX configuration request to the UE-TX, and the UE-TX includes information (which may be referred to as DRX configuration information in the present invention) being the DRX configuration in the SL communication with the UE-RX that has reported the DRX configuration request in the DRX configuration request, and reports the DRX configuration request to the S-UE. The report of the DRX configuration information may be a prerequisite for the DRX configuration request.

For example, the DRX configuration node may be the gNB, and the UE-RX reports the DRX configuration request to the gNB. The UE-RX reports the DRX configuration request to the S-UE, and the S-UE includes information being the DRX configuration in the SL communication between the UE-TX that has reported the DRX configuration request and the UE-RX in the DRX configuration request, and reports the DRX configuration request to the gNB.

The DRX configured node may be the UE-TX. For example, the DRX configuration node may be the S-UE, and the UE-TX reports the DRX configuration request to the S-UE. The UE-TX includes information being the DRX configuration in the SL communication with the UE-RX in the DRX configuration request, and reports the DRX configuration request to the S-UE. For example, the DRX configuration node may be the gNB, and the UE-TX reports the DRX configuration request to the gNB. The UE-TX reports the DRX configuration request to the S-UE, and the S-UE includes information being the DRX configuration in the SL communication between the UE-TX that has reported the DRX configuration request and the UE-RX in the DRX configuration request, and reports the DRX configuration request to the gNB.

As a report method of the DRX configuration request between the UE-RX and the UE-TX or between the UE-TX and the S-UE, the report method of the resource information disclosed in the first embodiment may be applied as appropriate. As a report method of the DRX configuration request between the UE-TX and the gNB or between the S-UE and the gNB, the Uu interface may be used. The RRC signaling may be used. The DRX configuration request may be included in the AS configuration for the SL to be reported. This is effective when the gNB performs the AS configuration for the SL. As another method, the MAC signaling may be used. The DRX configuration request can be reported at an early stage.

A message for the DRX configuration request may be provided. The message for the DRX configuration request may be reported by using the PC5-S signaling. The message for the DRX configuration request may be reported by using the PC5-RRC signaling. Cause information may be provided together with the DRX configuration request. DRX configuration request information and the cause information may be included in the message for the DRX configuration request. The cause information may be, for example, information indicating that it is a terminal for a pedestrian, or information indicating that it is a power saving request. With this configuration, the cause of the request of the DRX configured node for the DRX configuration can be reported to the DRX configuration node. The DRX configuration node can perform the DRX configuration by using the cause information.

Information indicating for which connection the DRX configuration request is performed may be provided. For example, the PC5 connection identifier, the PC5-RRC connection identifier, the AS configuration identifier, the QoS flow identifier of PC5, the radio bearer identifier, the RLC bearer identifier described above, or the like may be used. The DRX configuration request and the identifier may be associated. The DRX configuration request and the identifier may be associated, and included in the message for the DRX configuration request. With this configuration, the DRX configuration node can recognize for which connection the DRX configuration is requested.

In this manner, by providing the DRX configuration request, the DRX configured node can request the DRX configuration node to perform the DRX configuration depending on a state of the DRX configured node, such as remaining battery capacity. Power consumption of the UE that performs the SL communication can be reduced.

The DRX configured node may report a part or all of the DRX configuration information such as the DRX cycle to the DRX configuration node as a desired value (which may be a requested value). A part or all of the DRX configuration information such as the DRX cycle may be reported as the DRX configuration request. A part or all of the DRX configuration information such as the DRX cycle may be included in a DRX configuration message to be reported. The DRX configured node may, for example, report a cycle with occurrence of V2X service data using the SL communication as a desired DRX cycle. For example, the DRX configured node may report a cycle with occurrence of V2X service data using the SL communication and a value obtained by statistically processing data capacity to the DRX configuration node as a desired DRX cycle and a desired resource allocation amount. With this configuration, the DRX configured node can request the DRX configuration node to perform the DRX configuration depending on a state of the SL communication performed in the V2X service. Power consumption of the UE that performs the SL communication can be reduced depending on the V2X service.

The DRX configuration information is information indicating the configuration of DRX in the SL. The information is used by the DRX configuration node to perform the DRX configuration for the DRX configured node in the SL.

As specific examples of the DRX configuration information, the following (1) to (12) are disclosed.
(1) DRX cycle.
(2) On duration time.
(3) Inactive time.
(4) Offset.
(5) Inactivity timer.
(6) Frequency resources of the on duration time.
(7) Frequency resources of the inactivity timer time.
(8) HARQ-RTT timer (HARQ-RTT-Timer).
(9) Retransmission timer.
(10) Frequency resources of the retransmission timer time.
(11) Active time.
(12) Combination of (1) to (11).

The DRX cycle of (1) above is the cycle when DRX is cyclically performed. The DRX cycle may be a cycle of on duration time start, or may be a cycle of inactive time end.

The on duration time of (2) above is reception time in the UE-RX. The time may be transmission time in the UE-TX. The on duration time may be time in which reception can be performed or time in which transmission can be performed. The on duration time is started from the beginning of the DRX cycle.

The inactive time of (3) above is time in which reception is not performed in the UE-RX. The inactive time may be time in which transmission is not performed in the UE-TX. The inactive time may be time in which reception cannot be performed or transmission cannot be performed. This is sleep time in which transmission and reception operation is not performed in the UE-RX.

The offset of (4) above is offset time in which the DRX cycle is started.

The inactivity timer of (5) above is time after reception of data or a PSCCH indicating the data. The time may be hereinafter referred to as inactivity timer time. The inactivity timer is reset on reception of the PSCCH, and is started again. Expiration of the inactivity timer leads to sleep. The inactivity timer is time from the most recent reception of the PSCCH to sleep. The data may be the initial transmission data.

In a case of the SL communication, resources used for the communication need to be selected and retained in advance. For this reason, when the inactivity timer is configured, resources for the inactivity timer time need to be selected and retained. Thus, use efficiency of resources is reduced. The inactivity timer need not be configured. The inactivity timer may be omitted. Transmission and reception of the SL communication may be performed in the on duration time. In the V2X service, data of predetermined capacity may cyclically occur. This may be applied to such a V2X service. Resources of the inactivity timer time need not be selected or retained, and thus use efficiency of resources can be enhanced.

The frequency resources of the on duration time of (6) above are frequency resource information allowing transmission and reception. The frequency resources of the on duration time may be configured in a unit of, for example, sub-channels, resource blocks, resource elements, subcarriers, bandwidth parts (BWPs), or the like.

The frequency resources of the inactivity timer time of (7) above are frequency resource information allowing transmission and reception within the inactivity timer. The frequency resources of the inactivity timer time may be configured with, for example, sub-channels, resource blocks, resource elements, subcarriers, bandwidth parts (BWPs), or the like.

The HARQ-RTT timer of (8) above is time before allocation for retransmission is transmitted. The timer may be started from a symbol after Nack transmission.

The retransmission timer of (9) above is time in which retransmission is transmitted. The UE-RX may expect that retransmission data is transmitted during the retransmission timer at the time of Nack transmission. The timer may be started from a symbol after expiration of the HARQ-RTT timer.

The frequency resources of the retransmission timer time of (10) above are frequency resource information allowing transmission and reception of retransmission or allocation for the retransmission. The frequency resources of the retransmission timer time may be configured with, for example, sub-channels, resource blocks, resource elements, subcarriers, bandwidth parts (BWPs), or the like.

The active time of (11) above is time in which the UE-RX receives the PSCCH in DRX. The time may include a part or all of the on duration time, time before the inactivity timer expires, time before the retransmission timer expires, and time before the HARQ-RTT timer expires.

The total of the active time and the inactive time may be the DRX cycle.

Of the DRX configuration information, information related to time may be configured with time (for example, ms), or may be configured in a unit of system frames radio frames, subframes, slots, mini-slots, symbols, sub-symbols, or the like in the SL. Further, these pieces of time information may be configured as a timer. Time management of DRX is facilitated.

With such DRX configuration information, the DRX configuration in the SL communication can be performed.

In the SL communication in PC5, unlike communication in Uu, transmission and reception cannot be performed in all of the subframes. Transmission and reception can be performed only in a resource pool configured for the SL communication. Thus, the DRX configuration in Uu cannot be directly applied.

Here, a method for solving such a problem will be disclosed.

When the DRX configuration is performed in the SL communication, resources for the active time of DRX may be within the range of the RP configured in the SL communication in advance. For example, when the UE-TX configures DRX for the UE-RX, the UE-TX performs the DRX configuration by selecting the resources for the active time of DRX from the RP for the SL communication between the UE-TX and the UE-RX. The RP for the SL communication between the UE-TX and the UE-RX may be reported from the gNB, or may be reported from the S-UE. As the RP for the SL communication between the UE-TX and the UE-RX, the RP configured in the UE-TX in advance may be used.

By employing such a method, DRX is enabled in the SL communication in PC5. Further, by not using resources out of the range of the RP configured for the SL communication between opposite UEs, interference with another UE can be avoided.

When the DRX configuration is performed, the UE-RX need no longer monitor in all of the times of the RP configured in the SL communication with the UE-TX, and only needs to perform the reception operation in the active time in accordance with the DRX configuration. When the DRX configuration is released, the UE-RX may monitor the RP configured in advance.

The above discloses that the DRX configuration information may be configured with time, slots and symbols in the SL, or the like. As described above, in the SL communication, transmission and reception can be performed only in the RP configured for the SL communication. In the DRX configuration, when the DRX configuration method in Uu is simply used, resources out of the range of the RP may be configured.

Here, a method for solving such a problem will be disclosed.

The DRX configuration information is configured within the range of the RP for the SL communication. For example, slots of the resources within the range of the RP are renumbered. Timing to be a reference may be provided. For example, slots within the range of the RP are assigned consecutive numbers from 0, with the start of radio frame #0 being a reference. Further, consecutive numbers may be assigned to symbols as well. With this configuration, even if the RP includes non-consecutive resources, resources within the range of the RP can be indicated by slot numbers and symbol numbers assigned consecutive numbers.

For example, the DRX configuration information such as the DRX cycle may be indicated by the assigned slot numbers or symbol numbers. The UE-TX can transmit the SL communication in accordance with the DRX configuration information, and the UE-RX can receive the SL communication in accordance with the DRX configuration information. Malfunction in the SL communication can be reduced. Further, power consumption of the UE-RX can be reduced.

For example, the RP may be cyclically configured, and resources of the RP in one cycle may be indicated with a bitmap. In the resources of the RP in one cycle indicated with a bitmap, the DRX configuration information may be configured. Of the DRX configuration information, the active time may be configured. The configuration may be performed with a bitmap. The DRX configuration information included in the active time may be indicated with a bitmap in resources of one cycle. A method similar to the resource configuration method of the RP described above can be used, and thus DRX processing in the UE-TX and the UE-RX can be facilitated.

For example, the DRX configuration information is configured within the range of the RP for the SL communication in configuration information related to frequency of the DRX configuration information. For example, when sub-channels are configured, sub-channels within the range of the RP are renumbered. The sub-channel to be a reference may be a resource block having the lowest resource block number. For example, the sub-channels are assigned consecutive numbers so that the resource block numbers are increased, with the sub-channel having the lowest resource block number within the range of the RP being sub-channel #0. With this configuration, even if the RP includes non-consecutive resources, resources within the range of the RP can be indicated by sub-channel numbers assigned consecutive numbers.

For example, the DRX configuration information related to frequency may be indicated with a bitmap for resources in a band. Alternatively, the information may be indicated with a bitmap for resources within the range of the configured RP.

For example, in the DRX configuration information related to frequency, configured frequency may be the same. For example, the frequency resources monitored by the UE-RX for the initial transmission data and the retransmission data may be the same. The UE-RX need no longer change monitoring frequency, and the DRX processing can be facilitated.

A DRX configuration modification request may be provided. The DRX configured node may report the DRX configuration modification request to the DRX configuration node. A message for the DRX configuration modification request may be provided. Cause information may be provided together with the DRX configuration modification request. DRX configuration request information and the cause information may be included in the message for the DRX configuration modification request. The DRX configuration modification request may request modification of a part or all of the DRX configuration information. Of the DRX configuration information, information indicating which information is requested to be modified may be provided. The information may be included in the message for the DRX configuration modification request. The DRX configuration node that has received the DRX configuration modification request can perform modification of the DRX configuration for the DRX configured node. With this configuration, power consumption of the UE that performs the SL communication can be reduced depending on the V2X service.

Information indicating for which DRX configuration the DRX configuration modification request is performed may be provided. The identifier for identifying the DRX configuration described above may be used. The identifier for identifying the DRX configuration may be included in the message for the DRX configuration modification request together with the DRX configuration modification request, and the message may be reported. For example, also when a plurality of DRX configurations are performed for one UE, the DRX configuration node can determine for which DRX configuration the DRX configuration modification request is performed.

Information for assisting configuration for the SL communication may be reported between the UEs that perform the SL communication. As a report method of configuration assist information for the SL communication between the UEs that perform the SL communication, the report method of the resource information disclosed in the first embodiment may be applied as appropriate. A message for reporting the configuration assist information for the SL communication may be provided. The message may be reported by using the PC5-S signaling. The message may be reported by using the PC5-RRC signaling.

As examples of the information for assisting the configuration for the SL communication, the following (1) to (10) are disclosed.
(1) DRX configuration.
(2) DRX configuration request.
(3) DRX configuration modification request.
(4) Desired DRX configuration.
(5) V2X service statistically processed data.
(6) Power consumption request.
(7) Remaining battery information.
(8) Overheat state information.
(9) PC5 connection state information.
(10) Combination of (1) to (9).

By reporting such pieces of information between the UEs that perform the SL communication, the UE that performs the SL communication can perform configuration appropriate for the communication.

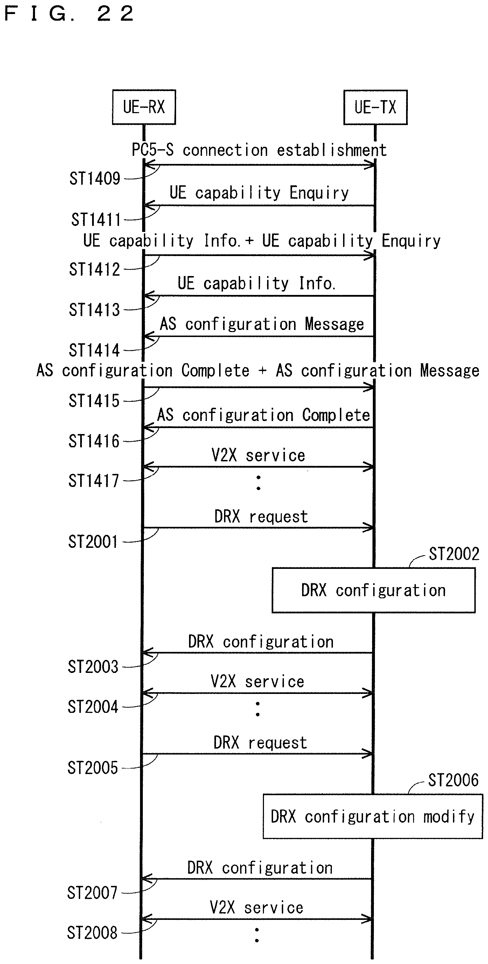

FIG. 22 is a sequence diagram illustrating an example of a method of performing the DRX configuration between the UE-TX and the UE-RX according to the second embodiment. In FIG. 22, steps common to those of FIG. 14 and FIG. 15 are denoted by the same step numbers, and common description will be omitted. In Step ST1417, V2X service data using the SL communication is transmitted and received between the UE-TX and the UE-RX

Here, an example in which the UE-RX reports a DRX request message to the UE-TX is illustrated. For example, the UE-RX evaluates a communication pattern of V2X service data communication, and derives a desired DRX configuration such as the desired cycle from the communication pattern. In Step ST2001, the UE-RX includes the derived desired DRX configuration in the DRX configuration request message, and reports to the UE-TX.

In Step ST2002, the UE-TX determines the DRX configuration in the SL communication with the UE-RX by using the DRX request message received from the UE-RX and the desired DRX configuration included therein.

In Step ST2003, the UE-TX reports the determined DRX configuration to the UE-RX. The UE-TX that has reported the DRX configuration to the UE-RX in

Step ST2003 performs transmission and reception of the V2X service data in accordance with the DRX configuration in Step ST2004. Further, the UE-RX that has received the DRX configuration in Step ST2003 performs transmission and reception of the V2X service data in accordance with the DRX configuration in Step ST2004. A response message to the DRX configuration of Step ST2003 may be provided. By reporting the response message from the UE-RX to the UE-TX, the UE-TX can recognize that the UE-RX has performed the DRX configuration.

A reject message may be provided. Alternatively, reject information may be included in the response message. Cause information may be included. By reporting the reject message from the UE-RX to the UE-TX, the UE-TX can recognize that the UE-RX was unable to perform the DRX configuration. For example, the UE-TX may perform a different DRX configuration, and report the DRX configuration to the UE-RX again.

With this configuration, in the SL communication between the UE-TX and the UE-RX, DRX transmission and reception can be performed.

The UE-RX may perform modification of the DRX configuration. For example, when the communication pattern of the V2X service data communication is changed, the UE-RX may perform modification of the DRX configuration. In Step ST2005, the UE-RX includes a desired DRX configuration in the DRX configuration request message and reports to the UE-TX.

In Step ST2006, the UE-TX determines modification of the DRX configuration in the SL communication with the UE-RX by using the DRX request message received from the UE-RX and the desired DRX configuration included therein.

In Step ST2007, the UE-TX reports the determined DRX configuration to the UE-RX. The UE-TX that has reported the DRX configuration to the UE-RX in Step ST2007 performs transmission and reception of the V2X service data in accordance with the DRX configuration in Step ST2008. Further, the UE-RX that has received the DRX configuration in Step ST2007 performs transmission and reception of the V2X service data in accordance with the DRX configuration in Step ST2008.

With this configuration, in the SL communication between the UE-TX and the UE-RX, the DRX configuration can be flexibly modified. Transmission and reception depending on the communication pattern of the V2X service data can be performed.

A release method of the DRX configuration will be disclosed. The DRX configuration node reports release of the DRX configuration to the DRX configured node. The DRX configuration node may associate the configured DRX configuration and the DRX configuration to be released to report the DRX configurations. For example, the DRX configuration node may perform the report by using the DRX configuration identifier of DRX to be released. With this configuration, when a plurality of DRX configurations are released for the UE that performs the SL communication, which DRX configuration is released by the UE that performs the SL communication can be determined.

Similarly to the DRX configuration, a response message to the release of the DRX configuration may be provided. Release processing of the DRX configuration can be securely performed. Further, a message for requesting the release of the DRX configuration may be provided. The DRX configuration can be released depending on a state of the DRX configured node. For example, when a battery of the UE-RX is charged and power consumption is no longer required to be reduced, or when the UE-RX is to perform the V2X service at an early stage, the UE-RX can request release of the DRX configuration, and can release the configured DRX configuration.

In the SL communication, the unicast communication is communication in bidirectional. The DRX configuration may be performed in the communication in bidirectional between opposite UEs that perform the SL communication. For example, when unicast communication is performed between the UE-TX and the UE-RX with the UE that first performs transmission for the V2X service being the UE-TX, DRX is configured in the SL communication from the UE-TX to the UE-RX, and DRX is also configured in the SL communication from the UE-RX to the UE-TX. In the communication in bidirectional in the SL, the DRX configuration is performed. With this configuration, in the SL communication in bidirectional, power consumption of the UE can be reduced and use efficiency of resources can be enhanced.

The DRX configuration node in each direction will be disclosed. A transmission-side UE in the SL communication in each direction configures DRX. For example, in the SL communication from the UE-TX to the UE-RX, the UE-TX performs the DRX configuration, and reports the configuration to the UE-RX. Further, in the SL communication from the UE-RX to the UE-TX, the UE-RX performs the DRX configuration, and reports the configuration to the UE-TX. Each transmission UE can perform the DRX configuration using the timing at which the V2X service data occurs.

Another method will be disclosed. One of the UEs of the opposite UEs that perform the SL communication in bidirectional configures DRX in the SL communication in both directions. For example, the UE that first performs transmission for the V2X service may perform the DRX configuration in the SL communication in both directions. The UE-TX performs the DRX configuration in both directions, and reports the configuration to the UE-RX. The amount of signaling required for the DRX configuration can be reduced.

Reference time in each direction may be the same in the SL communication in bidirectional. The same synchronization source is used between the opposite UEs that perform the SL unicast communication in bidirectional. Examples of the synchronization source include the gNB, the GNSS, the UE, and the like. Synchronization source information may be reported between the opposite UEs. The UEs that have received the synchronization source information may use the same synchronization source. The UE that first performs transmission of the V2X service may report the synchronization source information to the opposite UE. With this configuration, reference time in each direction can be the same in the SL communication in bidirectional.

One of the opposite UEs that perform the SL unicast communication in bidirectional may operate as the synchronization source. The opposite UEs that perform the SL unicast communication in bidirectional may transmit a signal for synchronization and/or a channel for synchronization. A synchronization signal (SS) of the SL may be used as the signal for synchronization. The SBCCH may be used as the channel for synchronization. The UEs that perform the SL unicast communication in bidirectional may receive the SS and/or the SBCCH of the SL transmitted by one of the opposite UEs, and perform synchronization using those. With this configuration, reference time in each direction can be the same in the SL communication in bidirectional.

By making the reference time in each direction the same in the SL communication in bidirectional, the time axis in each direction can be the same. For example, radio frame numbers, slot numbers, and symbol numbers in the SL in each direction can be indicated using the same reference.

When DRX in the SL communication in both directions is configured in the SL communication in bidirectional, the method of making the reference time in each direction the same may be applied in the SL communication in bidirectional. The time axis of the DRX configuration in each direction can be the same.

In the SL communication in bidirectional, DRX timings in each direction may be aligned. The DRX timing in the communication from the UE-TX to the UE-RX and the DRX timing in the communication from the UE-RX to the UE-TX may be aligned. The DRX timing may be the on duration time in the DRX configuration. For example, the on duration time in the communication from the UE-TX to the UE-RX and the on duration time in the communication from the UE-RX to the UE-TX are provided within predetermined time. In the present invention, the predetermined time may be referred to as DRX transmission and reception time.

As a method of aligning the DRX timing in the communication from the UE-TX to the UE-RX and the DRX timing in the communication from the UE-RX to the UE-TX, the DRX cycle in each direction may be made the same. Alternatively, the DRX cycle in each direction may have a relationship of an integer multiple or one over an integer. Further, a DRX start offset may be configured so that the on duration time in each direction falls within the DRX transmission and reception time.

When communication in each direction is performed in time multiplexing, the on duration time in each direction may be arranged not to overlap in the DRX transmission and reception time. For example, the DRX start offset may be configured so that the on duration time from the UE-TX to the UE-RX and the on duration time from the UE-RX to the UE-TX continue with respect to time.

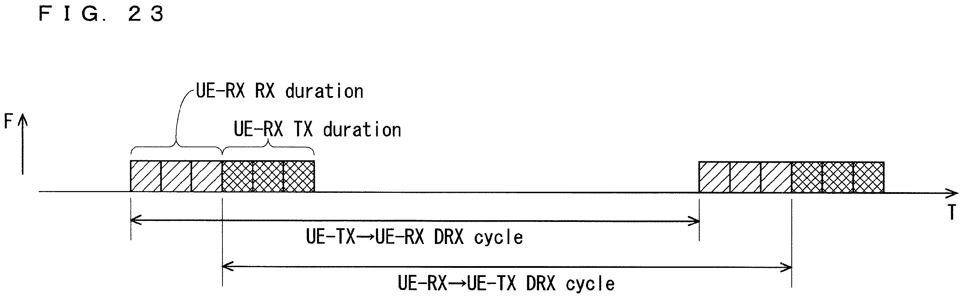

FIG. 23 is a conceptual diagram of a first example of aligning the DRX timings in each direction in the SL communication in bidirectional according to the second embodiment. The horizontal axis represents time, and the vertical axis represents frequency. The diagonally hatched part represents the on duration time of DRX in the communication from the UE-TX to the UE-RX. In the diagonally hatched part, the UE-RX performs reception from the UE-TX. The cross-hatched part represents the on duration time of DRX in the communication from the UE-RX to the UE-TX. In the cross-hatched part, the UE-RX performs transmission to the UE-TX.

The DRX cycle from the UE-TX to the UE-RX and the DRX cycle from the UE-RX to the UE-TX are made the same. Further, the start offset of DRX from the UE-RX to the UE-TX is delayed to be later than the start offset of DRX from the UE-TX to the UE-RX by the on duration time of DRX in the communication from the UE-TX to the UE-RX or longer. FIG. 23 illustrates an example regarding a case in which the start offset of DRX from the UE-RX to the UE-TX is delayed by the on duration time of DRX. With this configuration, the on duration time of DRX in the communication from the UE-TX to the UE-RX and the on duration time of DRX in the communication from the UE-RX to the UE-TX can be multiplexed so as not to overlap in the time axis direction.

By performing the DRX configuration in each direction as described above, the reception time and the transmission time in the UE-RX can be caused to continue without overlapping. Further, the transmission time and the reception time in the UE-TX can also be caused to continue without overlapping.

With this configuration, in the opposite UEs that perform the SL communication in bidirectional, the transmission and reception times can be aligned.

When the DRX timings in each direction are configured unaligned in the SL communication in bidirectional, the transmission and reception times of the opposite UEs that perform the SL communication are unaligned, and each UE repeats on and off of transmission and reception. This inhibits reduction of power consumption. Owing to the method as described above, by aligning the transmission and reception times in the opposite UEs that perform the SL communication in bidirectional, the inactive time in each UE can be increased. Consequently, power consumption of each UE can be further reduced.

When the transmission-side UEs in the SL communication in each direction configure DRX, one transmission UE configures DRX by using the DRX configuration for one SL communication, and another transmission UE configures DRX by using the DRX configuration configured for another SL communication. One transmission UE may perform the DRX configuration for one SL communication so that the DRX timing of another SL communication received and the DRX timing of one SL communication are aligned. With this configuration, also when the transmission-side UEs in the SL communication in each direction configure DRX in the SL communication in bidirectional, the DRX timings in each direction can be aligned.

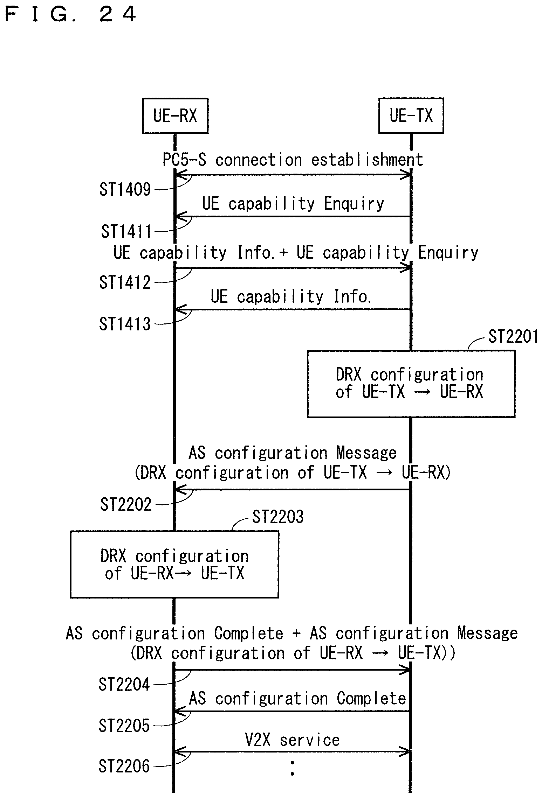

FIG. 24 is a sequence diagram illustrating an example of a method of aligning the DRX timings in each direction when the transmission-side UEs in the SL communication in each direction configure DRX according to the second embodiment. In FIG. 24, steps common to those of FIG. 14 and FIG. 15 are denoted by the same step numbers, and common description will be omitted. FIG. 24 illustrates an example of a method of reporting the DRX configuration when the AS configuration is reported to each other between the UE-TX and the UE-RX.

In Step ST2201, the UE-TX determines the DRX configuration in the SL communication from the UE-TX to the UE-RX. In Step ST2202, the UE-TX reports an AS configuration message to the UE-RX. The UE-TX includes, in the AS configuration message, the DRX configuration in the SL communication from the UE-TX to the UE-RX. With this configuration, the UE-RX can receive the DRX configuration of the SL communication from the UE-TX to the UE-RX.

In Step ST2203, the UE-RX determines the DRX configuration in the SL communication from the UE-RX to the UE-TX. In this case, the UE-RX uses the DRX configuration in the SL communication from the UE-TX to the UE-RX received from the UE-TX. For example, the UE-RX determines the DRX configuration so that the DRX cycle in the SL communication from the UE-TX to the UE-RX and the DRX cycle in the SL communication from the UE-RX to the UE-TX are the same. Further, the UE-RX configures an offset so that the DRX on duration time in the SL communication from the UE-TX to the UE-RX continues to the DRX on duration time in the SL communication from the UE-RX to the UE-TX. The UE-RX may configure the offset so that the DRX on duration time in each direction falls within predetermined DRX transmission and reception time. With this configuration, the DRX timings in each direction can be aligned.

In Step ST2204, the UE-RX reports a complete message for the AS configuration from the UE-TX and the AS configuration message to the UE-TX. The UE-RX includes, in the AS configuration, the DRX configuration in the SL communication from the UE-RX to the UE-TX. With this configuration, the UE-TX can receive the DRX configuration of the SL communication from the UE-RX to the UE-TX. In Step ST2205, the UE-TX reports an AS configuration complete message to the UE-RX.

In Step ST2206, the UE-TX and the UE-RX perform transmission and reception of the V2X service data in accordance with the DRX configuration configured for the SL communication in each direction.

With this configuration, the transmission-side UEs in the SL communication in each direction can align the DRX timings in each direction. By aligning the transmission and reception times in the opposite UEs that perform the SL communication in bidirectional, the inactive time in each UE can be increased. Consequently, power consumption of each UE can be further reduced.

The above discloses that the DRX configuration is included in the AS configuration message to be reported. With this configuration, the amount of signaling can be reduced. The DRX configuration may be performed separately from the AS configuration message. The DRX configuration can be performed at necessary timing in the SL communication in each direction. The UE-TX and/or the UE-RX may report the DRX configuration request to the opposite UE of the SL communication in each direction. The opposite UE may perform the DRX configuration according to the DRX configuration request of the SL communication in each direction. With this configuration, in the SL communication in each direction, the DRX configuration can be flexibly performed.

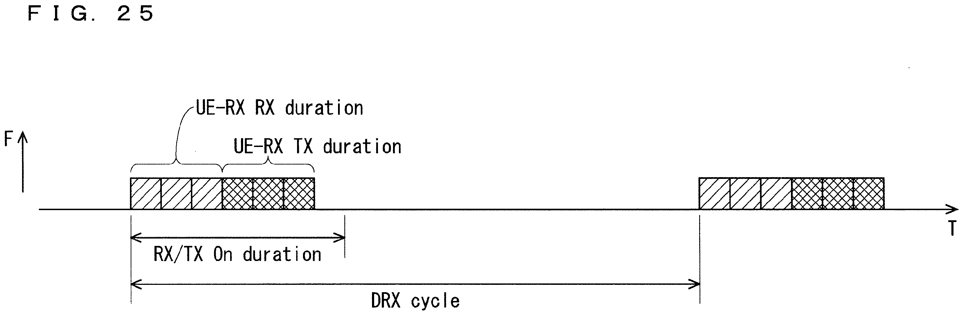

FIG. 25 is a conceptual diagram of a second example of aligning the DRX timings in each direction in the SL communication in bidirectional according to the second embodiment. The horizontal axis represents time, and the vertical axis represents frequency. The diagonally hatched part represents the on duration time of DRX in the communication from the UE-TX to the UE-RX. In the diagonally hatched part, the UE-RX performs reception from the UE-TX. The cross-hatched part represents the on duration time of DRX in the communication from the UE-RX to the UE-TX. In the cross-hatched part, the UE-RX performs transmission to the UE-TX.

The DRX cycles in both directions are configured to be the same. As the DRX configuration, the DRX cycle, the offset, and the DRX transmission and reception time are configured. The communication from the UE-TX to the UE-RX is performed from the beginning of the DRX transmission and reception time. This may be statically determined in advance in a standard or the like. It is only necessary that the UE-TX and the UE-RX can recognize in advance.

The UE-RX performs reception operation from the beginning of the DRX transmission and reception time, and when there is no transmission from the UE-TX, the UE-RX can perform transmission to the UE-TX within the DRX transmission and reception time. When there is no transmission to the UE-RX, the UE-TX performs reception from the UE-RX within the DRX transmission and reception time. The UE-RX performs reception operation from the beginning of the DRX transmission and reception time, and when there is transmission from the UE-TX, the UE-RX can perform transmission to the UE-TX within the DRX transmission and reception time after the end of the reception. When there is transmission to the UE-RX, the UE-TX performs reception from the UE-RX within the DRX transmission and reception time after the end of the transmission to the UE-RX.

With this configuration, the SL communication in bidirectional can be performed in the DRX transmission and reception time. Power consumption of each UE can be further reduced.

By employing such a configuration method, the amount of signaling and information required for the DRX configuration for the SL communication in both directions can be reduced.

Such a configuration method may be applied when one UE of the opposite UEs that perform the SL communication in bidirectional performs the DRX configuration in the SL communication in both directions. The DRX configuration processing for the SL communication in both directions can be facilitated.

When DRX is configured in each direction in the SL communication in bidirectional, one transmission UE may perform the DRX configuration for the SL communication in both directions. The UE may configure DRX so that the DRX timings in each direction are aligned. In the SL communication in bidirectional, the DRX timings in each direction can be aligned.

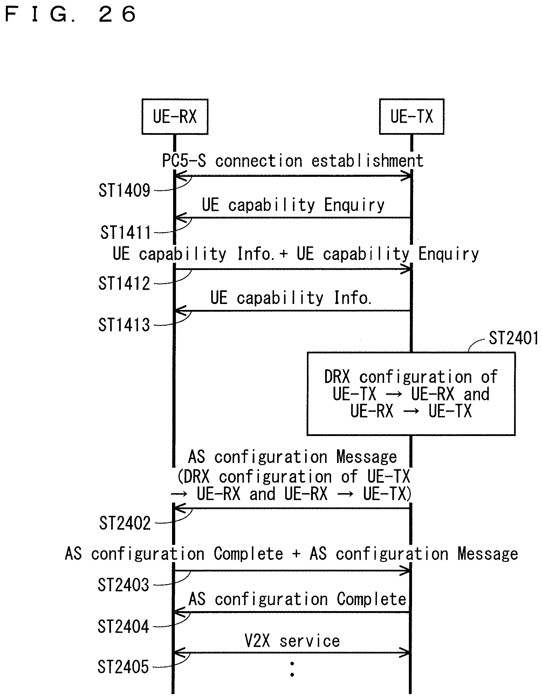

FIG. 26 is a sequence diagram illustrating an example of a method of aligning the DRX timings in each direction when one transmission UE configures DRX according to the second embodiment. In FIG. 26, steps common to those of FIG. 14 and FIG. 15 are denoted by the same step numbers, and common description will be omitted. FIG. 26 illustrates an example of a method of reporting the DRX configuration when the AS configuration is reported to each other between the UE-TX and the UE-RX.

In Step ST2401, the UE-TX determines the DRX configuration in the SL communication from the UE-TX to the UE-RX and the SL communication from the UE-RX to the UE-TX, in other words, the DRX configuration in the SL communication in both directions. In this case, for example, the UE-TX determines the DRX configuration so that the DRX cycle in the SL communication from the UE-TX to the UE-RX and the DRX cycle in the SL communication from the UE-RX to the UE-TX are the same. Further, the UE-TX configures an offset so that the DRX on duration time in the SL communication from the UE-TX to the UE-RX continues to the DRX on duration time in the SL communication from the UE-RX to the UE-TX. The UE-TX may configure the offset so that the DRX on duration time in each direction falls within predetermined DRX transmission and reception time. With this configuration, the DRX timings in each direction can be aligned.

In Step ST2402, the UE-TX reports an AS configuration message to the UE-RX. The UE-TX includes, in the AS configuration message, the DRX configuration in the SL communication from the UE-TX to the UE-RX and the DRX configuration in the SL communication from the UE-RX to the UE-TX. With this configuration, the UE-RX can perform reception in the DRX configuration of the SL communication from the UE-TX to the UE-RX, and can perform transmission in the DRX configuration of the SL communication from the UE-RX to the UE-TX.

In Step ST2403, the UE-RX reports a complete message for the AS configuration from the UE-TX and the AS configuration message to the UE-TX. In Step ST2404, the UE-TX reports an AS configuration complete message to the UE-RX.

In Step ST2405, the UE-TX and the UE-RX perform transmission and reception of the V2X service data in accordance with the DRX configuration configured for the SL communication in each direction.

With this configuration, one transmission UE that performs the SL communication can perform the DRX configuration for the SL communication in both directions. By aligning the transmission and reception times in the opposite UEs that perform the SL communication in bidirectional, the inactive time in each UE can be increased. Consequently, power consumption of each UE can be further reduced. When one transmission UE performs the DRX configuration for the SL communication in both directions, signaling can be reduced. Further, the DRX configuration need no longer be performed in the UE-RX, and thus the DRX processing can be facilitated. Thus, malfunction can be reduced.

When a plurality of DRX configurations are configured with one opposite UE, each DRX configuration may be performed so that the plurality of DRX timings are aligned. The DRX configuration method described above may be applied as appropriate. Even if a plurality of DRX configurations are performed, the inactive time in each UE can be increased by aligning the transmission and reception times. Consequently, power consumption of each UE can be further reduced.

A configured grant for configuring resources to be used in advance between the UEs that perform the SL communication may be provided. The resources to be used in advance may be cyclic resources. The configured grant includes allocation information of the resources. For example, the UE-TX reports the configured grant to the UE-RX in order to configure resources to be used for the SL communication. The UE-RX that has received the configured grant uses the resources configured with the configured grant for the SL communication to the UE-TX.

For the report of the configured grant between the UEs that perform the SL communication, the PC5-RRC signaling may be used. The number of configurations of the configured grant may not necessarily be limited to one and may be more than one. Further, activation/deactivation information of the configured grant may be provided. For example, the activation/deactivation information may be included in the SCI to be reported. By using the SCI, activation/deactivation of the configured grant can be dynamically performed.

As described above in the DRX configuration, in the SL communication in PC5, unlike communication in Uu, transmission and reception cannot be performed in all of the subframes. Transmission and reception can be performed only in a resource pool configured for the SL communication. Thus, the configured grant in Uu cannot be directly applied. The above-described method disclosed in the DRX configuration may be applied as appropriate to the configuration of the configured grant in the SL communication. The resources allocated with the configured grant can be configured to within the range of the RP.

One transmission UE may perform the DRX configuration in the SL communication in one direction, and configure the configured grant in the SL in the SL communication of another direction. For example, one UE is the UE-TX. The UE-TX performs the DRX configuration in the SL communication from the UE-TX to the UE-RX, and configures cyclic resources with the configured grant in the SL communication from the UE-RX to the UE-TX. The UE-TX may report these configurations to the UE-RX. The UE-RX receives the SL communication from the UE-TX by using the DRX configuration, and transmits the SL communication to the UE-TX by using the configured grant.

The one UE may configure so that the DRX timing and the timing of the cyclic resources by the configured grant are aligned. In the SL communication in bidirectional, the timing at which each UE operates can be aligned. Thus, power consumption of each UE can be reduced.

The transmission-side UE in the SL communication in each direction may configure the configured grant. One transmission UE uses the configured grant configured for one SL communication, and another transmission UE uses the configured grant configured for another SL communication. Another UE may perform the configured grant for another SL communication so that received resource timing allocated with the configured grant of one SL communication and resource timing to be allocated with the configured grant of another SL communication are aligned. With this configuration, also when the transmission-side UE in the SL communication in each direction configures the configured grant in the SL communication in bidirectional, the timing at which each UE operates can be aligned. Thus, power consumption of each UE can be reduced.

When one UE performs the SL communication with a plurality of UEs, the DRX timings in each SL communication may differ. In such a case, when the DRX timings in each SL communication are configured to be unaligned, the transmission and reception times of the UEs are unaligned, and the UEs repeat on and off of transmission and reception. This inhibits reduction of power consumption.

Here, a method for solving such a problem will be disclosed.

The UE that performs the SL communication with a plurality of UEs performs the DTX configuration so as to align the DRX timings. The UE that performs the SL communication with a plurality of UEs reports a desired DRX configuration to the DRX configuration node. The DRX configuration request message or DRX configuration modification request message described above may be used.

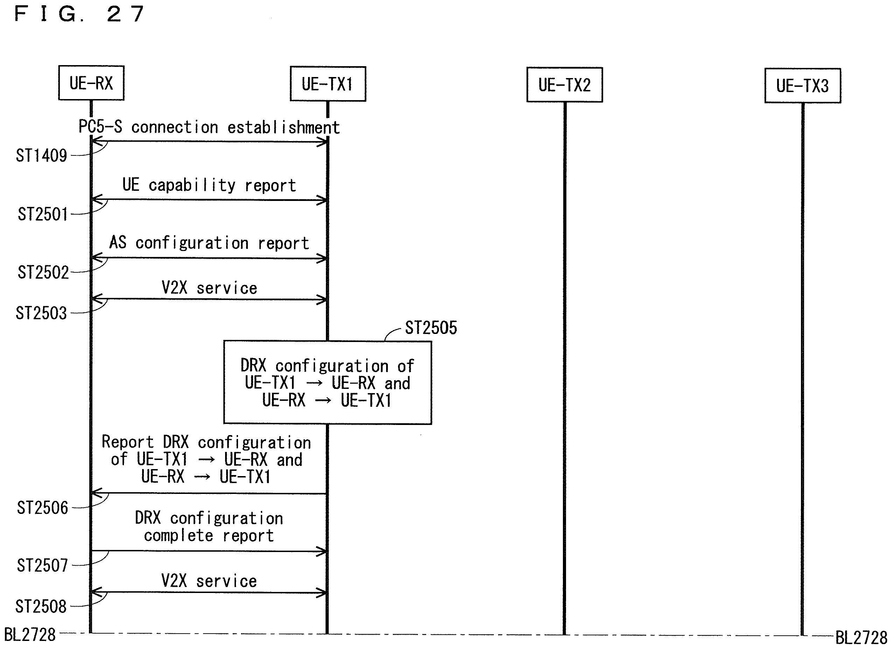

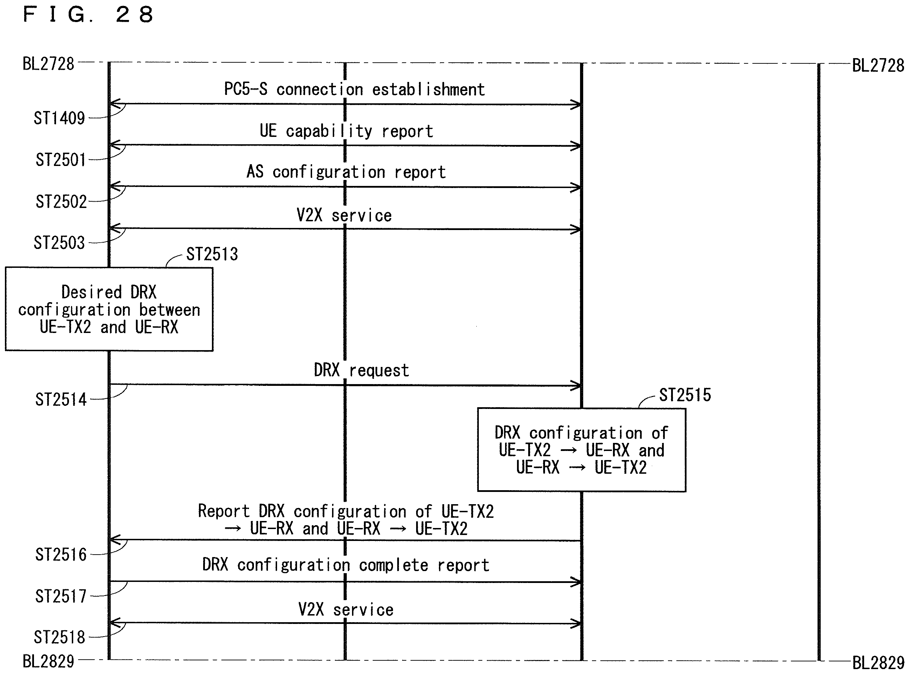

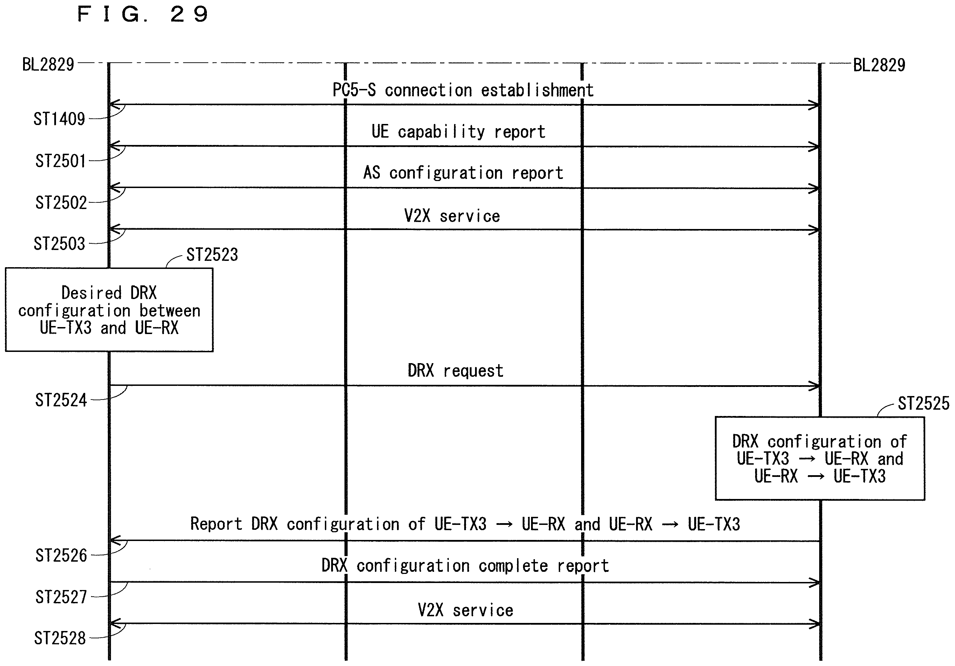

FIG. 27 to FIG. 29 are sequence diagrams illustrating an example of a method of performing the DTX configuration so that the UE that performs the SL communication with a plurality of UEs aligns the DRX timings according to the second embodiment. FIG. 27 to FIG. 29 are connected at the positions of boundaries BL2728 and BL2829. In FIG. 27 to FIG. 29, steps common to those of FIG. 14 and FIG. 15 are denoted by the same step numbers, and common description will be omitted.

For example, a V2X service performed by a UE-TX1 by using the SL communication with the UE-RX occurs. In Step ST1409, the UE-TX1 performs establishment of the PC5-S connection with the UE-RX. In Step ST2501, the UE-TX1 reports the UE capability to and from the UE-RX. In Step ST2502, the UE-TX1 reports the AS configuration to and from the UE-RX. With this configuration, in Step ST2503, transmission and reception of V2X service data using the SL communication can be performed between the UE-TX1 and the UE-RX.

In Step ST2505, the UE-TX1 determines the DRX configuration in the SL communication from the UE-TX1 to the UE-RX and the SL communication from the UE-RX to the UE-TX1, in other words, the DRX configuration in the SL communication in both directions. In this case, for example, the UE-TX1 determines the DRX configuration so that the DRX on duration time in each direction falls with predetermined DRX transmission and reception time. With this configuration, the DRX timings in each direction can be aligned.

In Step ST2506, the UE-TX1 reports the DRX configuration in the SL communication in both directions between the UE-TX1 and the UE-RX to the UE-RX. In Step ST2507, the UE-RX reports a DRX configuration complete message to the UE-TX1. With this configuration, the UE-RX can perform reception with the DRX configuration of the SL communication from the UE-TX1 to the UE-RX, and can perform transmission with the DRX configuration of the SL communication from the UE-RX to the UE-TX1.

In Step ST2508, the UE-TX1 and the UE-RX perform transmission and reception of the V2X service data in accordance with the DRX configuration configured for the SL communication in each direction.

A V2X service performed by a UE-TX2 by using the SL communication with the UE-RX occurs. Similarly to Step ST1409 to Step ST2503 described above, the UE-TX2 establishes the PC5-S connection with the UE-RX, and enables transmission and reception of V2X service data using the SL communication between the UE-TX2 and the UE-RX.

In Step ST2513, the UE-RX determines a desired DRX configuration in the SL communication between the UE-TX2 and the UE-RX. In this case, the UE-RX uses the DRX configuration in the SL communication in both directions between the UE-TX1 and the UE-RX received from the UE-TX1. For example, the UE-RX determines the desired DRX configuration so that the DRX cycle in the SL communication from the UE-TX1 to the UE-RX and the DRX cycle in the SL communication from the UE-TX2 to the UE-RX are the same. Further, the UE-RX may determine the desired DRX configuration so that the DRX on duration time in the SL communication from the UE-TX1 to the UE-RX and the DRX on duration time in the SL communication from the UE-TX2 to the UE-RX fall within predetermined DRX transmission and reception time. With this configuration, SL connection with each UE-TX and the DRX timings in each direction can be aligned.

In Step ST2514, the UE-RX reports the determined desired DRX configuration to the UE-TX2. In Step ST2515, the UE-TX2 determines the DRX configuration in the SL communication in both directions between the UE-TX2 and the UE-RX by using the desired DRX configuration received from the UE-RX.

In Step ST2516, the UE-TX2 reports the DRX configuration in the SL communication in both directions between the UE-TX2 and the UE-RX to the UE-RX. In Step ST2517, the UE-RX reports a DRX configuration complete message to the UE-TX2. With this configuration, the UE-RX can perform reception with the DRX configuration of the SL communication from the UE-TX2 to the UE-RX, and can perform transmission with the DRX configuration of the SL communication from the UE-RX to the UE-TX2.

In Step ST2518, the UE-TX2 and the UE-RX perform transmission and reception of the V2X service data in accordance with the DRX configuration configured in the SL communication in each direction.

The same applies to a case in which a V2X service performed by a UE-TX3 by using the SL communication with the UE-RX occurs. Similarly to Step ST1409 to Step ST2503 described above, the UE-TX3 establishes the PC5-S connection with the UE-RX, and enables transmission and reception of V2X service data using the SL communication between the UE-TX3 and the UE-RX.

In Step ST2523, the UE-RX determines a desired DRX configuration in the SL communication between the UE-TX3 and the UE-RX. In this case, the UE-RX uses the DRX configuration in the SL communication in both directions between the UE-TX1 and the UE-RX received from the UE-TX1 and the DRX configuration in the SL communication in both directions between the UE-TX2 and the UE-RX received from the UE-TX2. For example, the UE-RX determines a desired DRX configuration so that the DRX cycle in the SL communication from the UE-TX1 to the UE-RX, the DRX cycle in the SL communication from the UE-TX2 to the UE-RX, and the DRX cycle in the SL communication from the UE-TX3 to the UE-RX are the same. Further, the UE-RX may determine the desired DRX configuration so that the DRX on duration time in the SL communication from the UE-TX1 to the UE-RX, the DRX on duration time in the SL communication from the UE-TX2 to the UE-RX, and the DRX on duration time in the SL communication from the UE-TX3 to the UE-RX fall within predetermined DRX transmission and reception time. With this configuration, SL connection with each UE-TX and the DRX timings in each direction can be aligned.

In Step ST2526, the UE-RX reports the determined desired DRX configuration to the UE-TX3. In Step ST2525, the UE-TX3 determines the DRX configuration in the SL communication in both directions between the UE-TX3 and the UE-RX by using the desired DRX configuration received from the UE-RX.

In Step ST2526, the UE-TX3 reports the DRX configuration in the SL communication in both directions between the UE-TX3 and the UE-RX to the UE-RX. In Step ST2527, the UE-RX reports a DRX configuration complete message to the UE-TX3. With this configuration, the UE-RX can perform reception with the DRX configuration of the SL communication from the UE-TX3 to the UE-RX, and can perform transmission with the DRX configuration of the SL communication from the UE-RX to the UE-TX3.

In Step ST2528, the UE-TX3 and the UE-RX perform transmission and reception of the V2X service data in accordance with the DRX configuration configured for the SL communication in each direction.

With this configuration, even if the UE performs the SL communication with a plurality of UEs, SL connection with each UE-TX and the DRX timings in each direction can be aligned.

By employing the method as described above, by aligning the transmission and reception times in the UE that performs the SL communication with a plurality of UEs, the inactive time can be increased. Consequently, power consumption of the UE can be reduced. The SL communication with a plurality of UEs may be in bidirectional, and by performing the methods disclosed in the second embodiment in combination as appropriate, power consumption of the UE can be reduced.

When DRX is configured between opposite UEs, communication with the opposite UEs may become impracticable due to movement of UE in the inactive time. For example, the UE-RX receives communication from the UE-TX in the on duration time of DRX. When the UE-RX cannot receive communication from the UE-TX in the on duration time of DRX, there is a problem that whether there is no transmission data from the UE-TX or whether communication with the UE-TX has become impracticable cannot be determined.

Here, a method for solving such a problem will be disclosed. The DRX configuration includes a configuration that transmission is invariably performed in transmission duration time, and the UE invariably performs transmission in the transmission duration time in accordance with the DRX configuration. For example, the UE may transmit the RS in the transmission duration time. The SL RS may be used. In order to identify the UE that has transmitted the RS, a sequence used for the RS may be a sequence using an identifier of the transmission UE. With this configuration, a UE that was able to receive the RS can recognize that the RS is an RS transmitted from the transmission UE. The UE that was able to receive the RS can recognize that communication with the opposite UE is not impracticable. A UE that was unable to receive the RS can recognize that communication with the UE-TX has become impracticable.

When the UE cannot receive the RS a predetermined number of times or for a predetermined time continuously, the UE may determine that communication with the UE-TX has become impracticable. For example, when the UE cannot receive the RS in the transmission duration time a predetermined number of times consecutively, the UE may determine that communication with the UE-TX has become impracticable. For example, when the transmission duration time in which the RS cannot be received continues a predetermined number of times, the UE may determine that communication with the UE-TX has become impracticable. For example, when communication quality temporarily deteriorates due to blocking of a communication path or the like, determination that communication is impracticable can be avoided.

Further, for example, the UE may transmit the PSCCH in the transmission duration time. The UE may include the identifier of the transmission UE in the SCI, map the SCI to the PSCCH, and transmit the PSCCH. Alternatively, as a code for detecting the PSCCH, the identifier of the transmission UE may be used. With this configuration, a UE that was able to receive the PSCCH or the SCI can recognize that the received PSCCH or SCI is transmitted from the transmission UE. The UE that was able to receive the PSCCH or the SCI can recognize that communication with the opposite UE is not impracticable. A UE that was unable to receive the PSCCH or the SCI can recognize that communication with the UE-TX has become impracticable.

When the UE cannot receive the PSCCH or the SCI a predetermined number of times or for a predetermined time continuously, the UE may determine that communication with the UE-TX has become impracticable. For example, when the UE cannot receive the PSCCH or the SCI in the transmission duration time a predetermined number of times consecutively, the UE may determine that communication with the UE-TX has become impracticable. For example, when the transmission duration time in which the PSCCH or the SCI cannot be received continues a predetermined number of times, the UE may determine that communication with the UE-TX has become impracticable. For example, when communication quality temporarily deteriorates due to blocking of a communication path or the like, determination that communication is impracticable can be avoided.

With this configuration, when DRX is configured between the opposite UEs, the reception UE can determine whether there is no transmission data from the transmission UE or whether communication with the transmission UE has become impracticable.

When the communication with the transmission UE has become impracticable, the reception UE may perform SL communication connection processing with the transmission UE again. For example, when the UE-RX was unable to receive transmission from the UE-TX in the on duration time, the UE-RX determines that the SL communication with the UE-TX has become impracticable, and the UE-RX performs the SL communication connection processing with the UE-TX again. In contrast, for example, when the UE-TX was unable to receive transmission from the UE-RX in the on duration time, the UE-TX determines that the SL communication with the UE-RX has become impracticable, and the UE-TX performs the SL communication connection processing with the UE-RX again.

With this configuration, the SL communication between the UE-TX and the UE-RX can be enabled to the extent possible.

The above-described method of determining that communication is impracticable with the opposite UE when DRX is configured may be applied to the method of the present invention as appropriate. For example, the method of determining that communication is impracticable with the opposite UE when DRX is configured may be applied as the RLF detection method at the time of the DRX configuration in the SL as appropriate. The method of determining that communication is impracticable with the opposite UE when DRX is configured may be applied to the method of releasing the PC5 connection of the SL communication with RLF detection as appropriate. The release processing of the PC5 connection can be executed as necessary also at the time of the DRX configuration in the SL communication. Use efficiency of the resources for the SL communication and reduction of power consumption of the UE can be further enhanced.

### Third Embodiment

In the first embodiment, it is disclosed that the connection between the S-UE and the UE-TX is maintained even after the report of the resource information from the S-UE to the UE-TX. In this case, for example, it is disclosed that, when the S-UE changes the resource for the UE-TX, the connection processing need not be performed, and thus the resource change can be reported at an early stage, and the resource change of the SL communication can be performed with a low delay. However, in order to maintain the connection between the S-UE and the UE-TX, the resources need to be retained, and this reduces use efficiency of the resources. Further, the UE is required to perform reception operation, and power consumption of the UE increases.

In contrast, in the first embodiment, it is also disclosed that the connection between the S-UE and the UE-TX is released after the report of the resource information from the S-UE to the UE-TX. It is disclosed that, in this case, the resources for the connection between the S-UE and the UE-TX need no longer be retained, and use efficiency of the resources is enhanced. However, in contrast, for example, when the resources used for the SL communication are changed, the connection processing is required again, and thus a delay for the resource change is increased.

In the third embodiment, a method for solving such a problem will be disclosed.

DRX is configured in the SL communication between the S-UE and the UE-TX. The S-UE may perform the DRX configuration. The UE-TX may perform the DRX configuration. The DRX configuration may be performed after the report of the resource information from the S-UE to the UE-TX. The method disclosed in the second embodiment may be applied as appropriate.

In the SL communication between the S-UE and the UE-TX, even when the V2X service data is not transmitted, the resource information used for the SL communication between the UE-TX and the UE-RX is transmitted. Conventionally, DRX is configured for intermittent transmission and reception of U-plane data. Here, the DRX configuration may be performed for transmission and reception of signaling of C-Plane.

In the first embodiment, it is disclosed that the resource information from the S-UE to the UE-TX may be reported using the PC5-S signaling. Further, it is disclosed that a default RB may be used for the PC5-S signaling. The DRX configuration may be performed for the default RB used for the SL communication between the S-UE and the UE-TX.

This enables DRX in the SL communication from the S-UE to the UE-TX without releasing but maintaining the connection between the S-UE and the UE-TX after the report of the resource information from the S-UE to the UE-TX.

When the SL communication in bidirectional is performed between the S-UE and the UE-TX, the DRX timing from the S-UE to the UE-TX and the DRX timing from the UE-TX to the S-UE may be aligned. The method disclosed in the second embodiment may be applied as appropriate. Power consumption of the S-UE and the UE-TX can be reduced.

DRX may be configured between the UE-TX and the UE-RX. The DRX timing in the SL communication between the UE-TX and the UE-RX and the DRX timing in the SL communication between the S-UE and the UE-TX may be aligned. Since the UE-TX performs the SL communication with a plurality of UEs, in such a case as well, the method disclosed in the second embodiment may be applied as appropriate. Power consumption of the S-UE, the UE-TX, and the UE-RX can be reduced.

According to the method disclosed in the third embodiment, with each UE performing DRX in the SL communication between the S-UE and the UE-TX, power consumption can be reduced. Further, the resources for DRX are configured, and thus use efficiency of the resources can be enhanced. Further, because the connection between the S-UE and the UE-TX remains maintained, when the resources used for the SL communication are changed, for example, the connection processing need not be performed again, and the resource change can be performed with a low delay.

The above-described method of determining that communication is impracticable with the opposite UE when DRX is configured may be applied to the SL communication using the S-UE as appropriate. For example, the method of determining that communication is impracticable with the opposite UE when DRX is configured may be applied as the RLF detection method at the time of the DRX configuration in the SL, and applied to the methods disclosed in the first embodiment and the first modification of the first embodiment as appropriate. The release processing of the PC5 connection can be executed as necessary also at the time of the DRX configuration in the SL communication using the S-UE. Use efficiency of the resources for the SL communication and reduction of power consumption of the UE can be further enhanced.

In the SL communication between the S-UE and the UE-TX, the configured grant may be configured. Instead of the DRX configuration described above, the configuration of the configured grant may be performed. As the configuration method of the configured grant, the method disclosed in the second embodiment may be applied as appropriate. Similar effects can be achieved.

The methods disclosed in the third embodiment may be applied to indirect communication between the UEs via a relay UE. DRX in the PC5 connection between the UE-TX and the UE-RX may be applied to DRX in the PC5 connection between the UE-TX and the relay UE or the DRX in the PC5 connection between the relay UE and the UE-RX. Similar effects can be achieved.

For example, in the third embodiment, the DRX timing in the SL communication between the UE-TX and the relay UE and the DRX timing in the SL communication between the relay UE and the UE-RX may be aligned. Similar effects can be achieved.

### Fourth Embodiment

In the SL communication, not only direct communication between the UEs but also indirect communication via a relay is proposed (see Non-Patent Document 24). The relay between the UEs may be referred to as a UE-to-UE relay or an inter-UE relay. In the present invention, the UE that performs the inter-UE relay may be referred to as a relay UE.

For example, when a plurality of UEs implementing platooning approach an intersection, direct communication between the UEs may be hindered due to blocking of a building or the like. Further, the UE may be required to perform communication with not only nearby UEs but also a plurality of farther UEs. In such a case, a method of using the inter-UE relay is considered. For example, the SL communication between the UE-TX and the UE-RX is performed via the relay UE. The SL communication between the UEs via the relay UE may be referred to as inter-UE indirect communication.

A radio wave propagation state between the UE-TX and the relay UE and a radio wave propagation state between the relay UE and the UE-RX are different. Thus, a situation in which the SL communication between the UE-TX and the relay UE becomes impracticable and a situation in which the SL communication between the relay UE and the UE-RX becomes impracticable may not match. When there is inconsistency between a connection state between the UE-TX and the relay UE and a connection state between the relay UE and the UE-RX, relay cannot be performed normally. As a result, problems such as wasting of resources retained for the inter-UE indirect communication via the relay UE and unnecessary continuation of processing by each UE may occur.

In the fourth embodiment, a method for solving such a problem will be disclosed.

The PC5 connection between the UE-TX and the relay UE and the PC5 connection between the relay UE and the UE-RX are synchronized with each other. The PC5 connection state between the relay UE and the UE-RX is determined depending on the PC5 connection state between the UE-TX and the relay UE. For example, when the PC5 connection between the UE-TX and the relay UE is released, the PC5 connection between the relay UE and the UE-RX is released.

A plurality of PC5 connections may be established between the UE-TX and the relay UE, and the PC5 connection may be established between the relay UE and the UE-RX so as to correspond to each of the PC5 connections. In such a case, each PC5 connection between the UE-TX and the relay UE and the corresponding PC5 connection between the relay UE and the UE-RX may be synchronized with each other. A corresponding PC5 connection state between the relay UE and the UE-RX is determined depending on each PC5 connection state between the UE-TX and the relay UE. For example, when one PC5 connection between the UE-TX and the relay UE is released, the corresponding PC5 connection between the relay UE and the UE-RX is released.

One or a plurality of PC5 connections may be established between the UE-TX and the relay UE, and one or a plurality of PC5 connections may be established between the relay UE and the UE-RX so as to correspond to the one or plurality of PC5 connections. In such a case, the one or plurality of PC5 connections between the UE-TX and the relay UE and the corresponding one or plurality of PC5 connections between the relay UE and the UE-RX may be synchronized with each other. A corresponding PC5 connection state between the relay UE and the UE-RX is determined depending on each PC5 connection state between the UE-TX and the relay UE. For example, when one PC5 connection between the UE-TX and the relay UE is released, the corresponding PC5 connection between the relay UE and the UE-RX is released.

Regarding the one or plurality of PC5 connections between the relay UE and the UE-RX, all of the states of the corresponding one or plurality of PC5 connections between the relay UE and the UE-RX may be determined depending on all of the corresponding PC5 connection states between the UE-TX and the relay UE. For example, when all of the PC5 connections between the UE-TX and the relay UE corresponding to the one or plurality of PC5 connections between the relay UE and the UE-RX are released, all of the corresponding one or plurality of PC5 connections between the relay UE and the UE-RX may be released.

In the PC5 connection, for a level of connection or a level of releasing connection, the method disclosed in the first embodiment may be applied as appropriate.

When the PC5 connection between the UE-TX and the relay UE is disconnected instead of the PC5 connection release between the UE-TX and the relay UE, the above-described method may be applied. When an RLF is detected in the PC5 connection between the UE-TX and the relay UE instead of the PC5 connection release between the UE-TX and the relay UE, the above-described method may be applied. A combination of these may be employed.

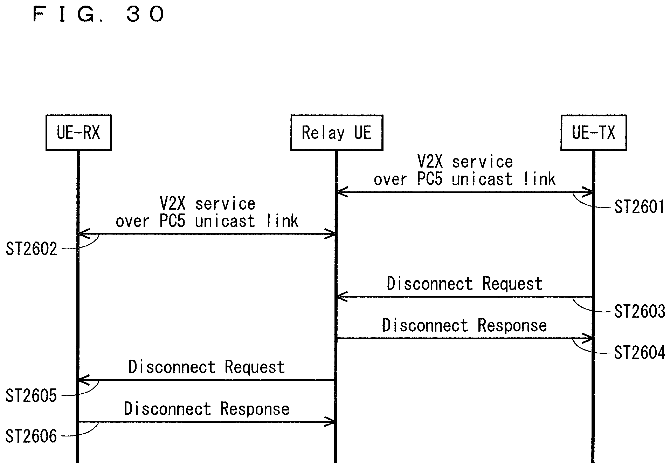

FIG. 30 is a sequence diagram illustrating an example of a method of releasing the PC5 connection between the relay UE and the UE-RX when the PC5 connection between the UE-TX and the relay UE is released according to the fourth embodiment. In Step ST2601, the PC5 connection is established between the UE-TX and the relay UE, and in Step ST2602, the PC5 connection is also established between the relay UE and the UE-RX. The discovery processing may be performed at the time of the PC5 connection establishment. By using the PC5 connections of Steps ST2601 and ST2602, V2X service data using the SL communication is communicated between the UE-TX and the UE-RX.

A case in which the UE-TX releases the connection with the relay UE will be disclosed. In Step ST2603, the UE-TX requests the relay UE to release the PC5 connection. In Step ST2604, the relay UE reports a response to the release request to the UE-TX. With this configuration, the PC5-S connection between the UE-TX and the relay UE is released. The PC5-S connection and the PC5-RRC connection between the UE-TX and the relay UE may be released.

The response to the release request in Step ST2604 may be reported after the PC5 connection between the UE-RX and the relay UE is released. After the relay UE confirms that the PC5 connection with the UE-RX has been released in Step ST2606, the response to the release request may be reported to the UE-TX. The UE-TX can recognize that the release of the PC5 connection between the relay UE and the UE-RX has been executed.

The relay UE that has released the PC5 connection with the UE-TX releases the PC5 connection with the UE-RX. In Step ST2605, the relay UE requests the UE-RX to release the PC5 connection. In Step ST2606, the UE-RX reports a response to the release request to the relay UE. With this configuration, the PC5-S connection between the relay UE and the UE-RX is released. The PC5-S connection and the PC5-RRC connection between the relay UE and the UE-RX may be released. The AS configuration between the relay UE and the UE-RX may be released.

With this configuration, the PC5 connection state between the UE-TX and the relay UE and the PC5 connection state between the relay UE and the UE-RX can synchronize with each other. When the PC5 connection between the UE-TX and the relay UE is released, the PC5 connection between the relay UE and the UE-RX can be released.

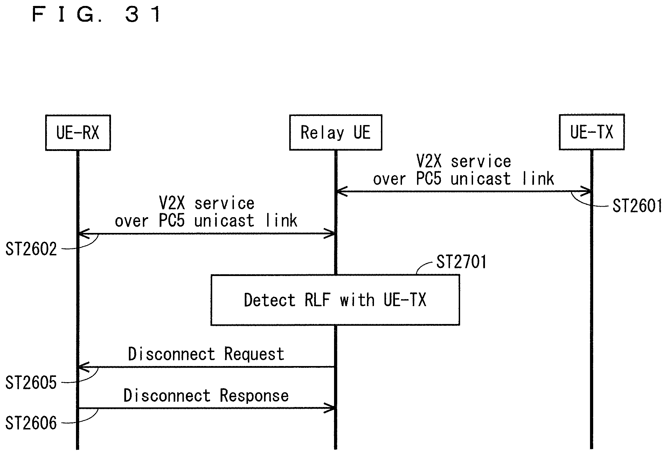

FIG. 31 is a sequence diagram illustrating an example of a method of releasing the PC5 connection between the relay UE and the UE-RX when an RLF is detected in the PC5 connection between the UE-TX and the relay UE according to the fourth embodiment. In FIG. 31, steps common to those of FIG. 30 are denoted by the same step numbers, and common description will be omitted. In Step ST2701, the relay UE detects that an RLF has occurred in the PC5 connection between the UE-TX and the relay UE. The relay UE that recognizes that the PC5 connection has become impracticable due to the detection of the RLF releases the PC5 connection with the UE-RX in Steps ST2605 and ST2606.

With this configuration, even when an RLF occurs in the PC5 connection between the UE-TX and the relay UE, the PC5 connection between the relay UE and the UE-RX can be released.

Another method will be disclosed. The PC5 connection between the relay UE and the UE-RX and the PC5 connection between the UE-TX and the relay UE are synchronized with each other. The PC5 connection state between the UE-TX and the relay UE is determined depending on the PC5 connection state between the relay UE and the UE-RX. For example, when the PC5 connection between the relay UE and the UE-RX is released, the PC5 connection between the UE-TX and the relay UE is released.

When a plurality of PC5 connections are established between the UE-TX and the relay UE and the PC5 connection is established between the relay UE and the UE-RX so as to correspond to each of the PC5 connections, the PC5 connection between the relay UE and the UE-RX and the corresponding PC5 connection between the UE-TX and the relay UE may be synchronized with each other. The corresponding PC5 connection state between the UE-TX and the relay UE is determined depending on the PC5 connection state between the relay UE and the UE-RX. For example, when the PC5 connection between the relay UE and the UE-RX is released, the corresponding PC5 connection between the UE-TX and the relay UE is released.

When one or a plurality of PC5 connections are established between the UE-TX and the relay UE and one or a plurality of PC5 connections are established between the relay UE and the UE-RX so as to correspond to the one or plurality of PC5 connections, the one or plurality of PC5 connections between the relay UE and the UE-RX and the corresponding one or plurality of PC5 connections between the UE-TX and the relay UE may be synchronized with each other. A corresponding PC5 connection state between the UE-TX and the relay UE is determined depending on each PC5 connection state between the relay UE and the UE-RX. For example, when one PC5 connection between the relay UE and the UE-RX is released, the corresponding PC5 connection between the UE-TX and the relay UE is released.

Regarding the one or plurality of PC5 connections between the UE-TX and the relay UE, all of the states of the corresponding one or plurality of PC5 connections between the UE-TX and the relay UE may be determined depending on all of the corresponding PC5 connection states between the relay UE and the UE-RX. For example, when all of the PC5 connections between the relay UE and the UE-RX corresponding to the one or plurality of PC5 connections between the UE-TX and the relay UE are released, all of the corresponding one or plurality of PC5 connections between the UE-TX and the relay UE may be released.

In the PC5 connection, for a level of connection or a level of releasing connection, the method disclosed in the first embodiment may be applied as appropriate.

When the PC5 connection between the relay UE and the UE-RX is disconnected instead of the PC5 connection release between the relay UE and the UE-RX, the above-described method may be applied. When an RLF is detected in the PC5 connection between the relay UE and the UE-RX instead of the PC5 connection release between the relay UE and the UE-RX, the above-described method may be applied. When reconnection is not performed for predetermined time after an RLF occurs in the PC5 connection between the relay UE and the UE-RX, the above-described method may be applied. A combination of these may be employed.

The method disclosed in the first modification of the first embodiment may be applied to the method disclosed in the fourth embodiment as appropriate. "S-UE" and "UE-TX" in the first modification of the first embodiment may be respectively replaced to "UE-TX" and "relay UE", and "UE-TX" and "UE-RX" in the first modification of the first embodiment may be respectively replaced to "relay UE" and "UE-RX".

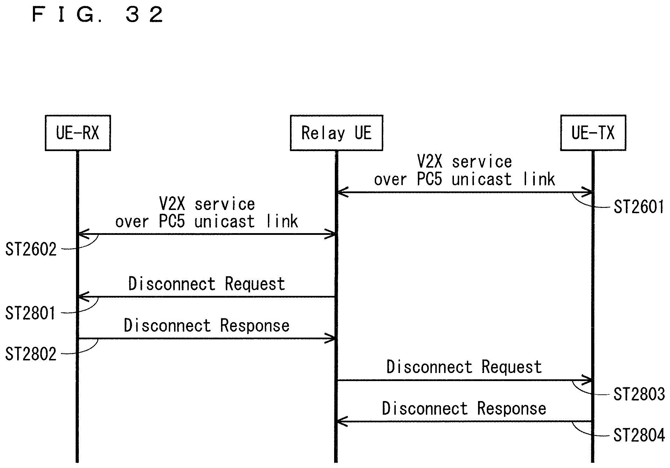

FIG. 32 is a sequence diagram illustrating an example of a method of releasing the PC5 connection between the UE-TX and the relay UE when the PC5 connection between the relay UE and the UE-RX is released according to the fourth embodiment. In FIG. 32, steps common to those of FIG. 31 are denoted by the same step numbers, and common description will be omitted.

The relay UE determines to release the PC5 connection with the UE-RX. In Steps ST2801 and ST2802, the relay UE releases the PC5 connection with the UE-RX. The relay UE that has released the PC5 connection with the UE-RX releases the PC5 connection with the UE-TX. In Steps ST2803 and ST2804, the relay UE releases the PC5 connection with the UE-RX.

With this configuration, the PC5 connection state between the relay UE and the UE-RX and the PC5 connection state between the UE-TX and the relay UE can synchronize with each other. When the PC5 connection between the relay UE and the UE-RX is released, the PC5 connection between the UE-TX and the relay UE can be released.

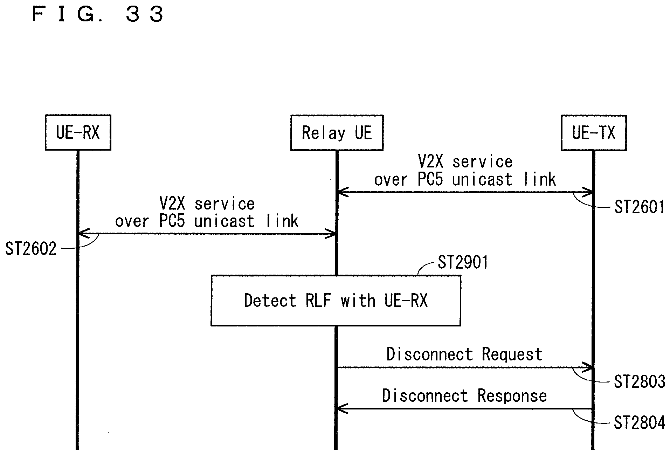

FIG. 33 is a sequence diagram illustrating an example of a method of releasing the PC5 connection between the UE-TX and the relay UE when an RLF is detected in the PC5 connection between the relay UE and the UE-RX according to the fourth embodiment. In FIG. 33, steps common to those of FIG. 32 are denoted by the same step numbers, and common description will be omitted. In Step ST2901, the relay UE detects that an RLF has occurred in the PC5 connection between the relay UE and the UE-RX. The relay UE that recognizes that the PC5 connection has become impracticable due to the detection of the RLF releases the PC5 connection with the UE-TX in Steps ST2803 and ST2804.

With this configuration, even when an RLF occurs in the PC5 connection between the relay UE and the UE-RX, the PC5 connection between the UE-TX and the relay UE can be released.

Whether or not to release the connection between the relay UE and the UE-RX may be determined depending on the connection state between the UE-TX and the relay UE. The relay UE may perform the determination. The relay UE determines the connection state between the UE-TX and the relay UE, and determines whether or not to release the connection between the relay UE and the UE-RX.

The UE-RX may perform the determination. The UE-RX determines the connection state between the UE-TX and the relay UE, and determines whether or not to release the connection between the relay UE and the UE-RX. A method for allowing the relay UE to determine the connection state between the UE-TX and the relay UE is required. The relay UE may detect the connection state between the UE-TX and the relay UE, and reports connection state information between the UE-TX and the relay UE to the UE-RX. As the connection state information, the PC5 connection state information disclosed in the first embodiment may be used. The UE-RX determines whether or not to release the connection between the relay UE and the UE-RX by using the connection state information received from the relay UE.

A PC5 connection release request may be provided. The relay UE may report the PC5 connection release request to the UE-RX. The PC5 connection state information between the UE-TX and the relay UE may be included in the PC5 connection release request. As the report method, the resource information report method disclosed in the first embodiment may be applied as appropriate. The UE-RX determines whether or not to release the connection between the relay UE and the UE-RX by using the PC5 connection release request received from the relay UE.

When the UE-RX determines to maintain the connection between the relay UE and the UE-RX, the UE-RX may report maintaining of the connection between the relay UE and the UE-RX to the relay UE. The report may be a response to the PC5 connection release request. The report may be a reject response to the PC5 connection release request. Cause information may be provided, and the cause information may be reported together with the reject response.

The UE-RX may report a request related to the connection between the UE-TX and the relay UE to the relay UE. Reconnection between the UE-TX and the relay UE may be requested. Reconnection request information may be provided, and the reconnection request information may be reported together with the reject response to the PC5 connection release request. The relay UE that has received a reconnection processing request with the UE-TX from the UE-RX performs reconnection processing with the UE-TX. As the reconnection processing, a direct communication request may be started to perform the reconnection processing of the PC5 connection. As the reconnection processing, the discovery processing may be performed before the direct communication request.

When the relay UE fails in the reconnection with the UE-TX, the relay UE may release the connection between the relay UE and the UE-RX.

The relay UE may report the PC5 connection release request to the UE-RX. A PC5 connection release indication may be provided. The relay UE may report the PC5 connection release indication to the UE-RX. For example, cause information may be reconnection failure with the UE-TX. When the UE-RX receives the PC5 connection release request or the PC5 connection release indication, the UE-RX may release the connection with the relay UE.

With this configuration, the UE-RX can determine the connection state between the UE-TX and the relay UE, and determine whether or not to release the connection between the relay UE and the UE-RX.

Whether or not to release the connection between the UE-TX and the relay UE may be determined depending on the connection state between the relay UE and the UE-TX. The relay UE may perform the determination. The relay UE determines the connection state between the UE-TX and the relay UE, and determines whether or not to release the connection between the UE-TX and the relay UE.

The UE-TX may perform the determination. The UE-TX determines the connection state between the relay UE and the UE-RX, and determines whether or not to release the connection between the UE-TX and the relay UE. A method for allowing the UE-TX to determine the connection state between the relay UE and the UE-RX is required. As the method, the above-described method for allowing the UE-RX to determine the connection state between the UE-TX and the relay UE may be applied as appropriate. "UE-RX" may be replaced to "UE-TX", and "between the UE-TX and the relay UE" may be replaced to "between the UE-RX and the relay UE".

With this configuration, the UE-TX can determine the connection state between the relay UE and the UE-RX, and determine whether or not to release the connection between the UE-TX and the relay UE.

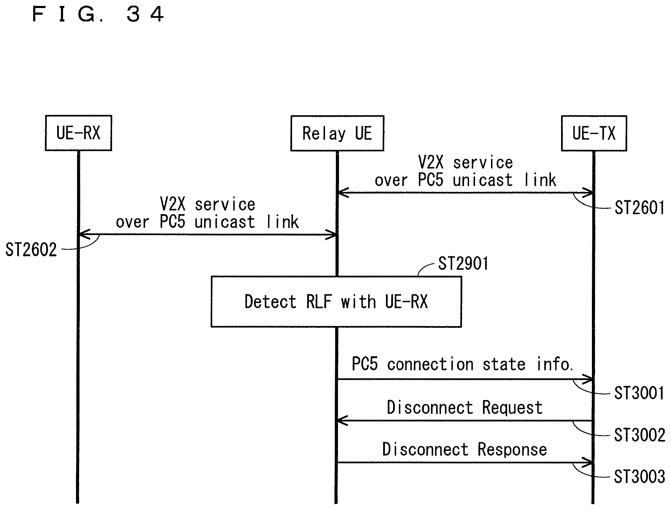

FIG. 34 is a sequence diagram illustrating an example of a method of releasing the PC5 connection between the UE-TX and the relay UE when an RLF is detected in the PC5 connection between the relay UE and the UE-RX according to the fourth embodiment. FIG. 34 illustrates a case in which the UE-TX starts release of the PC5 connection with the relay UE. In FIG. 34, steps common to those of FIG. 33 are denoted by the same step numbers, and common description will be omitted. The relay UE that has detected occurrence of an RLF in the PC5 connection between the relay UE and the UE-RX in Step ST2901 reports PC5 connection state information between the relay UE and the UE-RX to the UE-TX in Step ST3001. Here, information indicating that the PC5 connection between the relay UE and the UE-RX has been released may be included in the PC5 connection state information.

The UE-TX that has received the PC5 connection state information between the relay UE and the UE-RX from the relay UE determines whether to maintain or release the PC5 connection between the UE-TX and the relay UE by using the information. Here, the UE-TX recognizes that the PC5 connection between the relay UE and the UE-RX has been released, and thus the UE-TX releases the PC5 connection with the relay UE in Steps ST3002 and ST3003.

With this configuration, when an RLF occurs in the PC5 connection between the relay UE and the UE-RX, the UE-TX can determine whether or not to release the PC5 connection between the UE-TX and the relay UE.

### First Modification of Fourth Embodiment

Another connection method in the inter-UE indirect communication being the SL communication between the UEs via the relay UE will be disclosed.

Individual connection between the nodes and end-to-end connection are separated. The PC5 connection between the UE-TX and the relay UE and/or the PC5 connection between the relay UE and the UE-RX is separated from the connection between the UE-TX and the UE-RX.

After the PC5 connection between the UE-TX and the relay UE and the PC5 connection between the relay UE and the UE-RX are established, the PC5 connection between the UE-TX and the UE-RX is established. The order of the PC5 connection establishment between the UE-TX and the relay UE and the PC5 connection establishment between the relay UE and the UE-RX is not fixed. With the PC5 connection between the UE-TX and the UE-RX being established, the SL communication for the V2X service is performed between the UE-TX and the UE-RX.

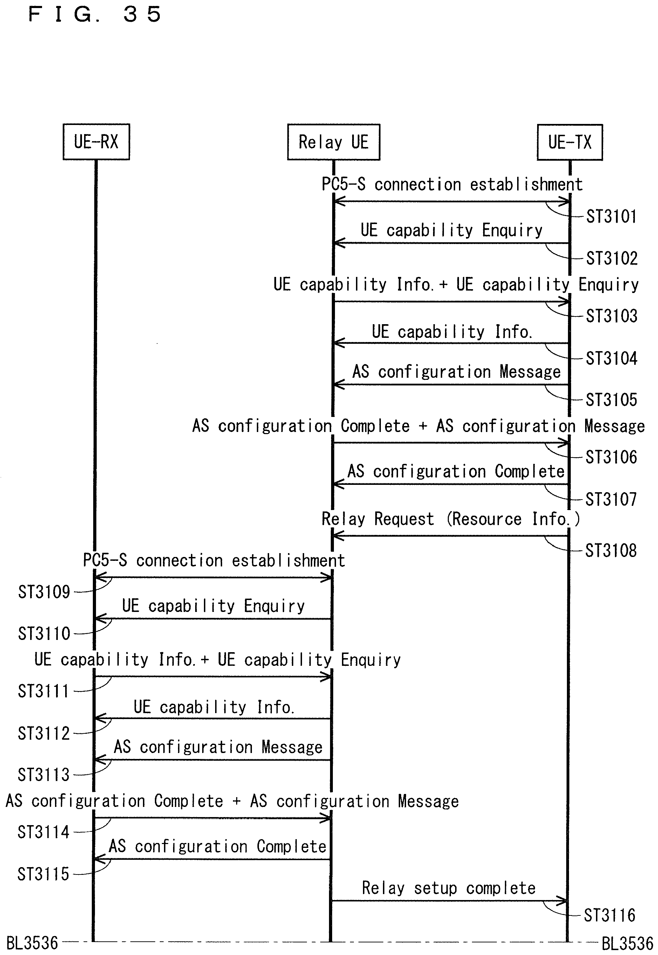

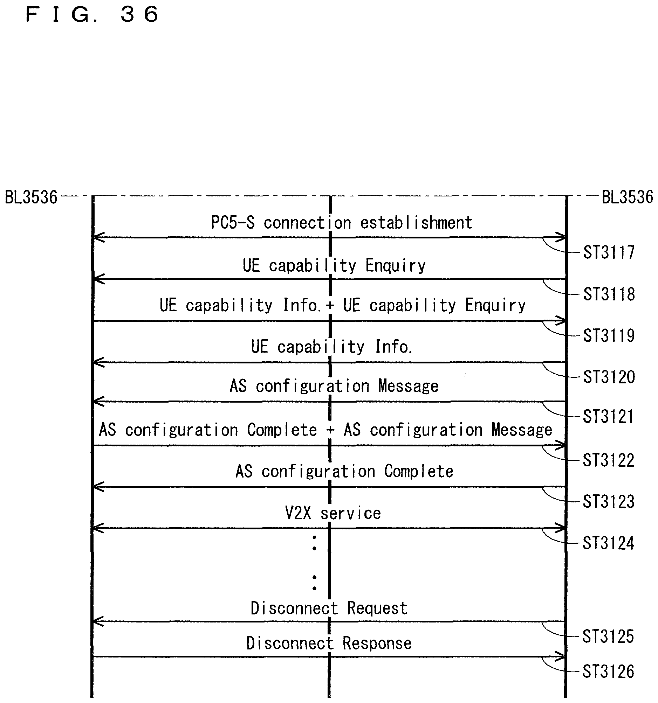

FIG. 35 and FIG. 36 are sequence diagrams illustrating an example of a method of establishing the PC5 connection between the UE-TX and the UE-RX after the PC5 connection between the UE-TX and the relay UE and the PC5 connection between the relay UE and the UE-RX are established according to the first modification of the fourth embodiment.

As an example, the following illustrates a case in which a V2X service performed by the UE-TX by using unicast communication of the SL with the UE-RX occurs. For example, when the UE-TX performs processing of detecting an opposite UE-RX of the V2X service and cannot detect the UE-RX, the UE-TX performs the inter-UE indirect communication with the UE-RX via the relay UE.

In Step ST3101, the UE-TX establishes the PC5-S connection with the relay UE. In order to establish the PC5-S connection between the UE-TX and the relay UE, discovery processing may be performed between the relay UE and the UE-TX. For example, the relay UE may report a discovery announcement message for performing announcement. The relay UE may include information indicating possession of a relay function in the announcement message. Information indicating possession of a UE-to-UE relay function and information indicating possession of a UE-to-Network relay function may be separately provided. The UE-TX can select a relay to be communicated depending on a situation.

For example, here, the relay UE includes information indicating possession of the UE-to-UE relay function in the announcement message. By receiving the announcement message, the UE-TX can detect the relay UE having the UE-to-UE relay function.

Alternatively, the UE-TX may report a discovery solicitation message for performing solicitation to the S-UE. The UE-TX may include information indicating solicitation of the UE having the relay UE function in the solicitation message. Information indicating possession of a UE-to-UE relay function and information indicating possession of a UE-to-Network relay function may be separately provided. The UE-TX can solicit a relay to be communicated depending on a situation.

When the relay UE having the relay UE function receives the solicitation message, the relay UE reports a response message to the UE-TX. The relay UE may include information indicating possession of the relay UE function in the response message. Information indicating possession of a UE-to-UE relay function and information indicating possession of a UE-to-Network relay function may be separately provided. The relay UE may include the information indicating possession of the UE-to-UE relay function in the response message. With this configuration, the UE-TX can detect the relay UE appropriate for the inter-UE indirect communication with the UE-RX via the relay UE.

In Step ST3102 to Step ST3104, the UE-TX and the relay UE report the UE capability of each other. The UE capability necessary for the SL communication between the UE-TX and the relay UE may be reported. The method disclosed in FIG. 14 and FIG. 15 may be applied as appropriate. Through these processings, the UE-TX and the relay UE can recognize the UE capability of each other.

In Step ST3105 to Step ST3107, the UE-TX and the relay UE report the AS configuration to each other. The AS configuration necessary for the SL communication between the UE-TX and the relay UE may be reported. The method disclosed in FIG. 14 and FIG. 15 may be applied as appropriate. Through these processings, the UE-TX and the relay UE can perform the AS configuration for each other.

In Step ST3108, the UE-TX reports a relay request to the relay UE. The UE-TX may report its own UE-TX identifier, a UE-RX identifier for performing the SL communication, and V2X service information for performing the SL communication together with the relay request or in the relay request. The V2X service information may be, for example, an identifier for identifying the service, and QoS required for the V2X service.

Further, resource information used between the relay UE and the UE-RX may be reported. The resource information may be included in the relay request to be reported. The relay UE that has received the relay request from the UE-TX configures resources to be used for the SL communication between the relay UE and the UE-RX. For example, the relay UE may select a resource pool, or may configure scheduling information such as resource allocation.

The relay UE that has received the relay request establishes the PC5-S connection with the UE-RX in Step ST3109. Similarly to the above description, the discovery processing may be performed.

In Step ST3110 to Step ST3112, the relay UE and the UE-RX report the UE capability of each other. The UE capability necessary for the SL communication between the relay UE and the UE-RX may be reported. In Step ST3113 to Step ST3115, the relay UE and the UE-RX report the AS configuration to each other. The AS configuration necessary for the SL communication between the relay UE and the UE-RX may be reported. Through these processings, the relay UE and the UE-TX can perform the AS configuration for each other.

In Step ST3116, the relay UE that has established the PC5 connection with the UE-RX reports, to the UE-TX, information indicating that relay using the PC5 connection with the UE-RX has been enabled. In the present invention, the information may be referred to as relay setup complete information. A relay setup complete message may be provided in PC5, and the information may be included in the message to be reported from the relay UE to the UE-TX. Instead of the relay setup complete information, the PC5 connection state information may be used. The PC5 connection state information between the relay UE and the UE-RX may be used.

With this configuration, the UE-TX recognizes that the report of the capability and the AS configuration using the PC5-S connection and the PC5-RRC connection has been completed between the relay UE and the UE-RX. The UE-TX can recognize that relay can be performed between the relay UE and the UE-RX.

The UE-TX that recognizes that relay can be performed between the relay UE and the UE-RX performs the PC5 connection with the UE-RX. The UE-TX performs the PC5 connection for the V2X service performed between the UE-TX and the UE-RX via the relay UE. In Step ST3117, the UE-TX establishes the PC5-S connection with the UE-RX. In Step ST3118 to Step ST3120, the UE-TX and the UE-RX report the UE capability of each other. In Step ST3121 to Step ST3123, the UE-TX and the UE-RX report the AS configuration to each other, and each UE performs the AS configuration.

With this configuration, the PC5-S connection can be established between the UE-TX and the UE-RX. Each UE can recognize information necessary for the V2X service performed between the UE-TX and the UE-RX. Further, the UE-TX and the UE-RX can recognize the capability of each other. Further, each UE can recognize the AS configuration necessary for the V2X service between the UE-TX and the UE-RX. Also when the relay UE is used between the UE-TX and the UE-RX, the V2X service using the SL communication can be performed. In Step ST3124, data communication of the V2X service is performed between the UE-TX and the UE-RX.

When the V2X service between the UE-TX and the UE-RX ends, in Step ST3125, the UE-TX requests the UE-RX to release the PC5 connection for the V2X service. A disconnect request message may be used. In Step ST3126, the UE-RX reports a response to the release request to the UE-TX. A disconnect response message may be used. With this configuration, the PC5-S connection between the UE-TX and the UE-RX is released. The PC5-S connection and the PC5-RRC connection between the UE-TX and the UE-RX may be released. The AS configuration between the UE-TX and the UE-RX may be released.

The PC5 connection between the UE-TX and the relay UE and the PC5 connection between the relay UE and the UE-RX are not released. When the PC5 connection between the UE-TX and the relay UE and the PC5 connection between the relay UE and the UE-RX are released, release processing may be performed individually therebetween.

With this configuration, individual connection between the nodes and end-to-end connection can be separated. Thus, for example, even after the PC5 connection between the UE-TX and the UE-RX is released, individual connection between the nodes can be maintained. When the V2X service between the UE-TX and the UE-RX occurs next, the connection processing between the UE-TX and the UE-RX need not be performed, which thus enables early report. Further, when the SL communication between the UE-TX and the UE-RX is no longer needed, the connection between the UE-TX and the UE-RX can be released. Resources used for the connection can be released, and resource use efficiency can thus be enhanced.

The PC5 connection between the UE-TX and the relay UE, and/or the PC5 connection between the relay UE and the UE-RX, and/or the PC5 connection between the UE-TX and the UE-RX are synchronized with each other.

For example, after the release of the PC5 connection between the UE-TX and the UE-RX, the PC5 connection between the UE-TX and the relay UE and/or the PC5 connection between the relay UE and the UE-RX may be maintained. With this configuration, when V2X service data occurs between the UE-TX and the UE-RX, the PC5 connection need no longer be performed again between the UE-TX and the relay UE and/or between the relay UE and the UE-RX. Thus, when V2X service data occurs between the UE-TX and the UE-RX, the SL communication between the UE-TX and the UE-RX can be performed with a low delay.

For example, when the PC5 connection between the UE-TX and the UE-RX is released, both of the PC5 connection between the UE-TX and the relay UE and the PC5 connection between the relay UE and the UE-RX may be released. With this configuration, resources for the PC5 connection between the UE-TX and the relay UE and the PC5 connection between the relay UE and the UE-RX can be released. Thus, use efficiency of the resources can be enhanced.

For example, when the PC5 connection between the UE-TX and the relay UE and/or the PC5 connection between the relay UE and the UE-RX is released, the PC5 connection between the UE-TX and the UE-RX need not be released. The PC5 connection may be maintained. With this configuration, when V2X service data occurs between the UE-TX and the UE-RX, it is only necessary that the PC5 connection between the UE-TX and the relay UE and/or between the relay UE and the UE-RX be performed, and the PC5 connection need no longer be performed again between the UE-TX and the UE-RX. Thus, when V2X service data occurs between the UE-TX and the UE-RX, the SL communication between the UE-TX and the UE-RX can be performed with a low delay.

The above-described method may be combined with the method disclosed in the fourth embodiment. For example, when the PC5 connection between the relay UE and the UE-RX is released, the PC5 connection between the UE-TX and the relay UE may be released, whereas the PC5 connection between the UE-TX and the UE-RX may be maintained. For example, when the PC5 connection between the UE-TX and the relay UE is released, the PC5 connection between the relay UE and the UE-RX may be released, whereas the PC5 connection between the UE-TX and the UE-RX may be maintained. With this configuration, when the PC5 connection either between the relay UE and the UE-RX or between the UE-TX and the relay UE is released while maintaining the PC5 connection between the UE-TX and the UE-RX, the other PC5 connection can be released. Thus, use efficiency of the resources can be enhanced. Further, when V2X service data occurs between the UE-TX and the UE-RX, the SL communication between the UE-TX and the UE-RX can be performed with a low delay.

As a connection level in the PC5 connection release, the level disclosed in the first embodiment may be applied as appropriate. For example, as the PC5 connection release, the AS configuration may be released. For example, as PC5 connection maintaining, the AS configuration may be maintained.

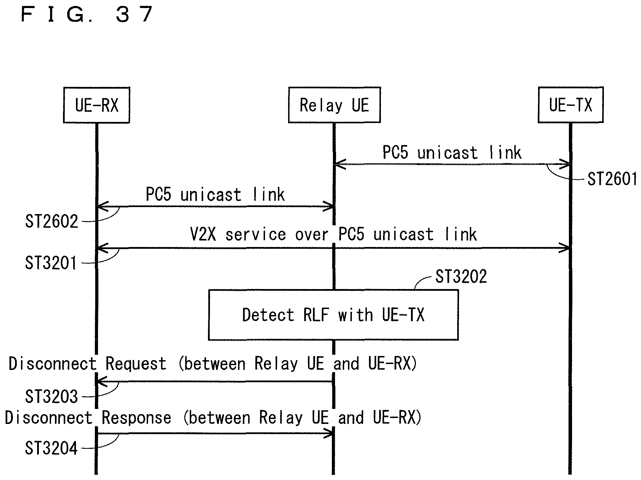

FIG. 37 is a sequence diagram illustrating an example of a method of releasing the PC5 connection between the relay UE and the UE-RX while maintaining the PC5 connection between the UE-TX and the UE-RX when an RLF is detected in the PC5 connection between the UE-TX and the relay UE according to the first modification of the fourth embodiment. In FIG. 37, steps common to those of FIG. 30 are denoted by the same step numbers, and common description will be omitted.

In Step ST2601, the PC5 connection is established between the UE-TX and the relay UE, and in Step ST2602, the PC5 connection is also established between the relay UE and the UE-RX. In Step ST3201, the PC5 connection between the UE-TX and the UE-RX is established, and V2X service data using the SL communication is communicated also when the relay UE is used therebetween.

A case in which the relay UE releases the connection with the UE-RX will be disclosed. In Step ST3202, the relay UE detects an RLF in the SL communication with the UE-TX. In Step ST3203, the relay UE requests the UE-RX to release the PC5 connection. In Step ST3204, the UE-RX reports a response to the release request to the relay UE. With this configuration, the PC5-S connection between the relay UE and the UE-RX is released. The PC5-S connection and the PC5-RRC connection between the relay UE and the UE-RX may be released. The AS configuration between the relay UE and the UE-RX may be released.

The PC5 connection between the UE-TX and the UE-RX is not released. When the PC5 connection between the UE-TX and the UE-RX is released, the release processing may be performed therebetween.

With this configuration, the PC5 connection state between the UE-TX and the relay UE and the PC5 connection state between the relay UE and the UE-RX can synchronize with each other, and each of the connection states and the PC5 connection state between the UE-TX and the UE-RX can be arranged not to synchronize with each other. When the PC5 connection between the UE-TX and the relay UE is released, the PC5 connection between the relay UE and the UE-RX can be released, and the PC5 connection between the UE-TX and the relay UE can be maintained.

With this configuration, individual connection between the nodes and end-to-end connection can be separated. Thus, for example, even after the PC5 connection between the nodes is released, the connection between the UE-TX and the UE-RX can be maintained. When the V2X service between the UE-TX and the UE-RX occurs next, the connection processing using the PC5-S connection and the PC5-RRC connection such as the AS configuration become unnecessary between the UE-TX and the UE-RX after individual connection between the nodes is established. Thus, data communication of the V2X service can be performed at an early stage.

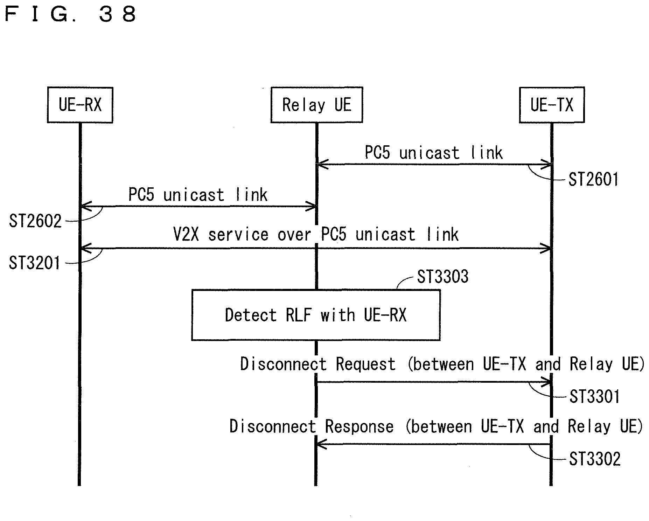

FIG. 38 is a sequence diagram illustrating an example of a method of releasing the PC5 connection between the UE-TX and the relay UE while maintaining the PC5 connection between the UE-TX and the UE-RX when an RLF is detected in the PC5 connection between the relay UE and the UE-RX according to the first modification of the fourth embodiment. In FIG. 38, steps common to those of FIG. 37 are denoted by the same step numbers, and common description will be omitted.

In Step ST3303, the relay UE detects that an RLF has occurred in the PC5 connection between the relay UE and the UE-RX. The relay UE that recognizes that the PC5 connection has become impracticable due to the detection of the RLF releases the PC5 connection with the UE-TX in Steps ST3301 and ST3302.

The PC5 connection between the UE-TX and the UE-RX is not released. When the PC5 connection between the UE-TX and the UE-RX is released, the release processing may be performed therebetween.

With this configuration, the PC5 connection state between the relay UE and the UE-RX and the PC5 connection state between the UE-TX and the relay UE can synchronize with each other, and each of the connection states and the PC5 connection state between the UE-TX and the UE-RX can be arranged not to synchronize with each other. When the PC5 connection between the relay UE and the UE-RX is released, the PC5 connection between the UE-TX and the relay UE can be released, whereas the PC5 connection between the UE-TX and the relay UE can be maintained.

For example, when the PC5 connection between the relay UE and the UE-RX is released, the PC5 connection between the UE-TX and the relay UE is released, and the PC5 connection between the UE-TX and the UE-RX is released. For example, when the PC5 connection between the UE-TX and the relay UE is released, the PC5 connection between the relay UE and the UE-RX may be released, and the PC5 connection between the UE-TX and the UE-RX may be released. With this configuration, when the PC5 connection either between the relay UE and the UE-RX or between the UE-TX and the relay UE is released, all of the PC5 connections between the nodes, including end-to-end PC5 connection, can be released. Thus, use efficiency of the resources can be further enhanced.

When the PC5 connection between the UE-TX and the relay UE and/or the PC5 connection between the relay UE and the UE-RX is already released, the PC5 connection release processing cannot be executed between the UE-TX and the UE-RX. For example, there is a problem that a connection release request (disconnect request) and a connection release response (disconnect response) cannot be reported between the UE-TX and the UE-RX. A method for solving such a problem will be disclosed.

When the PC5 connection between the UE-TX and the relay UE is released, the relay UE may report the PC5 connection state information between the UE-TX and the relay UE to the UE-RX. With this configuration, the UE-RX can recognize the PC5 connection state between the UE-TX and the relay UE. When the PC5 connection between the UE-TX and the relay UE is released, the UE-RX may release the PC5 connection with the UE-TX. The UE-RX may release the AS configuration necessary for the PC5 connection. The UE-RX may release resources necessary for the PC connection.

When the PC5 connection between the UE-TX and the relay UE is released, the UE-TX may release the PC5 connection with the UE-RX. The UE-TX may release the AS configuration necessary for the PC5 connection. The UE-TX may release resources necessary for the PC connection.

When the PC5 connection between the relay UE and the UE-RX is released, the relay UE may report the PC5 connection state information between the relay UE and the UE-RX to the UE-TX. Processing similar to that in the above description may be performed.

With this configuration, when the PC5 connection between the UE-TX and the relay UE and/or the PC5 connection between the relay UE and the UE-RX is already released, the PC5 connection between the UE-TX and the UE-RX can be released. Thus, the resources necessary for the PC5 connection between the UE-TX and the UE-RX can be released, and thus use efficiency of the resources can be enhanced. Further, the AS configuration necessary for the PC5 connection between the UE-TX and the UE-RX can be released.

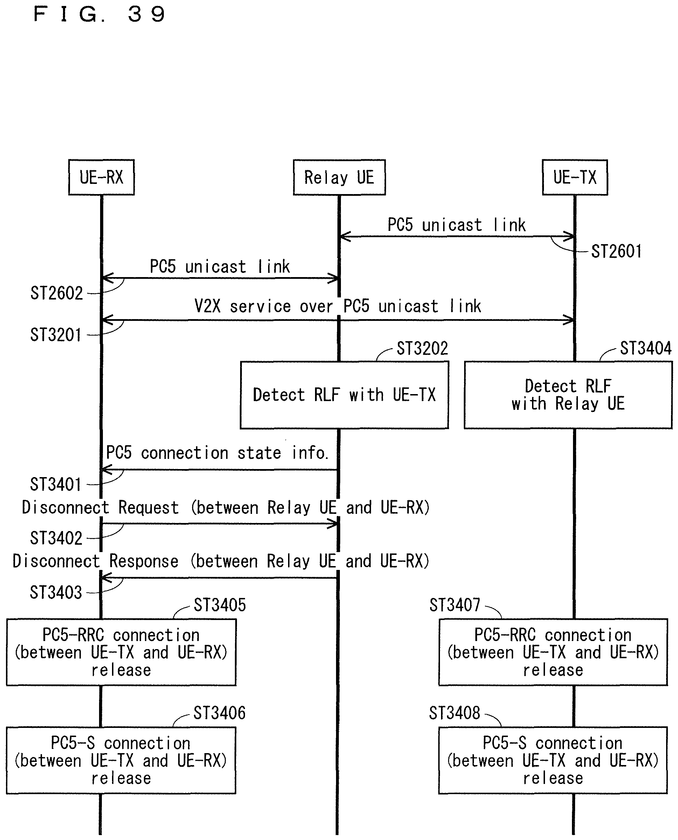

FIG. 39 is a sequence diagram illustrating an example of a method of releasing the PC5 connection between the UE-TX and the UE-RX when the PC5 connection between the relay UE and the UE-RX is released according to the first modification of the fourth embodiment. In FIG. 39, steps common to those of FIG. 37 are denoted by the same step numbers, and common description will be omitted.

In Step ST3202, the relay UE detects an RLF in the SL communication with the UE-TX. In Step ST3404, the UE-TX detects an RLF in the SL communication with the relay UE. The fact that the SL communication with the relay UE has become impracticable may be detected. In Step ST3401, the relay UE reports that an RLF has occurred in the PC5 connection between the UE-TX and the relay UE to the UE-RX. The PC5 connection state information may be used for the report. The UE-RX that recognizes that the PC5 connection between the UE-TX and the relay UE has become impracticable releases the PC5 connection with the relay UE.

In Step ST3402, the UE-RX requests the relay UE to release the PC5 connection. In Step ST3403, the relay UE reports a response to the release request to the UE-RX. With this configuration, the PC5-S connection between the relay UE and the UE-RX is released. The PC5-S connection and the PC5-RRC connection between the relay UE and the UE-RX may be released. The AS configuration between the relay UE and the UE-RX may be released.

The UE-RX that recognizes that the PC5 connection between the relay UE and the UE-RX has been released releases the PC5-RRC connection between the UE-TX and the UE-RX in Step ST3405. The UE-RX releases a configuration necessary for the PC5-RRC connection. The UE-RX that has released the PC5-RRC connection may release the PC5-S connection in Step ST3406. The UE-RX releases a configuration necessary for the PC5-S connection. The order of the release of the PC5-RRC connection and the release of the PC5-S connection is not limited to this.

The UE-TX that has detected an RLF in the SL communication with the relay UE releases the PC5-RRC connection between the UE-TX and the UE-RX in Step ST3407. The UE-TX releases a configuration necessary for the PC5-RRC connection. The UE-TX that has released the PC5-RRC connection may release the PC5-S connection in Step ST3408. The UE-TX releases a configuration necessary for the PC5-S connection. The order of the release of the PC5-RRC connection and the release of the PC5-S connection is not limited to this.

With this configuration, the PC5 connection state between the UE-TX and the relay UE and the PC5 connection state between the relay UE and the UE-RX can synchronize with each other, and each of the connection states and the PC5 connection state between the UE-TX and the UE-RX can also be synchronized with each other. When the PC5 connection between the UE-TX and the relay UE is released, the PC5 connection between the relay UE and the UE-RX can be released, and the PC5 connection between the UE-TX and the UE-RX can be released.

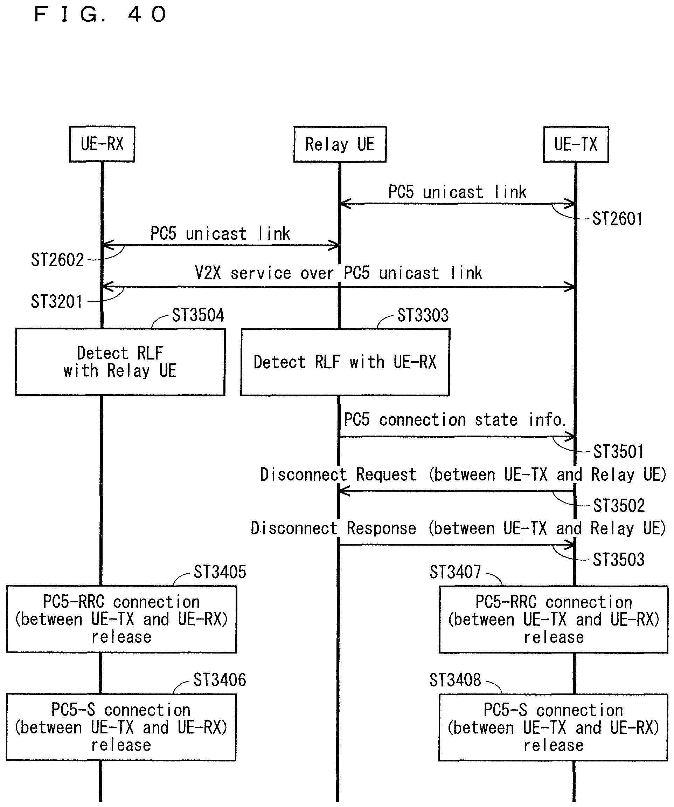

FIG. 40 is a sequence diagram illustrating an example of a method of releasing the PC5 connection between the UE-TX and the UE-RX when an RLF is detected in the PC5 connection between the relay UE and the UE-RX according to the first modification of the fourth embodiment. In FIG. 40, steps common to those of FIG. 39 are denoted by the same step numbers, and common description will be omitted.

In Step ST3303, the relay UE detects an RLF in the SL communication with the UE-RX. In Step ST3504, the UE-RX detects an RLF in the SL communication with the relay UE. The fact that the SL communication with the relay UE has become impracticable may be detected. In Step ST3501, the relay UE reports that an RLF has occurred in the PC5 connection between the relay UE and the UE-RX to the UE-TX. The UE-TX that recognizes that the PC5 connection between the relay UE and the UE-TX has become impracticable releases the PC5 connection with the relay UE.

In Step ST3502, the UE-TX requests the relay UE to release the PC5 connection. In Step ST3503, the relay UE reports a response to the release request to the UE-TX. With this configuration, the PC5-S connection between the UE-TX and the relay UE is released. The PC5-S connection and the PC5-RRC connection between the UE-TX and the relay UE may be released. The AS configuration between the UE-TX and the relay UE may be released.

With this configuration, the PC5 connection state between the relay UE and the UE-RX and the PC5 connection state between the UE-TX and the relay UE can synchronize with each other, and each of the connection states and the PC5 connection state between the UE-TX and the UE-RX can also be synchronized with each other. When the PC5 connection between the relay UE and the UE-RX is released, the PC5 connection between the UE-TX and the relay UE can be released, and the PC5 connection between the UE-TX and the UE-RX can be released.

When the PC5 connection release between the UE-TX and the relay UE and/or the PC5 connection release between the relay UE and the UE-RX is performed, if the PC5 connection between the UE-TX and the UE-RX is maintained indefinitely, the PC5 connection is undesirably maintained although the inter-UE indirect communication is impracticable. This leads to wasting of the resources and the AS configuration. A method for solving such a problem will be disclosed.

Time before release of the PC5 connection between the UE-TX and the UE-RX may be configured. A timer before release of the PC5 connection between the UE-TX and the UE-RX may be provided. A configuration of the time (which may be a timer) may be reported using the PC5-S signaling or the PC5-RRC signaling. The configuration of the time (which may be a timer) may be included in the AS configuration to be reported. The UE-TX may report the timer to the UE-RX. Alternatively, the UE-TX may report the timer to the relay UE and the UE-RX. Similarly, the UE-RX may report the timer to the UE-TX. Alternatively, the UE-RX may report the timer to the relay UE and the UE-TX. Alternatively, the timer may be statically determined in a standard or the like. With this configuration, the PC5 connection between the UE-TX and the UE-RX can be released according to the timer.

When communication cannot be performed between the UE-TX and the UE-RX for a predetermined time period, the PC5 connection between the UE-TX and the UE-RX may be released. The timer described above may be used. Each of the UE-TX and the UE-RX starts the timer in the last communication between the UE-TX and the UE-RX. When communication occurs during the timer time, the timer is reset. When the timer expires without communication, the PC5 connection between the UE-TX and the UE-RX is released. For example, the longest communication interval assumed for the V2X service using the SL communication may be configured as the timer. With this configuration, when communication cannot be performed due to some problem, the PC5 connection between the UE-TX and the UE-RX can be released.

When the PC5 connection between the UE-RX and the relay is released or when the reconnection processing of the PC5 connection is started in a situation in which in a situation in which the PC5 connection between the UE-RX and the relay is released, the timer described above may be started. When the PC5 connection between the UE-RX and the relay is reconnected within the timer, the timer is reset. When the timer expires, the UE-RX may release the PC5 connection between the UE-TX and the UE-RX. Alternatively, when the timer expires in a situation in which the PC5 connection between the UE-TX and the relay UE is maintained, the relay UE may report a release request or a release indication of the PC5 connection between the UE-TX and the UE-RX to the UE-TX. By the UE-TX receiving the PC5 connection release request or the PC5 connection release indication from the relay UE, the UE-TX may release the PC5 connection between the UE-TX and the UE-RX.

When the PC5 connection between the relay UE and the UE-TX is released or when the reconnection processing of the PC5 connection is started in a situation in which in a situation in which the PC5 connection between the relay UE and the UE-TX is released, the timer described above may be started. When the PC5 connection between the relay UE and the UE-TX is reconnected within the timer, timer is reset. When the timer expires, the UE-TX may release the PC5 connection between the UE-TX and the UE-RX. Alternatively, when the timer expires in a situation in which the PC5 connection between the relay UE and the UE-RX is maintained, the relay UE may report a release request of the PC5 connection between the UE-TX and the UE-RX to the UE-RX. By the UE-RX receiving the PC5 connection release request or the PC5 connection release indication from the relay UE, the UE-RX may release the PC5 connection between the UE-TX and the UE-RX.

When an RLF is detected in the PC5 connection instead of when the PC5 connection is released, the various methods described above may be applied as appropriate.

When reconnection of the PC5 connection between the UE-TX and the relay UE and/or reconnection of the PC5 connection between the relay UE and the UE-RX fails, the PC5 connection between the UE-TX and the UE-RX can be released. When the inter-UE indirect communication via the relay is impracticable between the UE-TX and the UE-RX, the PC5 connection can be released. Thus, an unnecessary AS configuration can be released, and use efficiency of the resources can be enhanced.

### Fifth Embodiment

The resource configuration method differs between when the S-UE is in coverage (IC) of the gNB and when the S-UE is out of coverage (OOC). When the S-UE is IC, the resource configuration is reported from the gNB after connection with the gNB. When the S-UE is OOC, the S-UE resource that are configured from the NW or that are configured (pre-configured) for the S-UE in advance.

When the UE-TX selects the S-UE, selection of the S-UE of IC allows for further reduction of collision of resources used for the SL owing to adjustment by the gNB. In contrast, selection of the S-UE of OOC allows the S-UE to perform configuration without waiting for configuration from the gNB, and the SL communication can be performed with a lower delay. However, in a conventional method, the UE-TX selects the S-UE having more satisfactory communication quality in selection of the S-UE, which hinders determination as to whether the UE-TX is IC or OOC.

In the fifth embodiment, a method for solving such a problem will be disclosed.

Information indicating IC or OOC is provided. Information as to whether or not connection with the gNB is performed may be provided. Information indicating with which gNB connection is performed may be provided. The information indicating with which gNB connection is performed may be included in the information as to whether or not connection with the gNB is performed. In the present invention, this may be referred to as IC/OOC information. The S-UE reports the information to the UE-TX. For example, when the S-UE establishes the PC5 connection with the UE-TX, the S-UE may report the information to the UE-TX. The UE-TX may select the S-UE by using the information at the time of the PC5 connection establishment.

For example, the S-UE may report the IC/OOC information at the time of discovery. For example, when the S-UE transmits the discovery announcement, the S-UE includes the IC/OOC information in the announcement for transmission. For example, when the UE-TX transmits the discovery solicitation message, the S-UE reports a response message to the received solicitation message to the UE-TX. The S-UE may include the IC/OOC information in the response message to report the IC/OOC information.

With this configuration, the UE-TX can receive the IC/OOC information transmitted from the S-UE, and when the UE-TX selects the S-UE, the S-UE can determine whether the S-UE is IC or OOC by using the IC/OOC information.

The UE-TX may preferentially select the S-UE of IC. When there are a plurality of S-UEs having predetermined received quality or greater, the UE-TX may preferentially select the S-UE of IC. For example, when reliability is required for the V2X service using the SL communication between the UE-TX and the UE-RX, the UE-TX may preferentially select the S-UE of IC. With this configuration, the gNB can avoid collision between resources used for the SL communication between the UE-TX and the UE-RX and resources used for the SL communication between other UEs. Consequently, communication quality of the SL communication between the UE-TX and the UE-RX can be enhanced. Thus, reliability of the V2X service using the SL communication between the UE-TX and the UE-RX can be enhanced.

When the UE-TX connects to the gNB, the UE-TX may preferentially select the S-UE connected to the same gNB. When there are a plurality of S-UEs having predetermined received quality or greater, the UE-TX may preferentially select the S-UE connected to the same gNB. For example, when the gNB determines resources for the SL communication between the UE-TX and the UE-RX, the UE-TX may preferentially select the S-UE connected to the same gNB. With this configuration, for example, difference between the resource configuration reported from the gNB to the UE-TX via the S-UE and the resource configuration reported directly from the gNB to the UE-TX can be forestalled. Consequently, occurrence of malfunction can be reduced. Thus, reliability of the V2X service using the SL communication between the UE-TX and the UE-RX can be enhanced.

The UE-TX may preferentially select the S-UE of OOC. When there are a plurality of S-UEs having predetermined received quality or greater, the UE-TX may preferentially select the S-UE of OOC. For example, when low delay characteristics are required for the V2X service using the SL communication between the UE-TX and the UE-RX, the UE-TX may preferentially select the S-UE of OOC. With this configuration, the SL communication between the UE-TX and the UE-RX can be performed at an early stage. Thus, the V2X service using the SL communication between the UE-TX and the UE-RX can be performed with a low delay.

The UE-TX may select the S-UE of IC or the S-UE of OOC depending on QoS required for the V2X service using the SL communication. An appropriate S-UE can be selected depending on the V2X service.

The UE-TX may report the information to the S-UE. For example, when the UE-TX establishes the PC5 connection with the S-UE, the UE-TX may report the information. The S-UE may determine whether or not connection with the UE-TX is possible by using the information at the time of the PC5 connection establishment.

For example, the UE-TX may report the IC/OOC information at the time of discovery. For example, in a case of IC, the UE-TX includes information of the connected gNB, for example, an identifier for identifying the gNB, in the IC/OOC information, to report the information. For example, when the UE-TX transmits the discovery solicitation message, the UE-TX includes the IC/OOC information in the solicitation message for transmission. By receiving the solicitation message, the S-UE can recognize whether or not there is a gNB connected by the UE-TX, and further, when there is a such a gNB, the S-UE can recognize with which gNB the UE-TX is connected.

The S-UE can determine whether the S-UE can serve as the S-UE for the UE-TX by using the information of the gNB connected by the UE-TX. For example, when the UE-TX is connected to the same gNB, the S-UE determines that the S-UE can serve as the S-UE for the UE-TX. In this case, the S-UE reports a response message to the UE-TX. The S-UE may include the information of the gNB connected by the S-UE in the response message to report the information. When the UE-TX is not connected to the same gNB, the S-UE determines that the S-UE cannot serve as the S-UE for the UE-TX. In this case, the S-UE does not transmit a response message to the UE-TX.

This can reduce occurrence of malfunction caused when the UE-TX and the S-UE are connected to different gNBs as described above. Thus, reliability of the V2X service using the SL communication between the UE-TX and the UE-RX can be enhanced.

The above description discloses an example in which the S-UE and the UE-TX are connected to one identical gNB. However, the number of gNBs may not necessarily be limited to one and may be more than one. A group of gNBs may be provided. As specific examples of the gNB group, the following (1) to (9) are disclosed.
(1) Base stations of the same RAT.
(2) Base stations in the same PLMN
(3) Base stations in the same NPN (the NPN may be, for example, a CAG).
(4) Base stations in the same network slice.
(5) Base stations in the same TA.
(6) Base stations in the same RAN-based notification area (RNA).
(7) Base stations in the same system information area. This may be base stations in an area in which the system information used for the SL communication is the same.
(8) Base stations that can support the same QoS requirements.
(9) Combination of (1) to (8).

The method disclosed in the above may be applied to the gNB group. For example, the UE-TX may preferentially select the S-UE connected to another gNB belonging to the gNB group to which the gNB connected by the UE-TX belongs. For example, when the gNB connected by the S-UE belongs to the same gNB group as the gNB connected by the UE-TX, the UE-TX may be able to select the S-UE.

Information related to the S-UE, the UE-TX, and the UE-RX may be reported between the gNB groups. With this configuration, cooperative processing can be performed in a wider area. For example, the UE capability, the AS configuration, and the like between the S-UE and the UE-TX and the UE capability, the AS configuration, and the like between the UE-TX and the UE-RX may be reported between the gNB groups in advance. For example, the information may be reported between the S-UEs connected to the gNB group in advance.

When the UE-TX changes the connected S-UE to another S-UE in the same or a different gNB in the same gNB group, the changed S-UE can recognize the information between the S-UE before being changed and the UE-TX and the information between the UE-TX and the UE-RX. With this configuration, the information between the changed S-UE and the UE-TX need not be newly reported. Further, the changed S-UE can recognize the information between the UE-TX and the UE-RX. The S-UE can configure and report the resource information to the UE-TX at an early stage. The same applies to a case in which the gNB configures the resource information.

The PC5 connection between the UEs may be prohibited depending on the connected gNB or gNB group. For example, when the gNB connected by the S-UE and the gNB connected by the UE-TX are different, the PC5 connection between the UEs may be prohibited.
gNB group information may be statically determined in advance in a standard or the like. Alternatively, the gNB group information may be semi-statically reported from the node that configures the gNB group to the UE that performs the SL communication. In Uu, the RRC signaling may be used. In PC5, the PC5-S signaling or the PC5-RRC signaling may be used. For example, the range of the gNB group can be configured depending on a radio wave propagation state and a load state. The gNB group information may be dynamically reported from the node that configures the gNB group to the UE that performs the SL communication. In Uu, the DCI may be used. In PC5, the SCI may be used. The range of the gNB group can be dynamically configured.

Examples of the node that configures the gNB group include an RAN node, a CN node, and the like.

With this configuration, the gNB outside the gNB group can be prohibited from performing the PC5 connection with the UE in a specific area. Consequently, the SL communication can be limited to between the UEs connected to a desired gNB. As a result, for example, interference with the UE connected to other than the gNB can be reduced.

Further, a supported Radio Access Technology (RAT) may be different for each UE that performs the SL communication. For example, a RAT capable of resource configuration may be different for each S-UE. Examples of the RAT include NR and LTE that support the SL communication and the like. In such a case, it is necessary to select the S-UE whose RAT supported by the S-UE is the same as the RAT for the SL communication supported by the UE-TX. However, in a conventional method, the UE-TX may not be able to select the S-UE supporting the same RAT.

Here, a method for solving such a problem will be disclosed.

Information indicating a supported RAT is provided. Information of a RAT capable of resource configuration may be provided. In the present invention, these pieces of information may be referred to as RAT information. The S-UE reports the RAT information supported by the S-UE to the UE-TX. For example, when the S-UE establishes the PC5 connection with the UE-TX, the S-UE may report the RAT information. The UE-TX may select the S-UE by using the RAT information at the time of the PC5 connection establishment.

For example, the UE-TX selects the S-UE capable of resource configuration with the RAT for the SL communication supported by the UE-TX.

The UE-TX may report the RAT information for the SL communication supported by the UE-TX to the S-UE. For example, when the UE-TX establishes the PC5 connection with the S-UE, the UE-TX may report the information. The S-UE may determine whether or not connection with the UE-TX is possible by using the information at the time of the PC5 connection establishment.

For example, when the S-UE can configure the resources with the RAT for the SL communication supported by the UE-TX, the S-UE determines that the S-UE can serve as the S-UE. In this case, the S-UE reports a response message to the UE-TX. The S-UE may include the RAT information supported by the S-UE in the response message to report the RAT information. When the S-UE cannot configure the resources with the RAT for the SL communication supported by the UE-TX, the S-UE determines that the S-UE cannot serve as the S-UE. In this case, the S-UE does not transmit a response message to the UE-TX.

As an example of the report method of the RAT information, the above-described method may be applied as appropriate.

The number of supported RATs may not necessarily be limited to one and may be more than one.

With this configuration, the UE-TX can select the S-UE supporting the RAT for the SL communication between the UE-TX and the UE-RX. The S-UE can report the resource information appropriate for the RAT for the SL communication between the UE-TX and the UE-RX to the UE-TX. With this configuration, also when the SL communication is supported in a plurality of RATs, the SL communication between the UE-TX and the UE-RX using the S-UE can be performed.

Further, a connected PLMN may be different for each UE that performs the SL communication. For example, a connected PLMN may be different for each S-UE. However, in a conventional method, the UE-TX may not be able to select the S-UE connected to the same PLMN

Here, a method for solving such a problem will be disclosed.

Information indicating a connected PLMN is provided. Information of the PLMN receiving authentication of the V2X service may be provided. In the present invention, these pieces of information may be referred to as PLMN information. As the PLMN information, for example, a PLMN identifier may be used. The S-UE reports the PLMN information connected by the S-UE to the UE-TX. For example, when the S-UE establishes the PC5 connection with the UE-TX, the S-UE may report the PLMN information. The UE-TX may select the S-UE by using the PLMN information at the time of the PC5 connection establishment.

For example, the UE-TX selects the S-UE that is connected to the PLMN connected by the UE-TX.

The UE-TX may report the PLMN information connected by the UE-TX to the S-UE. For example, when the UE-TX establishes the PC5 connection with the S-UE, the UE-TX may report the information. The S-UE may determine whether or not connection with the UE-TX is possible by using the information at the time of the PC5 connection establishment.

For example, when the S-UE is connected to the PLMN connected by the UE-TX, the S-UE determines that the S-UE can serve as the S-UE. In this case, the S-UE reports a response message to the UE-TX. The S-UE includes the PLMN information connected by the S-UE in the response message to report the PLMN information. When the S-UE is connected to a PLMN different from the PLMN connected by the UE-TX, the S-UE determines that the S-UE cannot serve as the S-UE. In this case, the S-UE does not transmit a response message to the UE-TX.

As an example of the report method of the PLMN information, the above-described method may be applied as appropriate.

The number of connected PLMNs or the PLMNs receiving authentication of the V2X service may not necessarily be limited to one and may be more than one.

With this configuration, the UE-TX can select the S-UE that is connected to the same PLMN as the PLMN connected by the UE-TX. The UE-TX can select the S-UE receiving authentication in the same PLMN as the PLMN receiving authentication in a desired V2X service. With this configuration, also when the SL communication is supported in a plurality of PLMNs, the SL communication between the UE-TX and the UE-RX using the S-UE can be performed.

A method for allowing the SL communication even when the PLMN connected by the S-UE and the PLMN connected by the UE-TX are different will be disclosed. Resources used for the SL communication between the S-UE and the UE-TX may be determined in advance in a standard or the like. Alternatively, the resources used for the SL communication between the S-UE and the UE-TX may be reported from the CN node when the S-UE and the UE-TX are connected to the CN node for authentication of the V2X service. With this configuration, the SL communication between the S-UE and the UE-TX can be performed even when the PLMN connected by the S-UE and the PLMN connected by the UE-TX are different.

Resources used for the SL communication between the UE-TX and the UE-RX may be determined in advance in a standard or the like. Alternatively, the resources used for the SL communication between the UE-TX and the UE-RX may be reported from the CN node when the S-UE is connected to the CN node for authentication of the V2X service. With this configuration, the SL communication between the UE-TX and the UE-RX can be performed even when the PLMN connected by the S-UE and the PLMN connected by the UE-TX are different.

The S-UE reports resources configured for the SL communication between the UE-TX and the UE-RX in advance and resources reported from the CN node to the UE-TX. The UE-TX may perform the SL communication with the UE-RX by using the resources.

With this configuration, the SL communication between the UE-TX and the UE-RX can be performed even when the PLMN connected by the S-UE and the PLMN connected by the UE-TX are different.

The UE may be connected to a non public network (NPN) (see Non-Patent Document 22). The NPN may be a private network (private NW). When the SL communication is supported in the NPN, a connected NPN may be different for each UE that performs the SL communication. For example, a connected NPN may be different for each S-UE. However, in a conventional method, the UE-TX may not be able to select the S-UE connected to the same NPN.

As a method for solving such a problem, the above-described method of providing the information indicating a connected PLMN may be applied as appropriate. "PLMN" may be replaced to "NPN". "PLMN information" may be replaced to "NPN information", or may be replaced to "information for identifying the NPN". When a closed access group (CAG) is configured as the NPN, information for identifying the CAG may be used. Alternatively, instead of the information indicating the PLMN, the PLMN and the NPN may be included, and information indicating the PLMN and the NPN may be used.

With this configuration, the UE-TX can, for example, select the S-UE that is connected to the same NPN as the NPN connected by the UE-TX. The UE-TX can select the S-UE receiving authentication in the same NPN as the NPN receiving authentication in a desired V2X service. With this configuration, also when the SL communication is supported in a plurality of NPNs or in a plurality of NPNs and PLMNs, the SL communication between the UE-TX and the UE-RX using the S-UE can be performed.

Regarding the method for enabling the SL communication even when the NPN connected by the S-UE and the NPN connected by the UE-TX are different, the above-described method may also be applied as appropriate. The SL communication between the UE-TX and the UE-RX can be performed even when the NPN or the PLMN connected by the S-UE and the NPN or the PLMN connected by the UE-TX are different. Further, the SL communication between the UE-TX and the UE-RX can be performed even when the NPN or the PLMN connected by the S-UE and the NPN or the PLMN connected by the UE-TX are different.

In the 5G core system, a network slice is supported (see Non-Patent Document 22). When the network slice is supported in a network including the PC5 interface, a used slice may be different for each service in which the SL communication is performed. In such a case, for example, the S-UE itself may be used in one or a plurality of specific slices. The S-UE may not retain the resource information used for the slice supporting the V2X service using the SL communication between the UE-TX and the UE-RX. However, in a conventional method, the UE-TX may not be able to select the slice supporting the V2X service using the SL communication, or the S-UE that retains the resource information used for the slice.

Here, a method for solving such a problem will be disclosed.

Information indicating the slice is provided. For example, information indicating the slice using the UE may be provided. Information indicating the slice using the resource information retained by the UE may be provided. In the present invention, these pieces of information may be referred to as slice support information. As the slice support information, information for identifying the network slice may be used. In the 5G core system, as an identifier for identifying the network slice, single network slice selection assistance information (S-NSSAI) is used. As the information for identifying the network slice, the S-NSSAI may be used.

The S-UE reports the slice support information of the S-UE to the UE-TX. For example, when the S-UE establishes the PC5 connection with the UE-TX, the S-UE may report the slice support information of the S-UE itself. The UE-TX may select the S-UE by using the slice support information of the S-UE at the time of the PC5 connection establishment.

For example, the UE-TX selects the S-UE supporting the slice supporting the V2X service performed in the SL communication.

The UE-TX may report the slice support information of the UE-TX to the S-UE. The UE-TX may report the information indicating of the slice supporting the V2X service using the SL communication performed by the UE-TX. For example, when the UE-TX establishes the PC5 connection with the S-UE, the UE-TX may report the slice support information. The S-UE may determine whether or not connection with the UE-TX is possible by using the slice support information at the time of the PC5 connection establishment.

For example, when the S-UE retains the resource information of the slice supporting the V2X service performed by the UE-TX by using the SL communication, the S-UE determines that the S-UE can serve as the S-UE. In this case, the S-UE reports a response message to the UE-TX. The S-UE may include the slice support information of the S-UE in the response message to report the slice support information. When the S-UE does not retain the resource information of the slice supporting the V2X service performed by the UE-TX by using the SL communication, the S-UE determines that the S-UE cannot serve as the S-UE. In this case, the S-UE does not transmit a response message to the UE-TX.

As an example of the report method of the slice support information, the above-described method may be applied as appropriate.

The number of slices may not necessarily be limited to one and may be more than one.

With this configuration, the UE-TX can acquire the resource information of the slice supporting the V2X service using the SL communication from the S-UE. The UE-TX can execute a desired V2X service in the supported slice. With this configuration, when the network slice is supported in the network including the PC5 interface, the V2X service using the SL communication can be performed by using a desired slice. By performing the SL communication in the slice supporting the V2X service, collision of resources between the SL communications can be avoided. Thus, also when the V2X service using a large number of SL communications is performed, QoS required for each V2X service can be satisfied.

In various services using the SL communication, required QoS is different for each service. Supportable QoS may be different for each S-UE. When a service using the SL communication such as V2X is performed, in a conventional method, the UE-TX may not be able to select the S-UE that satisfies QoS required for a service to be performed.

Here, a method for solving such a problem will be disclosed.

Information indicating supportable QoS is provided. In the present invention, these pieces of information may be referred to as S-UE supportable QoS information. As the S-UE supportable QoS information, for example, one or a plurality of parameters characterizing QoS may be used. Alternatively, for example, a QoS class identifier (QCI) may be used. For example, when the S-UE establishes the PC5 connection with the UE-TX, the S-UE may report the S-UE supportable QoS information. The UE-TX may select the S-UE by using the S-UE supportable QoS information at the time of the PC5 connection establishment.

For example, the UE-TX selects the S-UE supporting the QoS required for the service performed by the UE-TX by using the SL communication. The UE-TX selects the S-UE that may achieve the QoS required for the service performed by the UE-TX by using the SL communication.

The UE-TX may report information related to the QoS required for the service performed by the UE-TX to the S-UE. For example, when the UE-TX establishes the PC5 connection with the S-UE, the UE-TX may report the information. The S-UE may determine whether or not connection with the UE-TX is possible by using the information at the time of the PC5 connection establishment.

For example, when the S-UE supports the QoS required by the UE-TX, the S-UE determines that the S-UE can serve as the S-UE. In this case, the S-UE reports a response message to the UE-TX. The S-UE includes the S-UE supportable QoS information in the response message to report the S-UE supportable QoS information. When the S-UE does not support the QoS required by the UE-TX, the S-UE determines that the S-UE cannot serve as the S-UE. In this case, the S-UE does not transmit a response message to the UE-TX.

As an example of the report method of the S-UE supportable QoS information, the above-described method may be applied as appropriate.

The number of QoSs that can be supported by the S-UE may not necessarily be limited to one and may be more than one.

With this configuration, the UE-TX can select the S-UE that can support the QoS required for the service performed by the UE-TX by using the SL communication. The service using the SL communication between the UE-TX and the UE-RX using the S-UE can be performed.

Further, the S-UE may be provided for each predetermined area (which may be a zone). The S-UE of each area may perform resource configuration and resource allocation for the SL communication performed by the UE-TX in the same area. In such a case, when the UE-TX selects the S-UE, the UE-TX needs to select the S-UE in the same area. However, in a conventional method, the UE-TX selects the S-UE having more satisfactory communication quality in selection of the S-UE, and thus the UE-TX may not be able to select the S-U in the same area.

Here, a method for solving such a problem will be disclosed.

Information indicating an area in which the S-UE is located is provided. Information indicating an area in which the S-UE function of the S-UE is enabled may be provided. An area identifier indicating a certain area may be provided. The S-UE reports the information to the UE-TX. For example, when the S-UE establishes the PC5 connection with the UE-TX, the S-UE may report the information. The UE-TX may select the S-UE by using the information at the time of the PC5 connection establishment.

The area may be a TA, and as the area information, an identifier of the TA may be used. The area may be an RNA, and as the area information, an identifier of the RNA may be used. The area may be an area divided by longitude and latitude, and as the area information, longitude and latitude may be used. The area may be an area of a three-dimensional space, and as the area information, for example, longitude, latitude, and altitude may be used. A NW node may configure the area information. The NW node may report the area information to the S-UE.

For example, the S-UE may report the area information at the time of discovery. For example, when the S-UE transmits the discovery announcement, the S-UE includes the area information in the announcement for transmission. For example, when the UE-TX transmits the discovery solicitation message, the S-UE reports a response message to the received solicitation message to the UE-TX. The S-UE may include the area information in the response message to report the area information.

With this configuration, the UE-TX can receive the area information transmitted from the S-UE, and by using the area information at the time of selecting the S-UE, the UE-TX can determine whether or not the S-UE is the S-UE that can be connected to the UE-TX.

The UE-TX may report information indicating an area in which the UE-TX is located to the S-UE. For example, the UE-TX may report the information at the time of establishment of the PC5 connection with the S-UE. The S-UE may determine whether or not connection with the UE-TX is possible by using the information at the time of the PC5 connection establishment.

For example, the UE-TX may report the area information at the time of discovery. For example, when the UE-TX transmits the discovery solicitation message, the UE-TX includes the area information in the solicitation message for transmission. The S-UE can recognize the area in which the UE-TX is located by receiving the solicitation message. The S-UE can determine whether or not the S-UE serves as the S-UE for the UE-TX by using the area in which the UE-TX is located. For example, when the UE-TX is in the same area, the S-UE determines that the S-UE can serve as the S-UE. In this case, the S-UE reports a response message to the UE-TX. The S-UE may include the area information of the S-UE in the response message to report the area information. When the UE-TX is not in the same area, the S-UE determines that the S-UE cannot serve as the S-UE. In this case, the S-UE does not transmit a response message to the UE-TX.

With this configuration, the S-UE can receive the area information transmitted from the UE-TX. The S-UE can determine whether or not the S-UE can serve as the S-UE for the UE-TX by using the area information.

The UE-RX may report information indicating an area in which the UE-RX is located to the UE-TX. For example, the UE-RX may report the information at the time of establishment of the PC5 connection with the UE-TX. The UE-TX may determine whether or not connection with the UE-RX is possible by using the information at the time of the PC5 connection establishment. The above-described method may be applied as appropriate.

The UE-TX can receive the area information of the UE-RX transmitted from the UE-RX. The UE-TX can determine whether or not to perform PC5 connection establishment with the UE-RX by using the area information.

The UE-RX may report information indicating an area in which the UE-RX is located to the S-UE. The UE-RX may report the information to the S-UE via the UE-TX. For example, the UE-RX may report the information at the time of establishment of the PC5 connection with the UE-TX, and the UE-TX may report the information to the S-UE by using the PC5-RRC signaling. The S-UE can recognize the area in which the UE-RX is located. For example, the S-UE may use the information at the time of configuring resources for the SL communication between the UE-TX and the UE-RX.

The S-UE can recognize in which area the UE-TX and the UE-RX are located. This can facilitate adjustment of resources used for the SL communication between a plurality of UEs, and can reduce collision of the resources. As a result, reliability of the SL communication can be enhanced, and a low latency can be achieved.

The S-UE, the UE-TX, or the UE-RX may report information indicating an area in which each UE is located to the gNB or the CN node. The report may be performed via the S-UE. An interface Uu between the gNB and the UE may be used, and for example, RRC signaling may be used. For the report to the CN node, NAS signaling may be used. Alternatively, the report to the CN node may be performed via the gNB. N2 signaling may be used.

The S-UE, the UE-TX, or the UE-RX may report information indicating an area in which each UE is located to a node, a server, or an application having a function of location or positioning. For example, the node that has acquired the information can configure map information indicating in which area the UE that performs the SL communication is present. The area information (for example, an area, and an area identifier for identifying the area) may be common to each node.

Further, instead of the information indicating the area in which the UE is located, location information may be used. This eliminates the need of sharing the area information with each node. The location information may be absolute location information. For example, the node that has acquired the information can configure map information indicating at which location the UE that performs the SL communication is present. The location information may be relative location information. For example, the node that has acquired the information can configure map information indicating a relative location of the UE that performs the SL communication. The node that has acquired the location information may derive the area in which the UE is located from the location information.

Depending on locations or location areas of the opposite UEs that perform the SL communication, the PC5 connection between the UEs may be prohibited. Depending on a relative location relationship or a relationship of location areas between the UEs that perform the SL communication, the PC5 connection between the UEs may be prohibited. For example, when a location or a location area of one UE of the UEs that perform the SL communication exceeds a predetermined range, the PC5 connection with the one UE may be prohibited. For example, when a relative location relationship or a relationship of location areas between the UEs that perform the SL communication exceeds the predetermined range, the PC5 connection between the UEs may be prohibited.

A predetermined location or range may be statically determined in advance in a standard or the like. Alternatively, the predetermined location or range may be semi-statically reported from the node that configures the predetermined location or range to the UE that performs the SL communication. In Uu, the RRC signaling may be used. In PC5, the PC5-S signaling or the PC5-RRC signaling may be used. For example, the predetermined location or range can be configured depending on a radio wave propagation state and a load state. The predetermined location or range may be dynamically reported from the node that configures the predetermined location or range to the UE that performs the SL communication. In Uu, the DCI may be used. In PC5, the SCI may be used. The predetermined location or range can be dynamically configured.

Examples of the node that configures the predetermined location or range include the S-UE, the RAN node, the CN node, the application, and the like.

With this configuration, the PC5 connection with the UE in a specific area can be prohibited. By prohibiting the PC5 connection with the UE in a desired area, the SL communication can be limited to the inside of a specific area. As a result, for example, interference with the UE in another area can be reduced.

Further, even if communication quality is satisfactory at the start of connection between the UEs, the communication quality may deteriorate over time. For example, when moving speeds of the S-UE and the UE-TX are significantly different, even if communication quality is satisfactory at the start of connection between the S-UE and the UE-TX, the distance between the S-UE and the UE-TX is increased over time, and the communication quality between the UEs deteriorate.

Here, a method for solving such a problem will be disclosed.

Information indicating a moving speed of the S-UE is provided. When the S-UE establishes the PC5 connection with the UE-TX, the S-UE reports the moving speed information. The UE-TX may select the S-UE by using the information at the time of the PC5 connection establishment. For example, the UE-TX derives a relative speed by using the moving speed received from the S-UE and the moving speed of the UE-TX itself. When the relative speed is a predetermined value or less, the UE-TX may be able to select the S-UE, whereas when the relative speed exceeds the predetermined value, the UE-TX may be unable to select the S-UE.

Information indicating the moving speed of the UE-TX may be provided. When the UE-TX establishes the PC5 connection with the S-UE, the UE-TX reports the moving speed information to the S-UE. The S-UE can determine whether or not the S-UE can serve as the S-UE for the UE-TX by using the moving speed information. For example, the S-UE derives a relative speed by using the moving speed received from the UE-TX and the moving speed of the S-UE itself. When the relative speed is a predetermined value or less, the S-UE determines that the S-UE can serve as the S-UE for the UE-TX, whereas when the relative speed exceeds the predetermined value, the S-UE determines that the S-UE cannot serve as the S-UE for the UE-TX. The S-UE may report a response message to the UE-TX, based on the determination results.

Information indicating the relative speed may be provided. For example, the S-UE or the UE-TX derives the relative speed of each other. When the S-UE establishes the PC5 connection with the UE-TX, the S-UE reports the moving speed information. Alternatively, when the UE-TX establishes the PC5 connection with the S-UE, the UE-TX reports the moving speed information to the S-UE. With this configuration, effects similar to those described above can be achieved. Further, processing in which each node derives the relative speed from the moving speed acquired from another node can be reduced. Deterioration of accuracy of the relative speed being caused by a difference of measurement time of the moving speed in each node can be reduced.

The moving speed and the relative speed may be used as two-dimensional or three-dimensional speed vectors. This enables representation of the moving speed and the relative speed in a space.

As an example of the report method of the moving speed information and the relative speed information, the above-described method may be applied as appropriate.

The PC5 connection between the UEs may be prohibited depending on the moving speeds of the opposite UEs that perform the SL communication. The PC5 connection between the UEs may be prohibited depending on the relative speed between the UEs that perform the SL communication. For example, when the moving speed of one UE of the UEs that perform the SL communication exceeds a predetermined value, the PC5 connection with the one UE may be prohibited. For example, when the relative speed between the UEs that perform the SL communication exceeds the predetermined value, the PC5 connection between the UEs may be prohibited.

The above-described predetermined value may be statically determined in advance in a standard or the like. Alternatively, the predetermined value may be semi-statically reported from the node that configures the predetermined value to the UE that performs the SL communication. For example, the predetermined value can be configured depending on a radio wave propagation state and the location of the UE. Alternatively, the predetermined value may be dynamically reported from the node that configures the predetermined value to the UE that performs the SL communication. The predetermined value can be dynamically configured. As the report method of the predetermined value, the above-described method may be applied as appropriate.

Similarly to the above description, examples of the node that configures the predetermined value include the S-UE, the RAN node, the CN node, the application, and the like.

With this configuration, after connection between the UEs, deterioration of the communication quality due to the elapse of time can be reduced. The SL communication between the S-UE and the UE-TX can be performed for a long time period. Occurrence of processing such as change of the S-UE can be reduced.

The IC/OOC information, the RAT information, the PLMN information, the NPN information, the slice support information, the area information, the moving speed information, the relative speed information, and the like described above may be changed. Such a case includes a case in which the S-UE moves, and a case in which the UE-TX moves. Examples include a case in which the S-UE moves from OOC to IC, a case in which the gNB to be connected is changed within IC, a case in which the area in which the S-UE is located is changed, and the like. In such cases, the information is modified.

When the information is modified, modification information may be reported between the UEs. For example, the modification information may be reported between the S-UE and the UE-TX, may be reported between the UE-TX and the UE-RX, or may be reported between the S-UE and the UE-RX. Depending on the method described above, report may be performed between relevant UEs, or between relevant nodes including a relevant UE. The node that performs the modification of the information may start report processing. In the SL, the modification information may be reported by using the PC5-S signaling or the PC5-RRC signaling.

For example, when the modification information is reported during the PC5 connection between the S-UE and the UE-TX and the UE-TX is thereby made unable to connect with the S-UE, release processing of the PC5 connection may be started between the UE-TX and the S-UE. By performing discovery processing for a new connectable S-UE, the UE-TX may select the connectable S-UE and perform the PC5 connection with the selected new S-UE.

With this configuration, pieces of information that change over time can be modified one by one, and the modified pieces of information can be reported to a relevant UE. The UE that has received the modified pieces of information can recognize the UE that can perform the optimal PC5 connection by using the modified pieces of information.

A message for requesting the report of the above-described information may be provided. In the message, information indicating which piece of information is requested to be reported may be included. For example, the UE-TX reports the request message for the information to the S-UE. The S-UE reports the information to the UE-TX. The request message for the information may be reported by using the PC5-S signaling or the PC5-RRC signaling. The request message for the information may be reported at the time of PC5 connection establishment. With this configuration, for example, when the UE-TX is to perform the SL communication with a new UE-RX, the S-UE appropriate for the V2X service using the SL communication can be selected.

The first embodiment discloses that the S-UE connected by the UE-TX and the S-UE connected by the UE-RX may be different. The UE-TX and the UE-RX may cooperate to select the S-UE. The above-described information may be reported between the UE-TX and the UE-RX. For example, the UE-TX reports information related to the selected S-UE to the UE-RX. For example, the information related to the S-UE may include information of the gNB connected by the S-UE. By receiving the information related to the S-UE connected by the UE-TX from the UE-TX, the UE-RX can recognize the gNB connected by the S-UE.

The UE-RX may select the S-UE connected by the UE-RX by using the information. For example, the UE-RX preferentially selects the S-UE that is connected to the same gNB as the gNB connected by the S-UE connected by the UE-TX. With this configuration, the S-UE connected by the UE-TX and the S-UE connected by the UE-RX are connected to the same gNB. For example, the gNB configures resources used for the communication from the UE-TX to the UE-RX and resources used for the communication from the UE-RX to the UE-TX. The gNB reports the configured resource information to the UE-TX and the UE-RX via respective S-UEs.

For example, the gNB configures so that the resources used for the communication in each direction do not collide with each other. With this configuration, collision of the resources used for the communication in each direction can be avoided, and reliability of the SL communication can be enhanced. The UE-TX and the UE-RX can cooperate to select the S-UE, and thus the communication quality of the SL communication in bidirectional can be enhanced, reliability can be enhanced, and low delay characteristics can be enhanced.

The method disclosed in the fifth embodiment may be applied to the inter-UE indirect communication via the relay UE. "S-UE" in the above description may be replaced to "relay UE". Similar effects can be achieved. For example, when the UE-TX selects the relay UE, the UE-TX can determine whether the relay UE is IC or OOC. The relay UE can be selected depending on the QoS required for the V2X service using the inter-UE indirect communication via the relay UE.

For example, when the UE-TX selects the relay UE, the UE-TX can acquire the area information in which the relay UE is located. The UE-TX can determine whether or not connection with the relay UE is possible.

### Sixth Embodiment

Capability of the S-UE may be provided. By reporting the capability of the S-UE to the CN, the UE may be authenticated as the S-UE and operate as the S-UE. However, depending on a radio wave propagation state, a congestion state, a load state of the UE itself, a remaining battery, a use state, a use mode, or the like, in some cases, the function of the S-UE is to be turned off. However, simply applying the above-described method does not suffice, and once the UE is authenticated as the S-UE, the UE undesirably continues to operate as the S-UE.

In the sixth embodiment, a method for solving such a problem will be disclosed.

Information for turning off/on the function of the S-UE is provided. Activation/deactivation information may be provided. For example, the gNB determines whether to turn on or off the function of the S-UE. The gNB reports off/on information of the S-UE function to the S-UE. When the off/on information reported from the gNB indicates off, the S-UE stops the S-UE function. When it indicates on, the S-UE activates or resumes the S-UE function.

The gNB may determine whether to turn on or off the function of the S-UE by using a radio wave propagation state, a congestion state, or the like. Further, the S-UE may report a load state, a remaining battery, a use state, a use mode, or the like of the UE itself to the gNB. The gNB may determine whether to turn on or off the function of the S-UE by using the information reported from the S-UE.

With this configuration, when the S-UE does not necessitate the S-UE function, the S-UE function can be turned off. For example, discovery processing with the UE-TX can be turned off. By turning off the S-UE function, processing of the S-UE can be facilitated. Power consumption of the S-UE can be reduced.

The node of the CN may determine whether to turn on or off the function of the S-UE. The CN node reports the off/on information of the S-UE function to the S-UE. The CN node may report the information via the gNB. When the off/on information reported from the CN node indicates off, the S-UE stops the S-UE function. When it indicates on, the S-UE activates or resumes the S-UE function.

The gNB may report information such as a radio wave propagation state and a congestion state to the CN node. Further, the S-UE may report a load state, a remaining battery, a use state, a use mode, or the like of the UE itself to the CN node via the gNB. The CN node may determine whether to turn on or off the function of the S-UE by using the information reported from the S-UE.

With this configuration, similar effects can be achieved.

The S-UE may determine whether to turn on or off the function of the S-UE itself. The S-UE may determine whether to turn on or off the function of the S-UE itself depending on a load state, a remaining battery, a use state, a use mode, or the like of the UE itself. For example, one example of the use state is the location of the S-UE. When the location of the S-UE is outside an area in which performing of the S-UE operation is predetermined, the S-UE may turn off the S-UE function of the UE itself. When the location of the S-UE is inside the area in which performing of the S-UE operation is predetermined, the S-UE may turn on the S-UE function of the UE itself.

With this configuration, similar effects can be achieved.

Off/on of the S-UE function may be configured for each V2X service. Alternatively, off/on of the S-UE function may be configured for each application. Alternatively, off/on of the S-UE function may be configured for each PC5 connection. This enables flexible configuration, and fine control of power consumption of the S-UE.

For example, when the S-UE receives information indicating turning off of the function of the S-UE while the S-UE is in connection with the UE-TX, the S-UE needs to stop the connection with the UE-TX, and is thus made unable to report the resource information to the UE-TX.

Here, a method for solving such a problem will be disclosed.

It may be arranged that the S-UE does not turn off the S-UE function while the S-UE is in connection with the UE-TX. Turning off the S-UE function may be prohibited while the S-UE is in connection with the UE-TX. Even when the information for turning off the S-UE function is reported from the gNB or the CN node to the S-UE, it may be arranged that the S-UE function is not turned off while the S-UE is in connection with the UE-TX. Alternatively, even when the information for turning off the S-UE function is reported, turning off of the S-UE function may be prohibited while the S-UE is in connection with the UE-TX. With this configuration, while the S-UE is in connection with the UE-TX, the function of the S-UE can be turned on. The S-UE can report the resource information for the SL communication to the connected UE-TX.

Another method will be disclosed. When the S-UE function is turned off while the S-UE is in connection with the UE-TX, the UE-TX may use resources configured for the UE-TX in advance for the SL communication with the UE-RX. The UE-TX may perform resource allocation for the SL communication for the UE-RX by using the resources configured in the UE-TX in advance.

The S-UE may report turning off of the S-UE function to the UE-TX. The S-UE may report the off/on information of the S-UE function to the UE-TX. The UE-TX that has received the off/on information of the S-UE function may report a response message to the S-UE. The UE-TX may perform processing corresponding to the information, and report a response message to the S-UE. For example, when the UE-TX receives turning off of the S-UE function, the UE-TX switches to a mode of performing resource allocation for the SL communication for the UE-RX by using the resources configured in the UE-TX in advance. After completion of the switch processing, the UE-TX may report a response message to the S-UE.

The UE-TX may report reject information as the response message. Alternatively, a reject message may be provided, and the UE-TX may report the message. For example, when the UE-TX cannot perform the above-described processing of switching the mode of performing resource allocation for the SL communication for the UE-RX by using the resources configured in the UE-TX in advance, the UE-TX may include the reject information in the response message to report the response message to the S-UE. Cause information may be included in the reject information or the response message. With this configuration, the S-UE can determine whether or not to turn off the S-UE function. When the S-UE receives the reject information, the S-UE may determine not to turn off the S-UE function.

These information and message may be reported using the PC5 connection between the S-UE and the UE-TX. PC5-S signaling, PC5-RRC signaling, or PC5-MAC signaling may be used. Alternatively, the information and the message may be included in the SCI to be reported.

With this configuration, even if the S-UE receives information indicating turning off of the function of the S-UE while the S-UE is in connection with the UE-TX, the V2X service using the SL communication performed between the UE-TX and the UE-RX can be maintained.

Capability of the relay UE may be provided. By reporting the capability of the relay UE to the CN, the UE may be authenticated as the relay UE and operate as the relay

UE. However, depending on a radio wave propagation state, a congestion state, a load state of the UE itself, a remaining battery, a use state, a use mode, or the like, in some cases, the function of the relay UE is to be turned off. However, simply applying the above-described method does not suffice, and once the UE is authenticated as the relay UE, the UE undesirably continues to operate as the relay UE.

As a method for solving such a problem, the above-described method may be applied to the inter-UE indirect communication via the relay UE. "S-UE" in the above description may be replaced to "relay UE". Similar effects can be achieved.

Information for turning off/on the function of the relay UE is provided. Activation/deactivation information may be provided. For example, the gNB determines whether to turn on or off the function of the relay UE. The gNB reports off/on information of the relay UE function to the relay UE. When the off/on information reported from the gNB indicates off, the relay UE stops the relay UE function. When it indicates on, the relay UE activates or resumes the relay UE function.

Another method will be disclosed. The UE-TX determines whether to turn on or off the function of the relay UE. The UE-TX reports the off/on information of the relay UE function to the relay UE. When the off/on information reported from the UE-TX indicates off, the relay UE stops the relay UE function. When it indicates on, the relay UE activates or resumes the relay UE function. With this configuration, in a case of the V2X service data that requires relay, the UE-TX can turn on the relay UE function, whereas in a case of the V2X service data that does not require relay, the UE-TX can turn off the relay UE function.

This enables flexible configuration of the relay function of the relay UE, and fine control of power consumption of the relay UE.

Although it is disclosed that the UE-TX determines whether to turn on or off the function of the relay UE, the UE-RX may determine whether to turn on or off the function of the relay UE. The UE-RX reports the off/on information of the relay UE function to the relay UE. Similar effects can be achieved.

When the UE-TX determines off/on of the relay UE function and reports the determination results to the relay UE, the relay UE may report whether the relay UE function has been turned off or on to the UE-RX. With this configuration, malfunction in the relay processing between the UE-TX and the UE-RX can be reduced. When the UE-RX determines off/on of the relay UE function and reports the determination results to the relay UE, the relay UE may report whether the relay UE function has been turned off or on to the UE-TX. Similar effects can be achieved.

When the S-UE turns on the S-UE function, the S-UE operates for communication between other UEs. Further, similarly, when the relay UE turns on the relay function, the relay UE operates for communication between other UEs. The S-UE may report a communication amount while keeping the S-UE function on to the gNB or the CN node. The relay UE may report a communication amount while keeping the relay UE function on to the CN node via the gNB or the gNB. The communication amount may be a communication amount for signaling, may be a communication amount of user plane data, or may be a communication amount including both.

The communication amount may be a communication amount for each service, may be a communication amount for each PC5 connection, or may be a communication amount for each bearer. With this configuration, for example, even when a plurality of services are communicated between the UE-TX and the UE-RX, the communication amount for each service can be reported.

By acquiring the communication amount while the S-UE function is kept on and the communication amount while the relay UE function is kept on, for example, the gNB or the CN node can estimate the resource amount required for the communication. Further, for example, the CN node can derive billing information by using the communication amount. The derived billing (billing information) may be transferred to billing of communication between relevant UEs. With this configuration, appropriate procedures can be carried out regarding billing when the S-UE and the relay UE are used for communication between other UEs.

Each embodiment and its modifications described above are merely examples, and each embodiment and its modifications can be freely combined together. Further, any constituent element in each embodiment and its modifications can be changed or omitted as appropriate.

For example, in each embodiment and its modifications described above, the subframe is an example of a unit of time of communication in a fifth generation base station communication system. It may be a unit of scheduling. In each embodiment and its modifications described above, processing described as a unit of a subframe may be performed as a unit of a TTI, a unit of a slot, a unit of a sub-slot, or a unit of a mini-slot.

For example, the methods disclosed in each embodiment and its modifications described above may be applied not only to a vehicle-to-everything (V2X) service but also to services using the SL communication. For example, the methods disclosed in each embodiment and its modifications described above may be applied to the SL communication used in various services, such as a proximity service (proximity-based service), public safety, communication between wearable terminals, and communication between devices in a factory.

While the present invention has been shown and described in detail, the foregoing description is in all aspects illustrative and not restrictive. It is understood that numerous unillustrated modifications can be devised without departing from the scope of the present invention.

### Explanation of Reference Signs

- 200: communication system
- 202: communication terminal apparatus
- 203: base station apparatus
- 210: communication system

## Claims

1. A communication system comprising:
a first communication terminal;
a second communication terminal configured to perform inter-terminal communication with the first communication terminal; and
a third communication terminal configured to perform inter-terminal communication with the first communication terminal, wherein
the third communication terminal reports resource information for the inter-terminal communication between the first communication terminal and the second communication terminal to the first communication terminal via an interface for the inter-terminal communication between the first communication terminal and the third communication terminal.

2. The communication system according to claim 1, wherein
the interface is one of
PC5-S signaling,
PC5-RRC signaling,
a radio bearer configured for the inter-terminal communication between the first communication terminal and the third communication terminal, and
a message provided for report of the resource information.

3. The communication system according to claim 1 or 2, wherein
when a predetermined situation occurs after the report of the resource information, connection between the first communication terminal and the third communication terminal is released.

4. The communication system according to claim 3, wherein
the predetermined situation is at least one of
a situation in which a service using the inter-terminal communication between the first communication terminal and the second communication terminal ends,
a situation in which connection between the first communication terminal and the second communication terminal ends,
a situation in which a radio link failure (RLF) occurs in the inter-terminal communication between the first communication terminal and the second communication terminal or in the inter-terminal communication between the first communication terminal and the third communication terminal, and
a situation in which the first communication terminal or the third communication terminal starts processing for releasing the connection between the first communication terminal and the third communication terminal.

5. A communication terminal configured to perform inter-terminal communication, wherein
the communication terminal reports resource information for inter-terminal communication by another communication terminal to the another communication terminal via an interface for the inter-terminal communication between the communication terminal and the another communication terminal.

6. A communication terminal configured to perform inter-terminal communication, wherein
the communication terminal receives resource information for inter-terminal communication by the communication terminal from the another communication terminal via an interface for the inter-terminal communication between the communication terminal and the another communication terminal.
